(19) **Europäisches Patentamt**
**European Patent Office**
**Office européen des brevets**

(11) **EP 3 810 530 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**18.03.2026   Patentblatt 2026/12**

(45) Hinweis auf die Patenterteilung:
**07.06.2023   Patentblatt 2023/23**

(21) Anmeldenummer: **19749568.2**

(22) Anmeldetag: **19.06.2019**

(51) Internationale Patentklassifikation (IPC):
**B65G 1/137** *(2006.01)*

(52) Gemeinsame Patentklassifikation (CPC):
**B65G 1/1378**

(86) Internationale Anmeldenummer:
**PCT/AT2019/060203**

(87) Internationale Veröffentlichungsnummer:
**WO 2019/241816 (26.12.2019 Gazette 2019/52)**

(54) **LAGER- UND KOMMISSIONIERSYSTEM SOWIE VERFAHREN ZUM KOMMISSIONIEREN VON AUFTRAGSWAREN AUS EINER HÄNGETASCHE UND EINEM ANDEREN LADEHILFSMITTEL**

STORAGE AND ORDER-PICKING SYSTEM AND METHOD FOR PICKING ORDERED ARTICLES FROM A SUSPENSION POCKET AND ANOTHER LOAD CARRIER

SYSTÈME D'EMMAGASINAGE ET DE PRÉPARATION DE COMMANDES ET PROCÉDÉ DE PRÉPARATION DE COMMANDES D'ARTICLES COMMANDÉS PROVENANT D'UN SAC SUSPENDU ET D'UN AUTRE MOYEN DE CHARGEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2018   AT 505142018**

(43) Veröffentlichungstag der Anmeldung:
**28.04.2021   Patentblatt 2021/17**

(73) Patentinhaber: **TGW Logistics GmbH
4614 Marchtrenk (AT)**

(72) Erfinder:
• **LINDLEY, Timothy
58239 Schwerte (DE)**

• **KETTLGRUBER, Gerald
4030 Linz (AT)**
• **AHAMMER, Christian
4623 Gunskirchen (AT)**
• **SCHRÖPF, Harald Johannes
4600 Wels (AT)**

(74) Vertreter: **Burger, Hannes
Anwälte Burger & Partner
Rechtsanwalt GmbH
Rosenauerweg 16
4580 Windischgarsten (AT)**

(56) Entgegenhaltungen:
**DE-A1- 102011 103 194     DE-A1- 102014 111 396
DE-A1- 102014 115 579**

**EP 3 810 530 B2**

**Beschreibung**

Die Erfindung betrifft ein Lager- und Kommissioniersystem zum Kommissionieren von Auftragswaren in oder auf ein Zielladehilfsmittel. Das Lager- und Kommissioniersystem umfasst einen Auftragsrechner zur Erfassung von Aufträgen zum Kommissionieren von Auftragswaren und zum Ermitteln der für einen Auftrag benötigten Auftragswaren, wobei zumindest einer der Aufträge wenigstens eine erste Auftragszeile und eine zweite Auftragszeile umfasst und wobei jede Auftragszeile zumindest eine Auftragsware nach ihrer Warentype und ihrer zu kommissionierenden Stückzahl spezifiziert. Weiterhin umfasst das Lager- und Kommissioniersystem einen ersten Lagerbereich für erste Ladehilfsmittel, welche unterschiedlich zu einer Hängetasche ausgebildet sind, wobei in oder auf einem der ersten Ladehilfsmittel eine Auftragsware der ersten Auftragszeile gelagert ist.

Die Erfindung betrifft darüber hinaus ein Kommissionierverfahren zum Kommissionieren von Auftragswaren in oder auf ein Zielladehilfsmittel, bei dem

- ein Auftrag zum Kommissionieren von Auftragswaren erfasst und die für diesen Auftrag benötigten Auftragswaren ermittelt werden, wobei zumindest einer der Aufträge mehrere Auftragszeilen umfasst und wobei jede Auftragszeile zumindest eine Auftragsware nach ihrer Warentype und ihrer zu kommissionierenden Stückzahl spezifiziert, und bei dem
- ein erstes Ladehilfsmittel, welches unterschiedlich zu einer Hängetasche ausgebildet ist und auf oder in welchem zu dem zumindest einen Auftrag eine Auftragsware der ersten Auftragszeile lagert, aus einem ersten Lagerbereich, in welchem die ersten Ladehilfsmittel gelagert werden, ausgelagert wird.

Ein Lager- und Kommissioniersystem und ein Kommissionierverfahren zum Kommissionieren von Auftragswaren in oder auf ein Zielladehilfsmittel der genannten Art sind grundsätzlich bekannt. Beispielsweise offenbart die DE 10 2013 101 659 A1 dazu eine Anlage und ein Verfahren zum Bereitstellen und Kommissionieren von Artikeln in einem Lagersystem mit einem Vorratslager für Artikel, einem Arbeitsplatz in einem ersten Arbeitsbereich sowie einem Arbeitsplatz und einem Pufferlager im zweiten Arbeitsbereich. In der Anlage werden Kommissionieraufträge erfasst, und es werden basierend auf der Kombination unterschiedlicher Artikeleigenschaften zu den für die Abarbeitung der Kommissionieraufträge benötigten Artikeln Artikelgruppen ermittelt. Darüber hinaus wird eine Vergleichsanalyse der Umschlaghäufigkeit zwischen den Artikelgruppen durchgeführt. Basierend auf dem Vergleich der Umschlaghäufigkeit werden die Artikel in Schnelldreher-Artikelgruppen und Langsamdreher-Artikelgruppen klassifiziert. Die für die Abarbeitung von Kommissionieraufträgen benötigten Artikel der Schnelldreher-Artikelgruppen werden im Pufferlager zwischengelagert. Die Bereitstellung der Artikel einer Langsamdreher-Artikelgruppe am Arbeitsplatz erfolgt derart, dass die Artikel aus dem Vorratslager zum Arbeitsplatz transportiert werden, während die Artikel einer Schnelldreher-Artikelgruppe aus dem Pufferlager ausgelagert und zu Andienungsplätzen am Arbeitsplatz transportiert werden. Danach erfolgt der Kommissioniervorgang an den Arbeitsplätzen.

Die DE 10 2013 101 659 A1 unterscheidet die Artikel zwar in Schnelldreher-Artikel und Langsamdreher-Artikel, jedoch ist das dort offenbarte Lager- und Kommissioniersystem strukturell nicht optimal darauf abgestimmt.

Die DE 10 2014 115 579 A1 offenbart ein Lager- und Kommissioniersystem zum progressiven Kommissionieren von Artikeln gemäß Neuaufträgen, die bestellte Artikel hinsichtlich eines jeweiligen bestellten Artikeltyps einschließlich einer zugehörigen Stückzahl definieren. Das Kommissioniersystem umfasst ein Kommissionierlager, in welchem eine Vielzahl von unterschiedlichen Artikeltypen, die ein Artikelsortiment für die Kommissionierung bilden, gelagert sind, und eine Kommissionierstation für eine Kommissionierung von Artikeln aus dem Kommissionierlager, und ein Pufferlager, in welchem ausgewählte Artikeltypen vorzugsweise in Lagereinheiten gelagert sind, und eine Kommissioniersteuerung, und mindestens eine Arbeitsstation, und einen Konsolidierungspuffer, wobei die Arbeitsstation materialflusstechnisch mit dem Pufferlager verbunden ist und wobei die bestellten Artikel an der Arbeitsstation genommen und gepackt oder genommen und an den Konsolidierungspuffer abgegeben werden und wobei die Kommissioniersteuerung zur zyklischen Erzeugung des Befüllungsauftrags eingerichtet ist.

Eine Aufgabe der Erfindung ist es daher, ein verbessertes Lager- und Kommissioniersystem und ein verbessertes Kommissionierverfahren anzugeben. Insbesondere soll eine verbesserte Abstimmung für Schnelldreher-Artikel und Langsamdreher-Artikel beziehungsweise Neuware und Retourware erzielt werden.

Die Aufgabe der Erfindung wird mit einem Lager- und Kommissioniersystem der eingangs genannten Art gelöst, zusätzlich umfassend

- einen zweiten Lagerbereich für zweite Ladehilfsmittel, welche als Hängetaschen ausgebildet sind oder eine solche umfassen, wobei in einer der Hängetaschen eine Auftragsware der zweiten Auftragszeile gelagert ist, wobei eine Hängetasche einen Boden und/oder Wände aus flexiblen Material aufweist,
- eine erste Fördertechnik zum Auslagern des ersten Ladehilfsmittels mit der Auftragsware der ersten Auftragszeile aus dem ersten Lagerbereich,
- eine zweite Fördertechnik zum Auslagern der Hängetasche mit der Auftragsware der zweiten Auftragszeile aus dem zweiten Lagerbereich und
- zumindest eine Kommissionierstation, an welche die erste und/oder zweite Fördertechnik gekoppelt ist, und welche das Verladen der Auftragsware der ersten Auftragszeile und der Auftragsware der zweiten Auftragszeile in oder auf ein dort bereitgestelltes Zielladehilfsmittel ermöglicht.

Die Aufgabe der Erfindung wird auch mit einem Kommissionierverfahren der eingangs genannten Art gelöst, bei dem

- ein zweites Ladehilfsmittel, welches als Hängetasche ausgebildet ist oder ein solches umfasst und welches zu dem zumindest einen Auftrag eine Auftragsware der zweiten Auftragszeile beinhaltet, aus einem zweiten Lagerbereich, in welchem die Hängetaschen gelagert werden, ausgelagert wird, wobei eine Hängetasche einen Boden und/oder Wände aus flexiblen Material aufweist, und bei dem
- die Auftragsware der ersten Auftragszeile und die Auftragsware der zweiten Auftragszeile in oder auf ein Zielladehilfsmittel gemäß dem zumindest einen Auftrag verladen wird.

Insbesondere werden die Auftragsware der ersten Auftragszeile und die Auftragsware der zweiten Auftragszeile zu einer Kommissionierstation gefördert und danach gemäß dem zumindest einen Auftrag in oder auf ein dort bereitgestelltes Zielladehilfsmittel verladen. An die Kommissionierstation kann dazu die erste und die zweite Fördertechnik gekoppelt sein oder die erste oder die zweite Fördertechnik. In letzterem Fall kann der Kommissionierstation eine Umladestation vorgelagert sein.

Vorteilhaft kann auf diese Weise eine verbesserte Abstimmung für Schnelldreher-Artikel und Langsamdreher-Artikel beziehungsweise Neuware und Retourware erzielt werden. Dabei werden strukturell unterschiedliche und für die jeweilige Aufgabe gut angepasste Ladehilfsmittel eingesetzt. Konkret wird zumindest ein Kommissionierauftrag mit Hilfe der besagten Ladehilfsmittel ausgeführt.

Durch das Lagern der Artikel in den jeweils optimal angepassten Lagersystemen ergeben sich höhere Kommissionierleistungen als dies im Stand der Technik der Fall ist. Dadurch ergeben sich auch geringere Kosten pro Kommissioniervorgang und damit ein günstigerer Betrieb als im Stand der Technik. Durch den möglichen Einzelteilzugriff im zweiten Lagerbereich ergibt sich des Weiteren eine verbesserte Handhabung von Retourware.

Die Schritte des angegebenen Verfahrens können dabei automatisch beziehungsweise automatisiert ablaufen. Insbesondere können alle Schritte des angegebenen Verfahrens automatisch beziehungsweise automatisiert ablaufen.

In einem "Lager- und Kommissioniersystem" können Waren zum Beispiel an einem Wareneingang angeliefert und übernommen werden und sodann gegebenenfalls umgepackt und in einem Lager eingelagert werden. Die Waren können auch gemäß einem Auftrag kommissioniert werden, das heißt aus dem Lager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff.

"Waren" sind allgemein Objekte des Warenhandels und werden am Warenübernahmebereich angeliefert und am Warenübergabebereich gemäß einem Auftrag zu einem Kunden abtransportiert. Waren, die zu einem Auftrag zugeordnet sind, werden im Rahmen der Erfindung als "Auftragswaren" bezeichnet. Die Zuordnung zu einem Auftrag kann für bereits gelagerte Waren erfolgen oder im Prinzip auch schon davor. Unter einer "Ware" oder einer "Auftragsware" wird im Rahmen der Erfindung insbesondere ein einzeln handhabbares Objekt beziehungsweise eine einzeln handhabbare Gruppe von Objekten verstanden. Generell ist anzumerken, dass eine "Ware" und eine "Auftragsware" ein und dasselbe Objekt zu verschiedenen Zeitpunkten sein kann.

Eine "Warentype" gibt die Art einer Ware an. Beispielsweise kann als Warentype: "Bandnudeln, 1 kg" oder "Mineralwasser 1l" vorgesehen sein. Die Warentype kann insbesondere auch Kleidungsstücke umfassen. Beispielsweise kann als Warentype: "Hemd, weiß, Größe 42" oder "Jeanshose, Größe 34/34" oder "Socke, schwarz, Größe 43" vorgesehen sein.

Eine "Auftragszeile" spezifiziert Auftragsware (zumindest) nach ihrer Warentype und ihrer zu kommissionierenden Stückzahl. Beispielsweise kann eine Auftragszeile: "1 Stück, Bandnudeln, 1 kg" oder "10 Stück, Mineralwasser 1l" beinhalten. Die Auftragsware kann grundsätzlich unterschiedlicher Art sein und insbesondere auch Kleidungsstücke umfassen. Beispielsweise kann eine Auftragszeile daher auch: "1 Stück, Hemd, weiß, Größe 42" oder "3 Stück, Jeanshose, Größe 34/34" oder "10 Stück, Socke, schwarz, Größe 43" beinhalten.

Ein "Auftrag zum Kommissionieren von Auftragswaren" (kurz "Kommissionierauftrag") umfasst im Rahmen der Erfindung mehrere Auftragszeilen, deren zugeordnete Auftragswaren in verschiedenen Lagerbereichen gelagert werden. Beispielsweise können Socken in einem ersten Lagerbereich in ersten Ladehilfsmitteln lagern, die als Behälter ausgebildet sind. Hemden können dagegen Auftragswaren in einem zweiten Lagerbereich in zweiten Ladehilfsmitteln lagern, die als Hängetaschen ausgebildet sind. Auftragswaren der ersten Auftragszeile bilden somit einen ersten Auftragsteil, Auftragswaren der zweiten Auftragszeile einen zweiten Auftragsteil. Im Kommissionierbetrieb können auch Aufträge erfasst und bearbeitet werden, welche eine einzige Auftragszeile oder mehr als zwei Auftragszeilen umfassen. In diesem Fall wird die Auftragsware aus einem der verschiedenen Lagerbereiche ausgelagert.

Ein "Auftragsrechner" dient zur Erfassung eines Auftrags und zur Ausführung desselben. Insbesondere ist der Auftragsrechner zu diesem Zweck steuerungstechnisch mit Elementen des Lager- und Kommissioniersystems verbunden, insbesondere mit der Fördertechnik des Lager- und Kommissioniersystems.

Unter "Kommissionieren" ist im Rahmen der Erfindung das Zusammenstellen von Auftragswaren für einen Kommissionierauftrag zu verstehen, im engeren Sinn das Beladen eines Zielladehilfsmittels mit der Auftragsware der ersten Auftragszeile und/oder der Auftragsware der zweiten Auftragszeile.

"Langsamdreher-Waren" sind Waren/Auftragswaren mit geringer Umschlagshäufigkeit beziehungsweise Auftragswaren, die statistisch weniger häufig in Aufträgen (Kommissionieraufträgen) auftreten und deshalb nicht so oft angefordert werden wie Schnelldreher.

"Schnelldreher-Waren" sind Waren/Auftragswaren mit hoher Umschlagshäufigkeit beziehungsweise Auftragswaren, die statistisch häufig in Aufträgen (Kommissionieraufträgen) auftreten.

"Artikelrein" bedeutet, dass die in einem Ladehilfsmittel gelagerten Waren oder Auftragswaren dieselbe Warentype aufweisen. Beispielsweise enthält ein erstes Ladehilfsmittel die Ware / Auftragsware "A" und ein zweites Ladehilfsmittel die Ware / Auftragsware "B" usw. Andererseits können die Ladehilfsmittel durch Trennwände in mehrere Aufnahmefächer unterteilt werden und unterschiedliche Warentypen aufnehmen, wobei im ersten Aufnahmefach eine Ware / Auftragsware "A" und im zweiten Aufnahmefach eine Ware / Auftragsware "B" aufgenommen werden kann. Die in einem Lagerbereich oder in einem Ladehilfsmittel "gemischt" oder "nicht artikelrein" gelagerten Waren oder Auftragswaren weisen dagegen unterschiedliche Warentype auf.

Ein "Lagerplatz" ist ein Bereich im Lager- und Kommissioniersystem, an dem eine Ware gelagert werden kann. Ein "Lagerbereich" ist ein Bereich im Lager- und Kommissioniersystem, welcher eine Vielzahl an Lagerplätzen zum Lagern der Waren aufweist. Beispielsweise kann der Lagerbereich als ortsfestes oder mobiles Lagerregal ausgebildet sein, das eine Vielzahl an Lagerplätzen nebeneinander und übereinander bereitstellt. Denkbar ist aber auch, dass der Lagerbereich ein Bereich am Fußboden des Lager- und Kommissioniersystems ist, der für das Abstellen und Lagern einer Ware vorgesehen beziehungsweise reserviert ist. Geh- und Fahrbereiche sind demnach keine Lagerbereiche, können aber an diese anschließen.

Der "erste Lagerbereich" dient zum Lagern der ersten Ladehilfsmittel. Insbesondere sind dort nur erste Ladehilfsmittel gelagert und keine Hängetaschen. Beispielsweise kann der erste Lagerbereich durch Regale gebildet sein und/oder oder durch andere Stellflächen für die ersten Ladehilfsmittel, im Speziellen durch Stellflächen am Fußboden. Zum Ein- und Auslagern von ersten Ladehilfsmitteln können im ersten Lagerbereich automatisiert betriebene Förderfahrzeuge vorgesehen sein.

Der "zweite Lagerbereich" dient zum Lagern der Hängetaschen. Insbesondere sind dort nur Hängetaschen gelagert und keine ersten Ladehilfsmittel. Beispielsweise kann der zweite Lagerbereich durch Lager-Hängebahnen gebildet sein.

Unter einem "Warenübergabebereich" ist jener Bereich zu verstehen, in dem Auftragswaren aus dem Lager- und Kommissioniersystem abgeführt werden, also insbesondere ein Warenausgang.

Unter einem "Warenübernahmebereich" ist jener Bereich zu verstehen, in dem Lager- und Kommissioniersystem Waren zugeführt werden, also insbesondere ein Wareneingang. Im Speziellen können angelieferte Warenträger (z.B. Paletten, Kartons, etc.) manuell oder automatisiert vereinzelt werden. Man spricht bei diesem Vorgang auch von "Depalettieren".

Ein "Zielladehilfsmittel" dient der Aufnahme der Auftragswaren beim Kommissioniervorgang und kann insbesondere als Behälter, Karton, Tablar, Palette, Beutel (insbesondere ein "Polybag"), Tasche, Sack, Hängetasche, Hängeträger oder Regal ausgebildet sein. Das Zielladehilfsmittel kann insbesondere als "Versandladehilfsmittel" fungieren und dem Abtransport von Auftragswaren aus dem Lager- und Kommissioniersystem dienen. Das Zielladehilfsmittel kann aber auch als "Zwischenladehilfsmittel" fungieren, in dem kommissionierte und für den Versand bestimmte Auftragswaren zwischengelagert werden, bevor sie in ein Versandladehilfsmittel umgeladen werden.

Ein "erstes, zu einer Hängetasche (und gegebenenfalls zu einem Hängeträger) unterschiedliches, Ladehilfsmittel" dient dem Transport von Waren und/oder Auftragswaren der ersten Auftragszeile beziehungsweise des ersten Lagerbereichs und weist insbesondere eine oder mehrere der folgenden Eigenschaften auf:

- Ein erstes Ladehilfsmittel wird im ersten Lagerbereich stehend oder liegend gelagert und auf der ersten Fördertechnik stehend oder liegend transportiert. Grundsätzlich wäre aber auch denkbar, dass ein behälterförmiges Ladehilfsmittel an einem Rand auf Behälterwänden hängend transportiert wird.

- Ein erstes Ladehilfsmittel weist in der Betriebslage eine Breite, Tiefe und Höhe auf, wobei die folgende Bedingung erfüllt ist:

$$\text{Breite} + \text{Tiefe} > 2 \cdot \text{Höhe}.$$

- Ein erstes Ladehilfsmittel ist als Behälter, Karton, Tablar, Palette oder Regal ausgebildet.

- Ein erstes Ladehilfsmittel weist einen starren Boden und/oder starre Wände mit einem Elastizitätsmodul > 100 MPa auf.

- Eine Transportfläche, an der das erste Ladehilfsmittel Kontakt mit dem ersten Lagerbereich oder mit der ersten Fördertechnik hat, ist in der Betriebslage des ersten Ladehilfsmittels unter dessen Aufnahmeebene beziehungsweise Ladeebene angeordnet.

- Ein erstes Ladehilfsmittel weist keinen Haken auf und ist somit hakenlos beziehungsweise hakenfrei.

An dieser Stelle wird angemerkt, dass nicht alle ersten Ladehilfsmittel dieselben Eigenschaften aufweisen müssen, sondern erste Ladehilfsmittel auch unterschiedlich ausgebildet sein können. Erste Ladehilfsmittel können zudem mehrere Aufnahmebereiche / Aufnahmefächer aufweisen.

Eine zweites, als Hängetasche ausgebildetes, Ladehilfsmittel weist insbesondere eine oder mehrere der folgenden Eigenschaften auf:

- Eine Hängetasche wird im zweiten Lagerbereich hängend gelagert und auf der zweiten Fördertechnik hängend transportiert.
- Eine Hängetasche weist in einem aufgehängten Zustand (Betriebslage) eine Breite, Tiefe und Höhe auf, wobei die folgende Bedingung erfüllt ist:

$$\text{Breite} + \text{Tiefe} < 2 \cdot \text{Höhe}.$$

- Eine Hängetasche weist einen Boden und/oder Wände aus flexiblen Material auf, vorzugsweise aus einem Textil (textiler Stoff) oder einer Folie (Kunststofffolie).
- Eine Stützfläche, an der die Hängetasche Kontakt mit dem zweiten Lagerbereich oder mit der zweiten Fördertechnik hat, weist eine Hakenform oder Bügelform auf.
- Eine Stützfläche, an der die Hängetasche Kontakt mit dem zweiten Lagerbereich oder mit der zweiten Fördertechnik hat, ist rollenförmig ausgebildet und mit einem Haken oder Bügel der Hängetasche verbunden.
- Eine Stützfläche, an der die Hängetasche Kontakt mit dem zweiten Lagerbereich oder mit der zweiten Fördertechnik hat, ist in der Betriebslage der Hängetasche über dessen Befüllebene angeordnet.

Insbesondere umfasst eine Hängetasche eine Vorderwand, eine Rückwand, einen Boden, einen durch die Vorderwand, die Rückwand und den Boden begrenzten Aufbewahrungsraum und eine an der Hängetasche an einer ersten Seite ausgebildete und durch die Vorderwand, die Rückwand und den Boden begrenzte Beladeöffnung und/oder Endladeöffnung. Die Hängetasche kann an einer zweiten Seite auch einen Seitenwandanschlag aufweisen, gegen welche die Ware beziehungsweise die Auftragsware der zweiten Auftragszeile anlegbar ist. Insbesondere können die Vorderwand, die Rückwand und der Boden einstückig ausgebildet sein, beispielsweise durch eine Stoff- oder Gewebebahn, die an ihrem oberen Ende an einer Hängebahn / Hängestange gelagert ist und im Bodenbereich eine Schlaufe bildet. In einer Schließstellung weisen die Vorderwand und die Rückwand nur geringen Abstand zueinander auf, wodurch die Beladeöffnung und Endladeöffnung eine kleine Fläche und der Aufbewahrungsraum der Hängetasche ein kleines Volumen aufweist. Im Falle einer Stoff- oder Gewebebahn weisen ihre oberen Enden ebenfalls nur geringen Abstand zueinander auf, und die durch die Stoff- oder Gewebebahn gebildete Schlaufe ist eng. Die Ware beziehungsweise die Auftragsware der zweiten Auftragszeile kann in der Schließstellung somit auf engem Raum gelagert und transportiert werden. In einer Offenstellung weisen die Vorderwand und die Rückwand dagegen großen Abstand zueinander auf, wodurch die Beladeöffnung und Endladeöffnung eine große Fläche und der Aufbewahrungsraum der Hängetasche ein großes Volumen aufweist. Im Falle einer Stoff- oder Gewebebahn weisen ihre oberen Enden ebenfalls großen Abstand zueinander auf, und die durch die Stoff- oder Gewebebahn gebildete Schlaufe ist weit. In der Offenstellung kann die Hängetasche somit gut be- und entladen werden. Eine solche Hängetasche ist zum Beispiel in dem deutschen Gebrauchsmuster DE 20 2017 106 993 U1, DE 20 2017 100 206 U1 oder der österreichischen Patentanmeldung A 50320/2018 offenbart.

An dieser Stelle wird auch angemerkt, dass nicht alle Hängetaschen dieselben Eigenschaften aufweisen müssen, sondern Hängetaschen auch unterschiedlich ausgebildet sein können. Hängetaschen können zudem mehrere Aufbewahrungsbereiche / Aufbewahrungsfächer aufweisen. Zudem wird angemerkt, dass auf der zweiten Fördertechnik nicht notgedrungen nur Hängetaschen und im zweiten Lagerbereich nicht notgedrungen nur Hängetaschen gefördert beziehungsweise gelagert werden. Beispielsweise können dort auch "Hängeträger" für Hängewaren (z.B. Kleiderbügel) gefördert und gelagert werden. Diese Hängeträger weisen nicht notwendigerweise eine Hängetasche auf, können aber außen an oder innen in der Hängetasche angeordnet sein. Solche kombinierten, zweiten Ladehilfsmittel, welche sowohl eine Hängetasche aufweisen als auch Mittel zum Aufhängen eines Kleiderbügels oder auch den Kleiderbügel selbst, können besonders universell eingesetzt werden. Im zweiten Lagerbereich und auf der zweiten Fördertechnik können daher unterschiedliche zweite Ladehilfsmittel gelagert und transportiert werden, insbesondere sowohl Hängetaschen als auch Hängeträger für Hängewaren (z.B. Kleiderbügel).

Die "Betriebslage" eines ersten oder zweiten Ladehilfsmittels ist dadurch gekennzeichnet, dass Waren darin lagerbar und mit der Fördertechnik transportierbar sind.

Die "erste Fördertechnik" dient zum Transport der ersten Ladehilfsmittel. Die "zweite Fördertechnik" dient zum Transport der zweiten Ladehilfsmittel (=Hängetaschen). Die "dritte Fördertechnik" dient zum Transport der Zielladehilfsmittel.

Die "erste Fördertechnik" und/oder "zweite Fördertechnik" und/oder "dritte Fördertechnik" kann eine "ortsfeste Fördertechnik" und/oder "autonome Förderfahrzeuge" umfassen beziehungsweise daraus aufgebaut sein.

"Ortsfeste Fördertechnik" benötigt zum Warentransport fix verbaute Einrichtungen. Beispielsweise benötigt ein Heber einen Rahmen, an dem eine Hubplattform bewegt wird. Die Hubplattform alleine ist dagegen nicht funktionsfähig. Ortsfeste Fördertechnik ist insbesondere dadurch gekennzeichnet, dass sie ohne das Lösen von Befestigungen nicht aus dem Lager- und Kommissioniersystem entfernt werden kann. Unter ortsfester Fördertechnik sind insbesondere Rollenförderer, Bandförderer, Kettenförderer und dergleichen zu verstehen. Ein autonomes Flurförderfahrzeug kann dagegen ohne das Lösen von Befestigungen aus dem Lager- und Kommissioniersystem entfernt werden.

Unter "automatisiert betriebenen Förderfahrzeugen" sind im Rahmen der Erfindung selbstfahrende beziehungsweise fahrerlose Förderfahrzeuge zum Warentransport zu verstehen, welche entlang fix vorgegebener Bahnen fahren oder welche frei geführt sind, also ohne fixer Spurführung. Eine fixe Spurführung kann am Boden der Fahrfläche vorgegeben sein, etwa mit Hilfe von optischen Farbstreifen, mit magnetischen Streifen, mit Markierungs-Tags oder auch mit Schienen. Ein automatisiert betriebenes Förderfahrzeug weist insbesondere eine Transportplattform auf, auf der die zu transportierenden Waren/Auftragswaren temporär aufgenommen werden. Anstelle der Transportplattform oder zusätzlich dazu kann das automatisiert betriebene Förderfahrzeug auch eine (teleskopierbare) Hängestange beziehungsweise Hängebahn zur Aufnahme von Hängetaschen und gegebenenfalls Hängeträgern aufweisen. Beispielsweise kann die Transportplattform/Hängestange fix am Förderfahrzeug befestigt sein, die Transportplattform/Hängestange kann aber auch vertikal und/oder seitlich relativ zu einem Fahrgestell des Förderfahrzeugs beweglich sein, um beispielsweise Waren/Auftragswaren in ein Lagerregal einlagern und aus dem Lagerregal auslagern zu können. Am Fahrgestell sind Räder angeordnet, von denen wenigstens eines angetrieben ist. Weiterhin umfasst ein automatisiert betriebenes Förderfahrzeug auch eine elektronische Steuerung zum Empfang von Befehlen von einer übergeordneten Steuerung und zum Steuern/Regeln der Bewegungen des automatisiert betriebenen Förderfahrzeugs.

Ein "Regalbediengerät" ist ein automatisiert betriebenes Förderfahrzeug, das auf Schienen fährt und als Einebenen-Regalbediengerät (auch "Shuttle" genannt) oder als Mehrebenen-Regalbediengerät ausgeführt sein kann. Regalbediengeräte benötigen für ihren Betrieb Elemente ortsfester Fördertechnik (nämlich die Schienen). Aus diesem Grund werden Regalbediengeräte im Rahmen der Erfindung der ortsfesten Fördertechnik zugerechnet.

Ein "autonomes Flurförderfahrzeug" ist ein schienenungebundenes, automatisiert betriebenes Förderfahrzeug. Wenigstens eines der Räder ist lenkbar, sofern das autonome Förderfahrzeug nicht über Räder verfügt, mit denen auch eine Seitwärtsbewegung ausgeführt werden kann (z.B. Mecanum-Räder). Ein autonomes Flurförderfahrzeug umfasst auch Sensoren zum Erfassen der Umgebung des Flurförderfahrzeugs und zur Orientierung im Raum.

Eine "Kommissionierstation" ist eine Station beziehungsweise ein Bereich oder Platz, an der oder dem Auftragswaren in ein Zielladehilfsmittel geladen werden können. Für die Steuerung des Kommissioniervorgangs der Auftragswaren kann die Kommissionierstation eine Kommissioniersteuerung aufweisen. Denkbar wäre aber auch, dass der Kommissioniervorgang alternativ oder zusätzlich durch den Auftragsrechner angesteuert wird.

Eine "Umladestation" ist eine Station beziehungsweise ein Bereich oder Platz, an der oder dem Auftragswaren von einem ersten Ladehilfsmittel in eine Hängetasche umgeladen werden können oder umgekehrt. Für die Steuerung des Umladevorgangs der Auftragswaren kann die Umladestation eine Umladesteuerung aufweisen. Denkbar wäre aber auch, dass der Umladevorgang alternativ oder zusätzlich durch den Auftragsrechner angesteuert wird.

Eine "Lager-Umladestation" ist eine Station beziehungsweise ein Bereich oder Platz zwischen dem ersten Lagerbereich und dem zweiten Lagerbereich, an der oder dem Waren (ohne Auftragsbezug) von einem ersten Ladehilfsmittel in eine Hängetasche umgeladen werden können oder umgekehrt. Für die Steuerung des Umladevorgangs der Auftragswaren kann die Umladestation eine Lager-Umladesteuerung aufweisen.

Eine Umladestation, eine Kommissionierstation und eine Lager-Umladestation können jeweils für den automatischen, manuellen oder gemischt automatisch/manuellen Betrieb ausgebildet sein, wobei der manuelle Betrieb insbesondere rechnergestützt sein kann. Dazu können die genannten Stationen verschiedene Funktionseinheiten umfassen, beispielsweise einen Roboter, eine Kippvorrichtung zum Kippen eines ersten Ladehilfsmittels an einer Andienposition (z.B. aus Gründen der Ergonomie), eine Entladevorrichtung zum Entladen einer Hängetasche und/oder eine Vorrichtung zum Öffnen und/oder Schließen einer Hängetasche an einer Andienposition. Weiterhin kann eine Funktionseinheit eine Ausgabeeinheit sein (z.B. ein Display oder eine Sprachausgabe-Einheit), eine Eingabeeinheit (z.B. eine Tastatur, ein Touch-Display oder eine Spracheingabe-Einheit) und/oder eine Erfassungseinheit (z.B. einen Scanner). Eine beliebige Kombination der genannten Funktionseinheiten ist natürlich möglich.

Im automatischen oder gemischt automatisch/manuellen Betrieb kann der Roboter und/oder die Kippvorrichtung angewiesen werden, einen bestimmten Bewegungsablauf auszuführen. Im manuellen oder gemischt automatisch/manuellen Betrieb kann ein Arbeiter mit Hilfe der Ausgabeeinheit angewiesen werden, einen bestimmten Vorgang auszuführen. Über die Eingabeeinheit und/oder die Erfassungseinheit kann der Arbeiter eine Rückmeldung abgeben. Der obige Vorgang erfolgt also manuell rechnergestützt. Die genannten Funktionseinheiten können durch eine Steuerung der jeweiligen Station angesteuert werden, also durch die Umladesteuerung der Umladestation, die Kommissioniersteuerung der Kommissionierstation oder die Lager-Umladesteuerung der Lager-Umladestation. Denkbar wäre aber auch, dass die genannten Funktionseinheiten alternativ oder zusätzlich vom Auftragsrechner angesteuert werden.

Im "automatischen" Betrieb führt z.B. ein Roboter vorgegebene Bewegungsabläufe selbständig aus. Im "automatisierten Betrieb" kann eine Einrichtung ganz oder teilweise ohne Mitwirkung des Menschen arbeiten. "Automatisierter" Betrieb kann demnach automatischer und/oder manuell rechnergestützter Betrieb sein. Im "manuell rechnergestützten" Betrieb erhält ein Arbeiter Anweisungen von einer Steuerung und gibt gegebenenfalls Rückmeldungen an die Steuerung ab. Im "gemischt manuell/automatischen" Betrieb werden Teile eines Vorgangs automatisch (z.B. von einem Roboter) ausgeführt, andere Teile von einem Arbeiter (z.B. manuell rechnergestützt).

Eine "Andienposition" ist generell eine Position, an der ein erstes Ladehilfsmittel, eine Hängetasche, oder ein Zielladehilfsmittel angedient beziehungsweise bereitgestellt wird. An dieser Position ist ein Be- und/oder Entladen des betreffenden Ladehilfsmittels möglich. Beispielsweise kann die Andienposition durch eine Halteposition für ein erstes Ladehilfsmittel auf einer ersten Fördertechnik, durch eine Halteposition für eine Hängetasche auf einer zweiten Fördertechnik oder durch eine Halteposition für ein Zielladehilfsmittel auf einer dritten Fördertechnik gebildet sein.

Eine "Kommissionier-Andienposition" ist demnach eine Andienposition, welche an einer Kommissionierstation angeordnet beziehungsweise Teil derselben ist. Eine "Umlade-Andienposition" ist demnach eine Andienposition, welche an einer Umladestation angeordnet beziehungsweise Teil derselben ist. Eine "Lager-Umlade-Andienposition" ist demnach eine Andienposition, welche an einer Lager-Umladestation angeordnet beziehungsweise Teil derselben ist.

Ein "Warenvorratslager" ist ein Lagerbereich, in dem vorwiegend oder ausschließlich Neuware gelagert wird. "Neuware" ist Ware, die noch nicht ausgeliefert wurde und für einen Auftrag bereitsteht.

Ein "Retourwarenlager" ist ein Lagerbereich, in dem vorwiegend oder ausschließlich Retourware gelagert wird. "Retourware" ist Ware, die bereits ausgeliefert wurde, jedoch vom Empfänger wieder zurückgeschickt wurde, und für einen neuen Auftrag bereitsteht.

Ein "mobiles Regal" ist ein bewegliches Regal, das nicht an einen bestimmten Ort fixiert ist. Ein mobiles Regal kann insbesondere Räder zum leichteren Transport umfassen.

Eine "Hängebahn" ist eine Bahn, an der Hängetaschen hängend gelagert und/oder transportiert werden können. Eine "Lager-Hängebahn" ist demnach eine Hängebahn, an der Hängetaschen hängend gelagert werden können und welche insbesondere im zweiten Lagerbereich angeordnet ist. Eine "Transport-Hängebahn" ist eine Hängebahn, über die Hängetaschen hängend transportiert werden können. Eine "mobile Lager-Hängebahn" ist eine bewegliche Hängebahn, die nicht einem bestimmten Ort fixiert ist. Eine mobile Lager-Hängebahn kann insbesondere ähnlich wie ein mobiles Regal aufgebaut sein und ebenfalls Räder zum leichteren Transport aufweisen. Wenn die Stützfläche, an der die Hängetasche Kontakt mit der Hängebahn hat, hakenförmig oder bügelförmig ausgebildet ist, dann gleitet der Haken oder Bügel der Hängetasche beim Transport über die Hängebahn. Ist die Stützfläche, an der die Hängetasche Kontakt mit der Hängebahn hat, rollenförmig ausgebildet, dann rollt die Rolle der Hängetasche beim Transport über die Hängebahn. Gleiches gilt für Hängeträger.

Eine "Sortiereinrichtung" ist eine Einrichtung, mit der erste und/oder zweite Auftragswaren in eine vorgegebene oder vorgebbare Reihenfolge gebracht werden können.

Vorteilhafte Ausgestaltungen und Weiterbildungen der Erfindung ergeben sich nun aus den Unteransprüchen sowie aus der Beschreibung in Zusammenschau mit den Figuren.

Im Speziellen kann die zumindest eine Kommissionierstation eine erste Kommissionier-Andienposition aufweisen, an welche die erste Fördertechnik gekoppelt ist, um das erste Ladehilfsmittel mit der Auftragsware der ersten Auftragszeile anzudienen, und eine zweite Kommissionier-Andienposition aufweisen, an welche die zweite Fördertechnik gekoppelt ist, um die Hängetasche mit der Auftragsware der zweiten Auftragszeile anzudienen. Das heißt, die erste Fördertechnik und die zweite Fördertechnik führen getrennt zu der Kommissionierstation.

Günstig ist es auch, wenn die erste und zweite Fördertechnik an einem Zusammenführungspunkt zusammengeführt wird, an dem die erste Fördertechnik in die zweite Fördertechnik oder die zweite Fördertechnik in die erste Fördertechnik mündet. Auf diese Weise kann das Lager- und Kommissioniersystem besonders kompakt aufgebaut werden, insbesondere im Bereich der Warenauslagerung beziehungsweise Kommissionierung.

In diesem Fall kann die Kommissionierstation zumindest eine erste Kommissionier-Andienposition aufweisen, an welche die erste Fördertechnik gekoppelt ist, um ein erstes Ladehilfsmittel der ersten Ladehilfsmittel mit der Auftragsware der ersten Auftragszeile und ein zweites Ladehilfsmittel der ersten Ladehilfsmittel mit der Auftragsware der zweiten Auftragszeile anzudienen. In diesem Fall führt nur die erste Fördertechnik zu der Kommissionierstation hin.

Denkbar ist aber auch, dass die Kommissionierstation zumindest eine zweite Kommissionier-Andienposition aufweist, an welche die zweite Fördertechnik gekoppelt ist, um eine erste Hängetasche der Hängetaschen mit der Auftragsware der zweiten Auftragszeile und eine zweite Hängetasche der Hängetaschen mit der Auftragsware der ersten Auftragszeile anzudienen. In diesem Fall führt nur die zweite Fördertechnik zu der Kommissionierstation hin.

Vorteilhaft ist es, wenn das Lager- und Kommissioniersystem

a) eine Umladestation im Verlauf der ersten Fördertechnik aufweist, welcher das Umladen der Auftragsware der ersten Auftragszeile in eine der an der Umladestation bereitgestellte zweite Hängetasche der Hängetaschen ermöglicht, und eine Kommissionierstation im Verlauf der zweiten Fördertechnik, welche das Verladen der Auftragsware der ersten Auftragszeile und der Auftragsware der zweiten Auftragszeile in oder auf ein dort bereitgestelltes Zielladehilfsmittel ermöglicht, oder

b) eine Umladestation im Verlauf der zweiten Fördertechnik aufweist, welche das Umladen der Auftragsware der zweiten Auftragszeile in oder auf ein an der Umladestation bereitgestelltes zweites Ladehilfsmittel der ersten Ladehilfsmittel ermöglicht, und eine Kommissionierstation im Verlauf der ersten Fördertechnik, welche das Verladen der Auftragsware der ersten Auftragszeile und der Auftragsware der zweiten Auftragszeile in oder auf ein dort bereitgestelltes Zielladehilfsmittel ermöglicht.

Dementsprechend wird

a) die Hängetasche mit der Auftragsware der zweiten Auftragszeile zu einer Kommissionierstation gefördert, das erste Ladehilfsmittel mit der Auftragsware der ersten Auftragszeile zu einer Umladestation gefördert, die Auftragsware der ersten Auftragszeile danach in eine dort bereitgestellte zweite Hängetasche der Hängetaschen verladen, die zweite Hängetasche der Hängetaschen mit der Auftragsware der ersten Auftragszeile zu der besagten Kommissionierstation gefördert, und danach werden die Auftragsware der ersten Auftragszeile und die Auftragsware der zweiten Auftragszeile in oder auf ein dort bereitgestelltes Zielladehilfsmittel verladen oder

b) das erste Ladehilfsmittel mit der Auftragsware der ersten Auftragszeile zu einer Kommissionierstation gefördert, die Hängetasche mit der Auftragsware der zweiten Auftragszeile zu einer Umladestation gefördert, die Auftragsware der zweiten Auftragszeile danach in oder auf eine dort bereitgestelltes zweites Ladehilfsmittel der ersten Ladehilfsmittel verladen, das zweite Ladehilfsmittel der ersten Ladehilfsmittel mit der Auftragsware der zweiten Auftragszeile zu der besagten Kommissionierstation gefördert, und danach werden die Auftragsware der ersten Auftragszeile und die Auftragsware der zweiten Auftragszeile in oder auf ein dort bereitgestelltes Zielladehilfsmittel verladen.

Dadurch, dass die Umladestation im Förderfluss vor der Kommissionierstation angeordnet ist, werden an der Kommissionierstation nur erste Ladehilfsmittel (Fall b) oder nur Hängetaschen (Fall a) angedient. Der Kommissioniervorgang wird dadurch vereinheitlicht und vereinfacht.

In obigem Zusammenhang ist es zudem von Vorteil, wenn im Fall a)

- die Kommissionierstation zumindest eine zweite Kommissionier-Andienposition aufweist, an welche die zweite Fördertechnik gekoppelt ist, um eine erste Hängetasche der Hängetaschen mit der Auftragsware der zweiten Auftragszeile und eine zweite Hängetasche der Hängetaschen mit der Auftragsware der ersten Auftragszeile anzudienen, und
- die Umladestation eine erste Umlade-Andienposition aufweist, an welche die erste Fördertechnik gekoppelt ist, um das erste Ladehilfsmittel mit der Auftragsware der ersten Auftragszeile aus dem ersten Lagerbereich anzudienen, und
- die Umladestation eine zweite Umlade-Andienposition aufweist, an welche die zweite Fördertechnik gekoppelt ist, um die zweite Hängetasche der Hängetaschen anzudienen und um das Umladen der Auftragsware der ersten Auftragszeile in die zweite Hängetasche der Hängetaschen zu ermöglichen, oder

im Fall b)

- die Kommissionierstation zumindest eine erste Kommissionier-Andienposition aufweist, an welche die erste Fördertechnik gekoppelt ist, um ein erstes Ladehilfsmittel der ersten Ladehilfsmittel mit der Auftragsware der ersten Auftragszeile und ein zweites Ladehilfsmittel der ersten Ladehilfsmittel mit der Auftragsware der zweiten Auftragszeile anzudienen, und
- die Umladestation eine erste Umlade-Andienposition aufweist, an welche die zweite Fördertechnik gekoppelt ist, um die Hängetasche mit der Auftragsware der zweiten Auftragszeile aus dem zweiten Lagerbereich anzudienen, und
- die Umladestation eine zweite Umlade-Andienposition aufweist, an welche die erste Fördertechnik gekoppelt ist, um das zweite Ladehilfsmittel der ersten Ladehilfsmittel anzudienen und um das Umladen der Auftragsware der zweiten Auftragszeile in das zweite Ladehilfsmittel der ersten Ladehilfsmittel zu ermöglichen.

Günstig ist es auch, wenn das Lager- und Kommissioniersystem eine dritte Fördertechnik aufweist, welche an die Kommissionierstation gekoppelt ist und eine Bereitstellung des Zielladehilfsmittels an der Kommissionierstation ermöglicht. Insbesondere ist es dabei von Vorteil, wenn die Kommissionierstation eine dritte Kommissionier-Andienposition aufweist, an welche die dritte Fördertechnik gekoppelt ist, um das Zielladehilfsmittel anzudienen und um das Umladen der Auftragsware der ersten Auftragszeile und der Auftragsware der zweiten Auftragszeile gemäß einem Kommissionierauftrag (im Zuge des Kommissioniervorgangs) in oder auf das Zielladehilfsmittel zu ermöglichen. Auf diese Weise ist der automatische Transport des Zielladehilfsmittels zur und von der Kommissionierstation möglich.

Darüber hinaus ist es von Vorteil, wenn das Lager- und Kommissioniersystem

i) eine erste Kommissionierstation im Verlauf der ersten Fördertechnik umfasst, welcher das Umladen der Auftragsware der ersten Auftragszeile in oder auf ein an der ersten Kommissionierstation bereitgestelltes und durch eine dritte Fördertechnik transportiertes Zielladehilfsmittel ermöglicht, und eine zweite Kommissionierstation im Verlauf der zweiten und dritten Fördertechnik, welcher das Verladen der Auftragsware der zweiten Auftragszeile in oder auf das besagte Zielladehilfsmittel ermöglicht, oder
ii) eine erste Kommissionierstation im Verlauf der zweiten Fördertechnik umfasst, welche das Umladen der Auftragsware der zweiten Auftragszeile in oder auf ein an der ersten Kommissionierstation bereitgestelltes und durch eine dritte Fördertechnik transportiertes Zielladehilfsmittel ermöglicht, und eine zweite Kommissionierstation im Verlauf der ersten und dritten Fördertechnik, welcher das Verladen der Auftragsware der ersten Auftragszeile in oder auf das besagte Zielladehilfsmittel ermöglicht.

Dementsprechend wird

i) das erste Ladehilfsmittel mit der Auftragsware der ersten Auftragszeile zu einer ersten Kommissionierstation gefördert, die Auftragsware der ersten Auftragszeile danach in oder auf ein dort bereitgestelltes Zielladehilfsmittel verladen, werden das Zielladehilfsmittel mit der Auftragsware der ersten Auftragszeile und die Hängetasche mit der Auftragsware der zweiten Auftragszeile zu einer zweiten Kommissionierstation gefördert und wird danach die Auftragsware der zweiten Auftragszeile in oder auf das besagte Zielladehilfsmittel verladen oder
ii) die Hängetasche mit der Auftragsware der zweiten Auftragszeile zu einer ersten Kommissionierstation gefördert, die Auftragsware der zweiten Auftragszeile danach in oder auf ein dort bereitgestelltes Zielladehilfsmittel verladen, werden das Zielladehilfsmittel mit der Auftragsware der zweiten Auftragszeile und das erste Ladehilfsmittel mit der Auftragsware der ersten Auftragszeile zu einer zweiten Kommissionierstation gefördert und wird danach die Auftragsware der ersten Auftragszeile in oder auf das besagte Zielladehilfsmittel verladen.

Auf diese Weise können Kommissionierstationen vorgesehen werden, die optimal an das jeweilige Ladehilfsmittel, also an das erste Ladehilfsmittel oder eine Hängetasche angepasst sind. Der Kommissioniervorgang wird dadurch vereinfacht.

In obigem Zusammenhang ist es zudem von Vorteil, wenn
im Fall i)

- die erste Kommissionierstation eine erste Kommissionier-Andienposition aufweist, an welche die erste Fördertechnik gekoppelt ist, um das erste Ladehilfsmittel mit der Auftragsware der ersten Auftragszeile anzudienen, und

- die zweite Kommissionierstation eine zweite Kommissionier-Andienposition aufweist, an welche die zweite Fördertechnik gekoppelt ist, um die Hängetasche mit der Auftragsware der zweite Auftragszeile anzudienen,

- die erste Kommissionierstation eine dritte Kommissionier-Andienposition aufweist, an welche die dritte Fördertechnik gekoppelt ist, um das Zielladehilfsmittel anzudienen und um das Umladen der Auftragsware der ersten Auftragszeile an der ersten Kommissionierstation in oder auf das Zielladehilfsmittel zu ermöglichen und

- die zweite Kommissionierstation eine vierte Kommissionier-Andienposition aufweist, an welche die dritte Fördertechnik gekoppelt ist, um das Zielladehilfsmittel anzudienen und um das Umladen der Auftragsware der zweiten Auftragszeile an der zweiten Kommissionierstation in oder auf das Zielladehilfsmittel zu ermöglichen, und
dass im Fall ii)

- die zweite Kommissionierstation eine erste Kommissionier-Andienposition aufweist, an welche die erste Fördertechnik gekoppelt ist, um das erste Ladehilfsmittel mit der Auftragsware der ersten Auftragszeile anzudienen, und

- die erste Kommissionierstation eine zweite Kommissionier-Andienposition aufweist, an welche die zweite Fördertechnik gekoppelt ist, um die Hängetasche mit der Auftragsware der zweiten Auftragszeile anzudienen,

- die zweite Kommissionierstation eine dritte Kommissionier-Andienposition aufweist, an welche die dritte Fördertechnik gekoppelt ist, um das Zielladehilfsmittel anzudienen und um das Umladen der Auftragsware der ersten Auftragszeile an der zweiten Kommissionierstation in oder auf das Zielladehilfsmittel zu ermöglichen und

- die erste Kommissionierstation eine vierte Kommissionier-Andienposition aufweist, an welche die dritte Fördertechnik gekoppelt ist, um das Zielladehilfsmittel anzudienen und um das Umladen der Auftragsware der zweiten Auftragszeile an der ersten Kommissionierstation in oder auf das Zielladehilfsmittel zu ermöglichen.

Von Vorteil ist es auch, wenn die erste Fördertechnik und die zweite Fördertechnik den ersten Lagerbereich und den zweiten Lagerbereich miteinander verbindet und im Verlauf der ersten Fördertechnik und der zweiten Fördertechnik eine Lager-Umladestation angeordnet ist, welcher das Umladen

A) einer Ware aus dem ersten Lagerbereich in eine dort bereitgestellte Hängetasche ermöglicht, und/oder
B) einer Ware aus dem zweiten Lagerbereich in oder auf ein dort bereitgestelltes, erstes Ladehilfsmittel ermöglicht.

Dementsprechend wird

A) ein erstes Ladehilfsmittel mit einer Ware aus dem ersten Lagerbereich ausgelagert und zu einer Lager-Umladestation gefördert, danach die Ware in eine dort bereitgestellte Hängetasche verladen und die Hängetasche in den zweiten Lagerbereich gefördert und dort eingelagert oder
B) eine Hängetasche mit einer Ware aus dem zweiten Lagerbereich ausgelagert und zu einer Lager-Umladestation gefördert, danach die Ware in oder auf ein dort bereitgestelltes erstes Ladehilfsmittel verladen und das erste Ladehilfsmittel in den ersten Lagerbereich gefördert und dort eingelagert.

Durch diese Maßnahmen ist es also möglich, Waren zwischen den beiden Lagerbereichen umzulagern. Dadurch kann zum Beispiel eine Auslastung eines Lagerbereichs an den aktuellen Bedarf angepasst werden. Denkbar ist insbesondere, dass Schnelldreher-Ware in den zweiten Lagerbereich und/oder Langsamdreher-Ware in den ersten Lagerbereich transferiert wird. Dies kann zum Beispiel bei saisonaler Ware vorteilhaft sein, etwa bei Sommer- und Winterbekleidung. Demgemäß kann Sommerbekleidung zum Frühlingsbeginn vom ersten Lagerbereich in den zweiten Lagerbereich gelagert werden und Winterbekleidung vom zweiten Lagerbereich in den ersten Lagerbereich. Zu Herbstbeginn wird dann der umgekehrte Vorgang ausgelöst.

In obigem Zusammenhang ist es zudem von Vorteil, wenn die Lager-Umladestation im Fall A)

- eine erste Lager-Umlade-Andienposition aufweist, an welche die erste Fördertechnik gekoppelt ist, um das erste Ladehilfsmittel mit der Ware aus dem ersten Lagerbereich anzudienen, und

- eine zweite Lager-Umlade-Andienposition, an welche die zweite Fördertechnik gekoppelt ist, um die Hängetasche anzudienen und um das Umladen der Ware aus dem ersten Lagerbereich in die Hängetasche zu ermöglichen, und im Fall B)

- eine zweite Lager-Umlade-Andienposition aufweist, an welche die zweite Fördertechnik gekoppelt ist, um die Hängetasche mit der Ware aus dem zweiten Lagerbereich anzudienen, und

- eine erste Lager-Umlade-Andienposition, an welche die erste Fördertechnik gekoppelt ist, um das erste Ladehilfsmittel anzudienen und um das Umladen der Ware aus dem zweiten Lagerbereich in das erste Ladehilfsmittel zu ermöglichen.

Es kann sich auch von Vorteil erweisen, wenn in einem ersten Ladehilfsmittel mehrere Auftragswaren zumindest einer ersten Auftragszeile aufgenommen werden.

Zudem kann sich von Vorteil erweisen, wenn in einer Hängetasche genau eine Auftragsware einer zweiten Auftragszeile aufgenommen wird.

Darüber hinaus kann sich auch von Vorteil erweisen, wenn in einer Hängetasche mehrere Auftragswaren zumindest einer zweiten Auftragszeile aufgenommen werden.

Besonders vorteilhaft ist es, wenn

- im ersten Lagerbereich vorwiegend oder ausschließlich Neuware lagert (und der erste Lagerbereich ein Warenvorratslager umfasst oder als solches ausgebildet ist) und/oder

- im ersten Lagerbereich vorwiegend oder ausschließlich Langsamdreher-Waren lagern und/oder

- Waren im ersten Lagerbereich in einem ersten Ladehilfsmittel artikelrein gelagert werden.

Neuware liegt meist in größerer Stückzahl vor. Insofern ist es von Vorteil, mehrere dieser Waren platzsparend in oder auf einem ersten Ladehilfsmittel zu lagern. Entsprechend ist es auch von Vorteil, wenn in einem ersten Ladehilfsmittel mehrere Auftragswaren zumindest einer ersten Auftragszeile aufgenommen werden. Denkbar wäre natürlich aber auch, dass in einem ersten Ladehilfsmittel genau eine Auftragsware einer ersten Auftragszeile aufgenommen wird. Neuware liegt zumeist auch artikelrein vor. Insofern ist es von Vorteil, Waren in oder auf einem ersten Ladehilfsmittel artikelrein zu lagern. Entsprechend ist es auch von Vorteil, wenn in einem ersten Ladehilfsmittel mehrere Auftragswaren der gleichen Warentype zumindest einer ersten Auftragszeile aufgenommen werden.

Besonders vorteilhaft ist es auch, wenn

- im zweiten Lagerbereich vorwiegend oder ausschließlich Retourware lagert (und der zweite Lagerbereich ein Retourwarenlager umfasst oder als solches ausgebildet ist) und/oder

- im zweiten Lagerbereich vorwiegend oder ausschließlich Schnelldreher-Waren lagern und/oder
- Waren im zweiten Lagerbereich in einer Hängetasche gemischt (also nicht artikelrein) gelagert werden.

Retourware liegt sehr häufig als vereinzelte Ware vor. Insofern ist es von Vorteil, diese Ware platzsparend in einer Hängetasche zu lagern. Entsprechend ist es auch von Vorteil, wenn in einer Hängetasche genau eine Auftragsware einer zweiten Auftragszeile aufgenommen wird. Denkbar wäre natürlich aber auch, dass in einer Hängetasche mehrere Auftragswaren zumindest einer zweiten Auftragszeile aufgenommen werden. Retourware liegt zumeist auch gemischt (nicht artikelrein) vor. Insofern ist es von Vorteil, Waren in der Hängetasche gemischt zu lagern. Entsprechend ist es auch von Vorteil, wenn in einer Hängetasche mehrere Auftragswaren unterschiedlicher Warentype zumindest einer zweiten Auftragszeile aufgenommen werden.

Günstig ist es, wenn das erste Ladehilfsmittel aus der Gruppe: Behälter, Tablar oder Karton ausgewählt ist, wobei das Ladehilfsmittel einen Boden mit einem Aufnahmeplatz auf seiner oberen Seite umfasst, auf welchem zumindest eine Ware / Auftragsware der ersten Auftragszeile, bevorzugt eine Vielzahl an Waren / Auftragswaren der ersten Auftragszeile, abgelegt werden können, und einer Transportfläche auf seiner unteren Seite aufweist, durch welche das Ladehilfsmittel auf einer ersten Fördertechnik transportierbar ist, sowie vom Boden aufragende Seitenwände umfasst. Dadurch kann das erste Ladehilfsmittel insbesondere mehrere Waren oder Auftragswaren aufnehmen.

Günstig ist es, wenn das Lager- und Kommissioniersystem eine im Verlauf der ersten Fördertechnik und/oder zweiten Fördertechnik angeordnete Sortiereinrichtung aufweist, welche dazu ausgebildet ist, Auftragswaren der ersten Auftragszeilen und/oder Auftragswaren der zweiten Auftragszeilen in eine vorgebbare Reihenfolge zu bringen. Auf diese Weise kann der Kommissioniervorgang vereinfacht werden. Insbesondere kann eine Sortierung einstufig oder auch mehrstufig erfolgen. Die Sortiereinrichtung kann beispielsweise als Matrix-Sorter ausgebildet sein. Zusätzlich zu einer Sortiereinrichtung oder anstelle einer Sortiereinrichtung kann eine Sortierung auch durch entsprechende Entnahme der Auftragswaren der ersten Auftragszeilen aus dem ersten Lagerbereich und/oder Auftragswaren der zweiten Auftragszeilen aus dem zweiten Lagerbereich erfolgen, beispielweise mit Hilfe eines automatisiert betriebenen Förderfahrzeugs (zum Beispiel mit Hilfe eines Regalbediengeräts oder mit Hilfe eines autonomen Flurförderfahrzeugs).

Generell kann die erste Fördertechnik und/oder zweite Fördertechnik eine ortsfeste Fördertechnik und/oder autonome Flurförderfahrzeuge umfassen beziehungsweise daraus aufgebaut sein. Dadurch ist der Transport der Auftragswaren der ersten Auftragszeilen und der Auftragswaren der zweiten Auftragszeilen auf flexible Weise möglich.

Günstig ist es, wenn der

- der erste Lagerbereich Lagerregale umfasst,
- Lagerplätze in den Lagerregalen vorgesehen sind und
- die erste Fördertechnik ein automatisiert betriebenes Förderfahrzeug umfasst, welches die Auslagerung des ersten Ladehilfsmittels mit der Auftragsware der ersten Auftragszeile ermöglicht.

Auf diese Weise kann eine Vielzahl von Waren beziehungsweise Auftragswaren der ersten Auftragszeile platzsparend im ersten Lagerbereich gelagert werden.

Günstig ist es weiterhin, wenn die erste Fördertechnik

- einen ersten Förderabschnitt zum Auslagern des ersten Ladehilfsmittels mit der Auftragsware der ersten Auftragszeile aus dem ersten Lagerbereich und
- einen zweiten Förderabschnitt zum Einlagern eines ersten Ladehilfsmittels mit einer Ware in den ersten Lagerbereich umfasst und
- das automatisiert betriebene Förderfahrzeug auch das Einlagern des ersten Ladehilfsmittels mit der Ware in einen Lagerplatz ermöglicht.

Dadurch können Waren in den ersten Lagerbereich eingelagert und Auftragswaren der ersten Auftragszeile aus dem ersten Lagerbereich ausgelagert werden. Anstelle getrennter Förderabschnitte kann dazu auch ein gemeinsamer Förderabschnitt vorgesehen sein, der bidirektional betrieben wird.

Günstig ist es weiterhin, wenn das automatisiert betriebene Förderfahrzeug

- vor den Lagerplätzen entlang einer Regalgasse verfahrbar ist und
- mit einer Lastaufnahmevorrichtung zum Einlagern eines ersten Ladehilfsmittels mit einer Ware in einen Lagerplatz und/oder zum Auslagern des ersten Ladehilfsmittels mit der Auftragsware der ersten Auftragszeile von einem Lagerplatz versehen ist und
- als schienengebundenes Regalbediengerät oder als autonomes Flurförderfahrzeug ausgebildet ist.

Durch die vorgeschlagenen Maßnahmen können die Waren automatisiert eingelagert beziehungsweise die Auftragswaren der ersten Auftragszeile automatisiert ausgelagert werden.

Besonders vorteilhaft ist es, wenn

- die Regale als mobile Regale ausgebildet sind, welche als erste Ladehilfsmittel fungieren, und
- das automatisiert betriebene Förderfahrzeug als autonomes Flurförderfahrzeug ausgebildet ist und die mobilen Regale durch das autonome Flurförderfahrzeug transportierbar sind.

Günstig ist es zudem, wenn das als mobiles Regal ausgebildete erste Ladehilfsmittel in übereinanderliegenden Lagerebenen Regalböden mit jeweils zumindest einen Aufnahmeplatz umfasst, auf welchem zumindest eine Ware / Auftragsware zumindest einer ersten Auftragszeile, bevorzugt eine Vielzahl an Waren / Auftragswaren zumindest einer ersten Auftragszeile, abgelegt werden können. Auf diese Weise kann eine Vielzahl an Auftragswaren der ersten Auftragszeile auf einmal transportiert werden. Die Anzahl der für einen Kommissionierauftrag nötigen Fahrten kann damit gering gehalten werden.

Günstig ist es weiterhin, wenn der zweite Lagerbereich Lager-Hängebahnen umfasst und

I) die zweite Fördertechnik Transport-Hängebahnen umfasst, welche mit den Lager-Hängebahnen fördertechnisch verbunden sind und die Auslagerung der Hängetasche mit der Auftragsware der zweiten Auftragszeile ermöglicht und/oder
II) die zweite Fördertechnik ein automatisiert betriebenes Förderfahrzeug umfasst, welches die Auslagerung der Hängetasche mit der Auftragsware der zweiten Auftragszeile ermöglicht.

Durch die vorgeschlagenen Maßnahmen können die Waren automatisiert eingelagert beziehungsweise die Auftragswaren der zweiten Auftragszeile automatisiert ausgelagert werden. Im Fall I) ist dazu ortsfeste Fördertechnik vorgesehen, im Fall II) nicht-ortsfeste Fördertechnik.

Günstig ist es weiterhin, wenn die zweite Fördertechnik

- einen ersten Förderabschnitt zum Auslagern der Hängetasche mit der Auftragsware der zweiten Auftragszeile aus dem zweiten Lagerbereich und
- einen zweiten Förderabschnitt zum Einlagern einer Hängetasche mit einer Ware in den zweiten Lagerbereich umfasst und
- im Fall I) die Transport-Hängebahnen und im Fall II) das automatisiert betriebene Förderfahrzeug auch das Einlagern der Hängetasche mit der Ware in eine Lager-Hängebahn ermöglicht.

Dadurch können Waren in den zweiten Lagerbereich eingelagert und Auftragswaren der zweiten Auftragszeile aus dem zweiten Lagerbereich ausgelagert werden. Anstelle getrennter Förderabschnitte kann dazu auch ein gemeinsamer Förderabschnitt vorgesehen sein, der bidirektional betrieben wird.

Günstig ist es auch, wenn das automatisiert betriebene Förderfahrzeug im Fall II)

- vor den Lagerplätzen entlang einer Regalgasse verfahrbar ist und
- mit einer Lastaufnahmevorrichtung zum Einlagern einer Hängetasche mit der Ware in die Lager-Hängebahn und/oder zum Auslagern der Hängetasche mit der Auftragsware der zweiten Auftragszeile aus der Lager-Hängebahn versehen ist und
- als schienengebundenes Regalbediengerät oder als autonomes Flurförderfahrzeug ausgebildet ist.

Durch die vorgeschlagenen Maßnahmen können die Waren automatisiert in den zweiten Lagerbereich eingelagert beziehungsweise die Auftragswaren der zweiten Auftragszeile automatisiert aus dem zweiten Lagerbereich ausgelagert werden.

Besonders vorteilhaft ist es auch, wenn

- die Lager-Hängebahnen mobil beziehungsweise transportabel ausgebildet sind, und
- das automatisiert betriebene Förderfahrzeug im Fall II) als autonomes Flurförderfahrzeug ausgebildet ist und eine mobile Lager-Hängebahn durch das autonome Flurförderfahrzeug transportierbar ist.

Auf diese Weise kann eine Vielzahl an Auftragswaren der zweiten Auftragszeile auf einmal transportiert werden. Die Anzahl der für einen Kommissionierauftrag nötigen Fahrten kann damit gering gehalten werden. Eine mobile beziehungsweise transportable Lager-Hängebahn ist insbesondere durch eine Hängestange gebildet, die durch das autonome Flurförderfahrzeug manipuliert werden kann.

Besonders vorteilhaft ist es, wenn das autonome Flurförderfahrzeug sowohl für den Transport der mobilen Regale als auch für den Transport der mobilen Lager-Hängebahnen ausgebildet ist. Beispielsweise kann das autonome Flurförderfahrzeug dazu eine Transportplattform aufweisen. Die erste und zweite Fördertechnik ist in diesem Fall (zumindest teilweise) identisch ausgebildet und die autonomen Flurförderfahrzeuge können somit besonders flexibel eingesetzt werden. Ein Zusammenführungspunkt für die erste und zweite Fördertechnik kann insbesondere durch einen Ort der stationären Fördertechnik (z.B. Rollenförderbahn für erste Ladehilfsmittel oder Hängeförderbahn für zweite Ladehilfsmittel) gebildet sein, von dem erste Ladehilfsmittel oder zweite Ladehilfsmittel auf autonome Flurförderfahrzeuge der oben genannten Art geladen werden, die sowohl erste als auch zweite Ladehilfsmittel transportieren können.

Günstig ist es schließlich, wenn das Zielladehilfsmittel

- als Versandladehilfsmittel fungiert und die Auftragsware der ersten Auftragszeile und/oder die Auftragsware der zweiten Auftragszeile direkt in oder auf das Versandladehilfsmittel geladen wird oder
- als Zwischenladehilfsmittel fungiert und die Auftragsware der ersten Auftragszeile und/oder die Auftragsware der zweiten Auftragszeile in oder auf das Zwischenladehilfsmittel und danach in oder auf ein Versandladehilfsmittel umgeladen wird.

Das Vorsehen eines Zwischenladehilfsmittels kann den Kommissioniervorgang erleichtern, insbesondere wenn viele von ihrer Art her unterschiedliche Versandladehilfsmittel mit Auftragswaren der ersten Auftragszeilen und Auftragswaren der zweiten Auftragszeilen beladen werden. Durch die Verwendung von (einheitlichen) Zwischenladehilfsmitteln kann der Kommissioniervorgang an der Kommissionierstation, das heißt die Beladung der Zwischenladehilfsmittel mit Auftragswaren der ersten Auftragszeilen und Auftragswaren der zweiten Auftragszeilen, vereinheitlicht und vereinfacht werden. Wird direkt in ein Versandladehilfsmittel kommissioniert, dann erfolgt der Kommissioniervorgang ohne Umweg.

An dieser Stelle wird angemerkt, dass sich die zum vorgestellten Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:

Fig. 1     eine erste Ausführungsform eines schematisch dargestellten Lager- und Kommissioniersystems, bei dem die erste und zweite Fördertechnik zu einer Kommissionierstation führen;

Fig. 2     eine zweite Ausführungsform eines schematisch dargestellten Lager- und Kommissioniersystems mit einer Sortiereinrichtung im Verlauf der zweiten Fördertechnik;

Fig. 3     eine weitere Ausführungsform eines schematisch dargestellten Lager- und Kommissioniersystems mit einer Umladestation im Verlauf der zweiten Fördertechnik;

Fig. 4     eine weitere Ausführungsform eines schematisch dargestellten Lager- und Kommissioniersystems mit zwei Kommissionierstationen;

Fig. 5     eine weitere Ausführungsform eines schematisch dargestellten Lager- und Kommissioniersystems mit einer Lager-Umladestation zwischen dem ersten und zweiten Lagerbereich;

Fig. 6     ein beispielhaftes (mobiles) Regal in Schrägansicht;

Fig. 7     eine beispielhafte, mobile Lager-Hängebahn in Schrägansicht;

Fig. 8     ein beispielhaftes und schematisch dargestelltes autonomes Flurförderfahrzeug und

Fig. 9     eine Draufsicht auf ein beispielhaftes Lager- und Kommissioniersystem.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

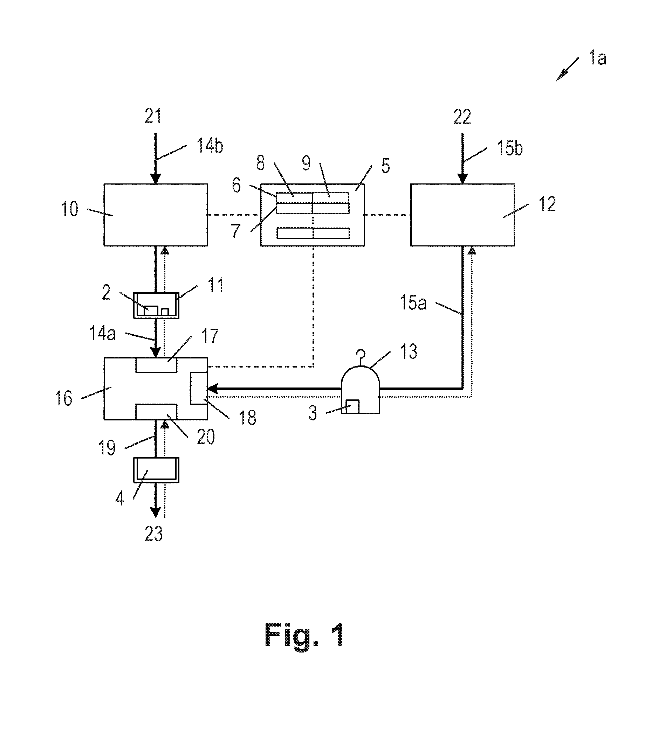

Figur 1 zeigt ein Lager- und Kommissioniersystem 1a zum Kommissionieren von Auftragswaren 2, 3 in oder auf ein Zielladehilfsmittel 4, welches einen Auftragsrechner 5 zur Erfassung von Aufträgen zum Kommissionieren von Auftragswaren 2, 3 und zum Ermitteln der für einen Auftrag benötigten Auftragswaren 2, 3 umfasst. Zumindest einer der Aufträge umfasst wenigstens eine erste Auftragszeile 6 und eine zweite Auftragszeile 7, wobei jede Auftragszeile 6, 7 zumindest eine Auftragsware 2, 3 nach ihrer Warentype 8 und ihrer zu kommissionierenden Stückzahl 9 spezifiziert.

Das Lager- und Kommissioniersystem 1a umfasst weiterhin einen ersten Lagerbereich 10 für erste Ladehilfsmittel 11 und einen zweiten Lagerbereich 12 für zweite Ladehilfsmittel 13. Die ersten Ladehilfsmittel 11 sind unterschiedlich zu einer Hängetasche ausgebildet, und in oder auf einem der ersten Ladehilfsmittel 11 lagert eine Auftragsware 2 der ersten Auftragszeile 6.

Die zweiten Ladehilfsmittel 13 sind als Hängetaschen ausgebildet, und in einer der Hängetaschen 13 lagert eine Auftragsware 3 der zweiten Auftragszeile 7.

Das Lager- und Kommissioniersystem 1a umfasst außerdem einen ersten Förderabschnitt 14a der ersten Fördertechnik zum Auslagern des ersten Ladehilfsmittels 11 mit der Auftragsware 2 der ersten Auftragszeile 6 aus dem ersten Lagerbereich 10 und einen ersten Förderabschnitt 15a der zweiten Fördertechnik zum Auslagern der Hängetasche 13 mit der Auftragsware 3 der zweiten Auftragszeile 7 aus dem zweiten Lagerbereich 12.

Weiterhin umfasst das Lager- und Kommissioniersystem 1a eine Kommissionierstation 16, an welche der erste Förderabschnitt 14a der ersten Fördertechnik und der erste Förderabschnitt 15a der zweiten Fördertechnik gekoppelt ist, und welche das Verladen der Auftragsware 2 der ersten Auftragszeile 6 und der Auftragsware 3 der zweiten Auftragszeile 7 in oder auf ein an der Kommissionierstation 16 bereitgestelltes Zielladehilfsmittel 4 ermöglicht.

Die zumindest eine Kommissionierstation 16 weist dazu eine erste Kommissionier-Andienposition 17 auf, an welche der erste Förderabschnitt 14a der ersten Fördertechnik gekoppelt ist, um das erste Ladehilfsmittel 11 mit der Auftragsware 2 der ersten Auftragszeile 6 anzudienen, und eine zweite Kommissionier-Andienposition 18, an welche der erste Förderabschnitt 15a der zweiten Fördertechnik gekoppelt ist, um die Hängetasche 13 mit der Auftragsware 3 der zweiten Auftragszeile 7 anzudienen.

Das Lager- und Kommissioniersystem 1a umfasst auch eine dritte Fördertechnik 19, welche an die Kommissionierstation 16 gekoppelt ist und eine Bereitstellung des Zielladehilfsmittels 4 an der Kommissionierstation 16 ermöglicht. Die Kommissionierstation 16 weist demgemäß eine dritte Kommissionier-Andienposition 20 auf, an welche die dritte Fördertechnik 19 gekoppelt ist, um das Zielladehilfsmittel 4 anzudienen und um das Umladen der Auftragsware 2 der ersten Auftragszeile 6 und der Auftragsware 3 der zweiten Auftragszeile 7 gemäß einem Kommissionierauftrag (im Zuge des Kommissioniervorgangs) in oder auf das Zielladehilfsmittel 4 zu ermöglichen.

Darüber hinaus umfasst das Lager- und Kommissioniersystem 1a einen ersten Warenübernahmebereich 21, welcher über einen zweiten Förderabschnitt 14b der ersten Fördertechnik mit dem ersten Lagerbereich 10 gekoppelt ist und über welchen ein erstes Ladehilfsmittel mit einer Ware (nicht dargestellt) in den ersten Lagerbereich 10 eingelagert werden kann. In gleicher Weise umfasst das Lager- und Kommissioniersystem 1a einen zweiten Warenübernahmebereich 22, welcher über einen zweiten Förderabschnitt 15b der zweiten Fördertechnik mit dem zweiten Lagerbereich 12 gekoppelt ist und über welchen eine Hängetasche mit einer Ware (nicht dargestellt) in den zweiten Lagerbereich 12 eingelagert werden kann. Der erste Warenübernahmebereich 21 und der zweite Warenübernahmebereich 22 können Teil eines Wareneingangs sein oder diese bilden.

Angelieferte Warenträger (z.B. Paletten, Kartons, etc.) können direkt in den ersten Lagerbereich 10 und/oder in den zweiten Lagerbereich 12 eingelagert werden. Die angelieferten Warenträger bilden dann direkt die ersten Ladehilfsmittel 11 beziehungsweise Hängetaschen 13. Die angelieferten Waren können aber auch von den angelieferten Warenträgern in erste Ladehilfsmittel 11 beziehungsweise Hängetaschen 13 umgeladen werden. Dieser Vorgang kann manuell, automatisiert oder in gemischter Betriebsweise erfolgen. Insbesondere kann die angelieferte Ware bei diesem Vorgang auch vereinzelt werden.

Das Lager- und Kommissioniersystem 1a umfasst auch einen Warenübergabebereich 23, der mit der dritten Fördertechnik 19 gekoppelt ist. Der Warenübergabebereich 23 kann Teil eines Warenausgangs sein oder diesen bilden.

Der erste Lagerbereich 10 kann insbesondere ein Warenvorratslager umfassen oder als solches ausgebildet sein. Dementsprechend wird über den ersten Warenübernahmebereich 21 vorwiegend oder ausschließlich Neuware angeliefert und im Anschluss im ersten Lagerbereich 10 gelagert.

Neuware liegt meist in größerer Stückzahl vor. Insofern ist es von Vorteil, mehrere dieser Waren platzsparend in oder auf einem ersten Ladehilfsmittel 11 zu lagern. Entsprechend ist es auch von Vorteil, wenn in einem ersten Ladehilfsmittel 11 mehrere Auftragswaren 2 zumindest einer ersten Auftragszeile 6 aufgenommen werden, so wie das in der Fig. 1 dargestellt ist. Denkbar wäre natürlich aber auch, dass in einem ersten Ladehilfsmittel 11 genau eine Auftragsware 2 einer ersten Auftragszeile 6 aufgenommen wird. Neuware liegt zumeist auch artikelrein vor. Insofern ist es von Vorteil, Waren in oder auf einem ersten Ladehilfsmittel 11 artikelrein zu lagern. Entsprechend ist es auch von Vorteil, wenn in einem ersten Ladehilfsmittel 11 mehrere Auftragswaren 2 der gleichen Warentype 8 zumindest einer ersten Auftragszeile 6 aufgenommen werden.

Der zweite Lagerbereich 12 kann insbesondere ein Retourwarenlager umfassen oder als solches ausgebildet sein. Dementsprechend wird über den zweiten Warenübernahmebereich 22 vorwiegend oder ausschließlich Retourware angeliefert und im Anschluss im zweiten Lagerbereich 12 gelagert.

Retourware liegt sehr häufig als vereinzelte Ware vor. Insofern ist es von Vorteil, diese Ware platzsparend in einer Hängetasche 13 zu lagern. Entsprechend ist es auch von Vorteil, wenn in einer Hängetasche 13 genau eine Auftragsware 3 einer zweiten Auftragszeile 7 aufgenommen wird, so wie das in der Fig. 1 dargestellt ist. Denkbar wäre natürlich aber auch, dass in einer Hängetasche 13 mehrere Auftragswaren 3 zumindest einer zweiten Auftragszeile 7 aufgenommen werden. Retourware liegt zumeist auch gemischt (das heißt nicht artikelrein) vor. Insofern ist es von Vorteil, Waren in der Hängetasche 13 gemischt zu lagern. Entsprechend ist es auch von Vorteil, wenn in einer Hängetasche 13 mehrere Auftragswaren 3 unterschiedlicher Warentype 8 zumindest einer zweiten Auftragszeile 7 aufgenommen werden.

Denkbar wäre auch, dass im ersten Lagerbereich 10 vorwiegend oder ausschließlich Langsamdreher-Ware gelagert wird und im zweiten Lagerbereich 12 vorwiegend oder ausschließlich Schnelldreher-Ware.

An dieser Stelle wird angemerkt, dass das erste Ladehilfsmittel 11 mehrere Aufbewahrungsbereiche aufweisen kann, beispielsweise mehrere Aufbewahrungsfächer, wenn das erste Ladehilfsmittel 11 als Behälter ausgebildet ist. In diesen Aufbewahrungsbereichen können die Waren und Auftragswaren 2 der ersten Auftragszeile 6 artikelrein gelagert sein, obwohl im ersten Ladehilfsmittel 11 insgesamt Waren und Auftragswaren 2 der ersten Auftragszeile 6 mehrerer Warentypen 8 lagern. Ähnliches gilt für die Hängetasche 13. Auch diese kann mehrere Aufbewahrungsbereiche / Aufbewahrungsfächer aufweisen, in denen die Waren und Auftragswaren 3 der zweiten Auftragszeile 7 artikelrein gelagert sind, obwohl in der Hängetasche 13 insgesamt Waren und Auftragswaren 3 der zweiten Auftragszeile 7 mehrerer Warentypen 8 lagern.

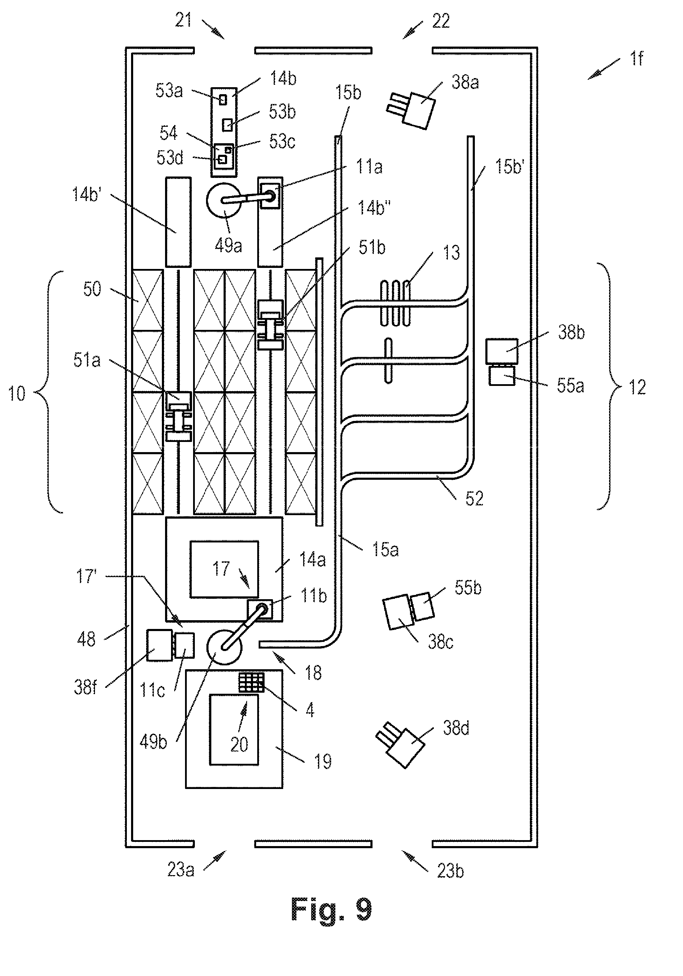

Angemerkt wird weiterhin, dass die Transportrichtung beim Auslagern beziehungsweise Kommissionieren der Auftragswaren 2 der ersten Auftragszeile 6 und der Auftragswaren 3 der zweiten Auftragszeile 7 in der Fig. 1 mit dicken Linien und Pfeilen dargestellt ist. Eine Rückförderung beziehungsweise Rücklagerung von leeren oder teilweise entleerten ersten Ladehilfsmitteln 11, leeren oder teilweise entleerten Hängetaschen 13 und leeren Zielladehilfsmitteln 4 kann in der Gegenrichtung entsprechend der punktiert dargestellten Transportrichtung erfolgen. Diese Rückförderung beziehungsweise Rücklagerung kann durch bidirektionalen Betrieb oder durch ringförmige Ausgestaltung (siehe hierzu auch Fig. 9) der ersten, zweiten und dritten Fördertechnik erfolgen. Denkbar ist natürlich auch, dass die ersten Ladehilfsmitteln 11, Hängetaschen 13 und Zielladehilfsmitteln 4 nach dem vollständigen oder teilweisen Entleeren an eine andere Stelle des Lager- und Kommissioniersystems 1a transportiert und wieder in den Ablauf des Kommissionierverfahrens eingegliedert werden (nicht dargestellt). Sind die ersten Ladehilfsmitteln 11 oder Hängetaschen 13 teilweise entleert, dann enthalten sie noch Ware, die für den aktuellen Kommissionierauftrag nicht benötigt wurde und daher für einen anderen Kommissionierauftrag verwendet werden kann.

Eine Steuerverbindung zwischen dem Auftragsrechner 5, dem ersten Lagerbereich 10, dem zweiten Lagerbereich 12 und der Kommissionierstation 16 ist mit strichlierten Linien angedeutet. Über diese Steuer-Verbindung kann der Auftragsrechner 5 den ersten Lagerbereich 10, den zweiten Lagerbereich 12 und die Kommissionierstation 16 entsprechend eines Kommissionierauftrags ansteuern.

Die Funktion des in der Fig. 1 dargestellten Lager- und Kommissioniersystems 1a ist wie folgt, wobei angenommen wird, dass im ersten Lagerbereich 10 und im zweiten Lagerbereich 12 bereits Waren lagern:

In einem ersten Schritt wird ein Auftrag zum Kommissionieren von Auftragswaren 2, 3 erfasst, und es werden die für diesen Auftrag benötigten Auftragswaren 2, 3 ermittelt.

Der für dieses Beispiel herangezogene Auftrag umfasst mehrere Auftragszeilen 6, 7. Jede Auftragszeile 6, 7 spezifiziert eine Auftragsware 2, 3 nach ihrer Warentype 8 und ihrer zu kommissionierenden Stückzahl 9. Beispielsweise kann die Warentype 8 in der ersten Auftragszeile 6 "Hemd, weiß, Größe 42" sein und die zu kommissionierende Stückzahl 9 "3 Stück". Die zweite Auftragszeile 7 kann als Warentype 8 "Bandnudeln, 1 kg" und die Stückzahl 9 "1 Stück" beinhalten.

In einem zweiten Schritt wird das erste Ladehilfsmittel 11, auf oder in welchem zu dem zumindest einen Auftrag eine Auftragsware 2 der ersten Auftragszeile 6 lagert (also zum Beispiel die drei Hemden), aus dem ersten Lagerbereich 10 ausgelagert und über den ersten Förderabschnitt 14a der ersten Fördertechnik zur ersten Kommissionier-Andienposition 17 transportiert und dort angedient.

Ebenso wird die Hängetasche 13, welche zu dem zumindest einen Auftrag eine Auftragsware 3 der zweiten Auftragszeile 7 beinhaltet (also zum Beispiel die Bandnudeln), aus dem zweiten Lagerbereich 12 ausgelagert und über den ersten Förderabschnitt 15a der zweiten Fördertechnik zur zweiten Kommissionier-Andienposition 18 transportiert und dort angedient.

In einem dritten Schritt wird die Auftragsware 2 der ersten Auftragszeile 6 und die Auftragsware 3 der zweiten Auftragszeile 7 gemäß dem Kommissionierauftrag in oder auf das Zielladehilfsmittel 4 geladen. In weiterer Folge wird das Zielladehilfsmittel 4 durch die dritte Fördertechnik 19 zum Warenübergabebereich 23 transportiert.

Vorteilhaft ist es dabei, wenn in einem ersten Ladehilfsmittel 11 mehrere Auftragswaren 2 zumindest einer ersten Auftragszeile 6 aufgenommen werden und in einer Hängetasche 13 genau eine Auftragsware 3 einer zweiten Auftragszeile 7 aufgenommen wird, so wie das in der Fig. 1 dargestellt ist.

In dem vorgestellten Beispiel fungiert das Zielladehilfsmittel 4 als Versandladehilfsmittel und dient damit dem Abtransport der Auftragsware 2 der ersten Auftragszeile 6 und der Auftragsware 3 der zweiten Auftragszeile 7 aus dem Lager- und Kommissioniersystem 1a. Denkbar wäre auch, dass das Zielladehilfsmittel 4 als Zwischenladehilfsmittel fungiert und demnach der Zwischenlagerung von kommissionierter und für den Versand bestimmter Auftragsware 2 der ersten Auftragszeile 6 und der Auftragsware 3 der zweiten Auftragszeile 7 dient, bevor diese in ein Versandladehilfsmittel umgeladen werden.

Generell kann das Zielladehilfsmittel 4 insbesondere als Behälter, Karton, Tablar, Palette, Beutel (insbesondere ein "Polybag"), Tasche, Sack, Hängetasche oder Regal ausgebildet sein. In ganz ähnlicher Weise kann das erste Ladehilfsmittel 11 insbesondere als Behälter, Karton, Tablar, Palette oder Regal ausgebildet sein.

Insbesondere umfasst das erste Ladehilfsmittel 11 einen Boden mit einem Aufnahmeplatz auf seiner oberen Seite, auf welchem zumindest eine Ware / Auftragsware 2 der ersten Auftragszeile 6, bevorzugt eine Vielzahl an Waren / Auftragswaren 2 der ersten Auftragszeile 6, abgelegt werden können, und eine Transportfläche auf seiner unteren Seite, durch welche das erste Ladehilfsmittel 11 auf einer ersten Fördertechnik 14a, 14b transportierbar ist, sowie vom Boden aufragende Seitenwände.

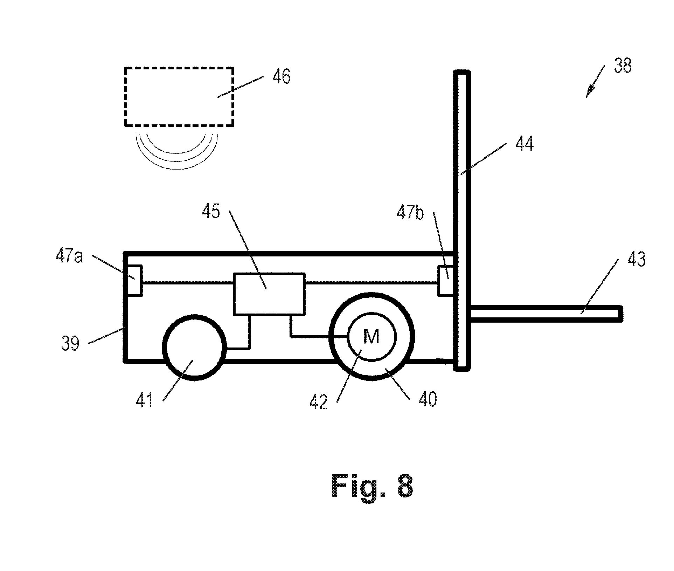

Die erste Fördertechnik 14a, 14b und/oder die zweite Fördertechnik 15a, 15b und/oder die dritte Fördertechnik 19 kann eine ortsfeste Fördertechnik und/oder autonome Flurförderfahrzeuge umfassen beziehungsweise daraus aufgebaut sein (siehe auch Fig. 8 und 9). Unter ortsfester Fördertechnik sind insbesondere Rollenförderer, Bandförderer, oder Kettenförderer zu verstehen. Unter autonomen Förderfahrzeugen sind insbesondere schienengebundene Regalbediengeräte und schienenungebundene, autonome Flurförderfahrzeuge zu verstehen.

Vorzugsweise umfasst der erste Lagerbereich 10 Lagerregale mit Lagerplätzen. Die erste Fördertechnik 14a, 14b umfasst dann vorzugsweise zumindest ein automatisiert betriebenes Förderfahrzeug, welches die Auslagerung des ersten Ladehilfsmittels 11 mit der Auftragsware 2 der ersten Auftragszeile 6 und optional auch die Einlagerung eines ersten Ladehilfsmittels 11 mit der Ware in einen Lagerplatz ermöglicht. Das automatisiert betriebene Förderfahrzeug ist dabei vor den Lagerplätzen entlang einer Regalgasse verfahrbar und mit einer Lastaufnahmevorrichtung zum Einlagern eines ersten Ladehilfsmittels 11 mit einer Ware in einen Lagerplatz und/oder zum Auslagern des ersten Ladehilfsmittels 11 mit der Auftragsware 2 der ersten Auftragszeile 6 von einem Lagerplatz versehen. Eine mögliche Ausführung eines solchen ersten Lagerbereiches 10 mit Lagerplätzen und erster Fördertechnik ist beispielsweise aus der WO 2016/033628 A1 bekannt. Das automatisiert betriebene Förderfahrzeug kann dabei als schienengebundenes Regalbediengerät ausgebildet sein. Andererseits kann das automatisiert betriebene Förderfahrzeug auch als autonomes Flurförderfahrzeug ausgebildet sein (siehe auch die Fig. 8 und 9). Autonome Flurförderfahrzeug sind frei fahrend (schienenungebunden) und können in flexibler Weise eingesetzt werden. Beispielsweise kann ein und dasselbe autonome Flurförderfahrzeug für die erste Fördertechnik 14a, 14b, die zweite Fördertechnik 15a, 15b und die dritte Fördertechnik 19 eingesetzt werden.

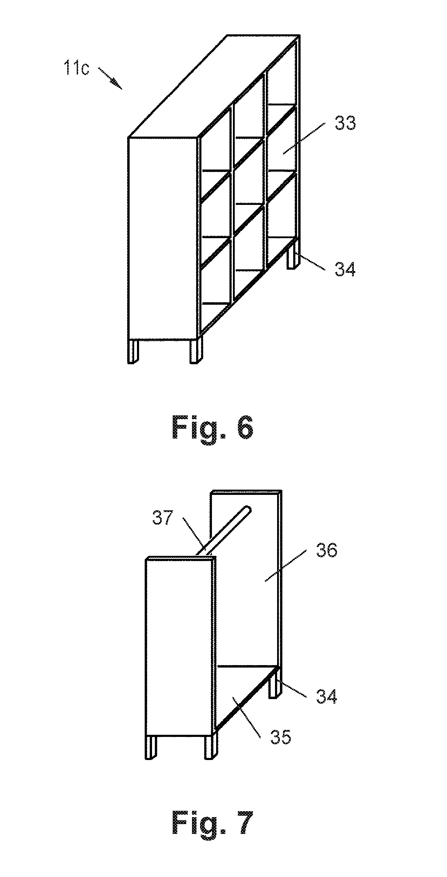

In einer besonderen Ausführungsform können die Regale als mobile Regale ausgebildet sein und als erste Ladehilfsmittel 11 fungieren (siehe auch Fig. 6). Ein solches mobiles Regal umfasst, wie auch ein ortsfest aufgestelltes Regal, Regalböden in übereinanderliegenden Lagerebenen mit jeweils zumindest einen Aufnahmeplatz, auf welchem zumindest eine Ware / Auftragsware 2 zumindest einer ersten Auftragszeile 6, bevorzugt eine Vielzahl an Waren / Auftragswaren 2 zumindest einer ersten Auftragszeile 6, abgelegt werden können. Das automatisiert betriebene Förderfahrzeug ist (zumindest) im Falle mobiler Regale als autonomes Flurförderfahrzeug ausgebildet und kann die mobilen Regale transportieren. Der erste Lagerbereich 10 ist daher insbesondere als Abstellplatz für die genannten, mobilen Regale ausgebildet. Denkbar ist natürlich auch, dass der erste Lagerbereich 10 sowohl ortsfest aufgestellte Regale, als auch Stellplätze für mobile Regale aufweist. Mobile Regale können auch Transportrollen aufweisen, um deren Transport zu vereinfachen.

Der zweite Lagerbereich 12 umfasst Lager-Hängebahnen, in denen die Hängetaschen 13 hängend gelagert sind. Dabei sind grundsätzlich zwei Varianten denkbar. In einem Fall I) umfasst die zweite Fördertechnik 15a, 15b Transport-Hängebahnen, welche mit den Lager-Hängebahnen fördertechnisch verbunden sind und die Auslagerung der Hängetasche 13 mit der Auftragsware 3 der zweiten Auftragszeile 7 und optional auch die Einlagerung einer Hängetasche 13 mit Ware in eine Lager-Hängebahn ermöglicht. Die Lager-Hängebahnen und die Transport-Hängebahnen sind in diesem Fall ortsfest ausgeführt und beispielsweise schienenförmig ausgebildet (siehe auch Fig. 9).

In einem Fall II) kann die zweite Fördertechnik 15a, 15b auch ein automatisiert betriebenes Förderfahrzeug umfassen, welches die Auslagerung der Hängetasche 13 mit der Auftragsware 3 der zweiten Auftragszeile 7 und optional auch die Einlagerung einer Hängetasche 13 mit Ware in eine Lager-Hängebahn ermöglicht.

Das automatisiert betriebene Förderfahrzeug ist im Fall II) wiederum vor den Lagerplätzen entlang einer Regalgasse verfahrbar und mit einer Lastaufnahmevorrichtung zum Einlagern einer Hängetasche 13 mit der Ware in die Lager-Hängebahn und/oder zum Auslagern der Hängetasche 13 mit der Auftragsware 3 der zweiten Auftragszeile aus der Lager-Hängebahn versehen. Das automatisiert betriebene Förderfahrzeug kann wiederum als schienengebundenes Regalbediengerät oder als (schienenungebundenes) autonomes Flurförderfahrzeug ausgebildet sein.

In einer besonderen Ausführungsform können die Lager-Hängebahnen mobil beziehungsweise transportabel ausgebildet sein (siehe auch Fig. 7). Das automatisiert betriebene Förderfahrzeug ist (zumindest) im Falle mobiler Lager-Hängebahnen als autonomes Flurförderfahrzeug ausgebildet und kann die mobilen Lager-Hängebahnen transportieren. Der zweite Lagerbereich 12 ist daher insbesondere als Abstellplatz für die genannten, mobilen Lager-Hängebahnen ausgebildet. Denkbar ist natürlich auch, dass der zweite Lagerbereich 12 sowohl ortsfest angeordnete Lager-Hängebahnen, als auch Stellplätze für mobile Lager-Hängebahnen aufweist. Mobile Lager-Hängebahnen können auch Transportrollen aufweisen, um deren Transport zu vereinfachen.

In einer besonders vorteilhaften Ausführungsform ist das autonome Flurförderfahrzeug sowohl für den Transport der mobilen Regale als auch für den Transport der mobilen Lager-Hängebahnen ausgebildet. Diese Variante kann auch als Sonderform eines Zusammenführungspunkts gesehen werden, an dem die erste Fördertechnik 14a in die zweite Fördertechnik 15a oder die zweite Fördertechnik 15a in die erste Fördertechnik 14a mündet.

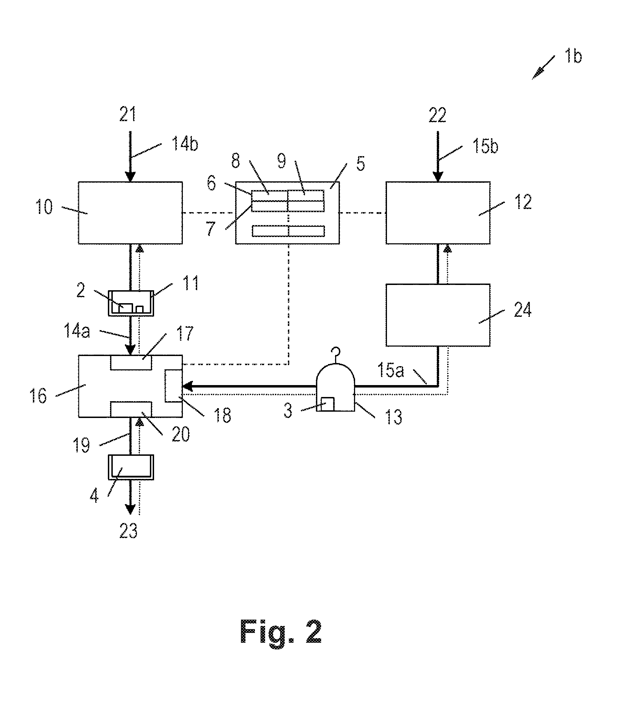

Fig. 2 zeigt nun ein Lager- und Kommissioniersystem 1b, das dem in der Fig. 1 dargestellten Lager- und Kommissioniersystem 1a sehr ähnlich ist. Im Unterschied dazu ist im Lager- und Kommissioniersystem 1b eine einstufige oder mehrstufige Sortiereinrichtung 24 im Verlauf des ersten Abschnitts 15a der zweiten Fördertechnik angeordnet, welche beispielsweise als Matrix-Sorter ausgebildet sein kann. Mithilfe der Sortiereinrichtung 24 können die Hängetaschen 13 in eine an der zweiten Kommissionier-Andienposition 18 geforderte Reihenfolge gebracht werden, sofern diese Reihenfolge nicht ohnehin durch eine entsprechende Auslagerung aus dem zweiten Lagerbereich 12 hergestellt wird. In der Figur 2 ist lediglich eine Sortiereinrichtung 24 im Verlauf des ersten Abschnitts 15a der zweiten Fördertechnik angeordnet. Denkbar ist natürlich auch, dass alternativ oder zusätzlich zur Sortiereinrichtung 24 im Verlauf des ersten Abschnitts 15a der zweiten Fördertechnik eine Sortiereinrichtung 24 im Verlauf des ersten Abschnitts 14a der ersten Fördertechnik angeordnet ist.

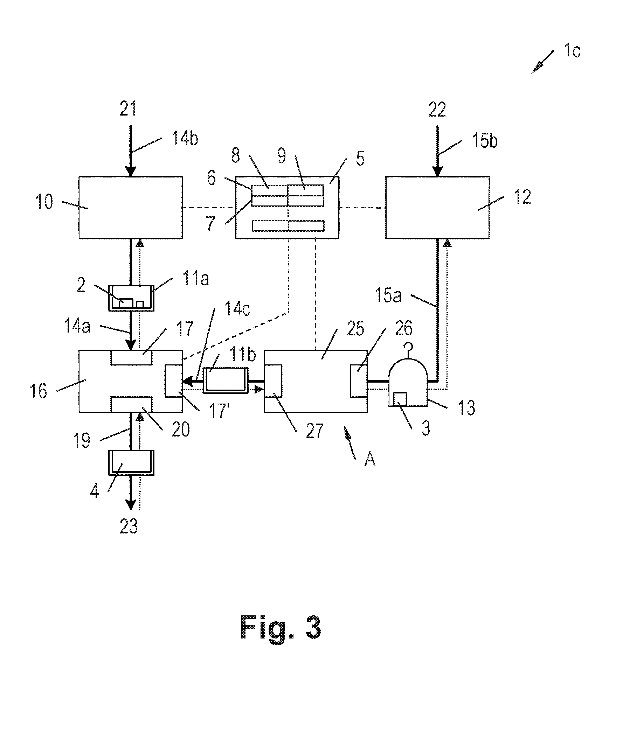

Fig. 3 zeigt nun ein weiteres Lager- und Kommissioniersystem 1c, das dem in der Fig. 1 dargestellten Lager- und Kommissioniersystem 1a sehr ähnlich ist. Im Unterschied dazu offenbart das Lager- und Kommissioniersystem 1c eine Umladestation 25 im Verlauf des ersten Abschnitts 15a der zweiten Fördertechnik, welche das Umladen der Auftragsware 3 der zweiten Auftragszeile 7 in oder auf ein an der Umladestation 25 bereitgestelltes zweites Ladehilfsmittel 11b der ersten Ladehilfsmittel ermöglicht, und eine Kommissionierstation 16 im Verlauf des ersten Abschnitts 14a der ersten Fördertechnik, welche das Verladen der Auftragsware 2 der ersten Auftragszeile 6 und der Auftragsware 3 der zweiten Auftragszeile 7 in oder auf ein dort bereitgestelltes Zielladehilfsmittel 4 ermöglicht (Fall b).

Die Umladestation 25 umfasst dazu eine erste Umlade-Andienposition 26, an welche der erste Abschnitt 15a der zweiten Fördertechnik gekoppelt ist, um die Hängetasche 13 mit der Auftragsware 3 der zweiten Auftragszeile 7 aus dem zweiten Lagerbereich 12 anzudienen. Die Umladestation 25 umfasst auch eine zweite Umlade-Andienposition 27, an welche ein dritter Abschnitt 14c der ersten Fördertechnik gekoppelt ist, um das zweite Ladehilfsmittel 11b der ersten Ladehilfsmittel anzudienen und um das Umladen der Auftragsware 3 der zweiten Auftragszeile 7 in das zweite Ladehilfsmittel 11b der ersten Ladehilfsmittel zu ermöglichen.

Bei der Ausführung eines Kommissionierauftrags wird das erste Ladehilfsmittel 11a der ersten Ladehilfsmittel mit der Auftragsware 2 der ersten Auftragszeile 6 zu der Kommissionierstation 16 gefördert und an der ersten Kommissionier-Andienposition 17 angedient. Weiterhin wird die Hängetasche 13 mit der Auftragsware 3 der zweiten Auftragszeile 7 zu der Umladestation 25 gefördert und an der ersten Umlade-Andienposition 26 angedient. Die Auftragsware 3 der zweiten Auftragszeile 7 wird danach in oder auf das zweite Ladehilfsmittel 11b der ersten Ladehilfsmittel verladen, welches an der zweiten Umlade-Andienposition 27 bereitgestellt ist. Insbesondere können die Auftragswaren 3 der zweiten Auftragszeilen 7 im zweiten Ladehilfsmittel 11b der ersten Ladehilfsmittel gemischt vorliegen, auch wenn die Auftragswaren 3 der zweiten Auftragszeilen 7 in den Hängetaschen 13 oder in Aufbewahrungsbereichen in den Hängetaschen 13 artikelrein gelagert sind. In Folge wird das zweite Ladehilfsmittel 11b der ersten Ladehilfsmittel mit der Auftragsware 3 der zweiten Auftragszeile 7 zu der Kommissionierstation 16 gefördert und an der weiteren ersten Kommissionier-Andienposition 17' angedient. Schließlich wird die Auftragsware 2 der ersten Auftragszeile 6 und die Auftragsware 3 der zweiten Auftragszeile 7 in oder auf das Zielladehilfsmittel 4 verladen, welches an der dritten Kommissionier-Andienposition 20 bereitgestellt ist.

Die Umladestation 25 kann als Zusammenführungspunkt A angesehen werden, an dem die zweite Fördertechnik 15a in die erste Fördertechnik 14c mündet. Dementsprechend wird an der Kommissionierstation 16 ein erstes Ladehilfsmittel 11a der ersten Ladehilfsmittel mit der Auftragsware 2 der ersten Auftragszeile 6 und ein zweites Ladehilfsmittel 11b der ersten Ladehilfsmittel mit der Auftragsware 3 der zweiten Auftragszeile 7 angedient.

In dem oben beschriebenen Fall b) ist die Umladestation 25 im Verlauf des ersten Abschnitts 15a der zweiten Fördertechnik angeordnet. Denkbar wäre aber auch eine Umkehrung der Verhältnisse, das heißt eine Anordnung der Umladestation 25 im Verlauf des ersten Abschnitts 14a der ersten Fördertechnik.

Dementsprechend wäre die Umladestation 25, welche das Umladen der Auftragsware 2 der ersten Auftragszeile 6 in eine der an der Umladestation 25 bereitgestellte zweite Hängetasche 13 der Hängetaschen ermöglicht im Verlauf des ersten Abschnitts 14a der ersten Fördertechnik angeordnet (Fall a). Die erste Umlade-Andienposition 26, an welcher das erste Ladehilfsmittel 11 mit der Auftragsware 2 der ersten Auftragszeile 6 aus dem ersten Lagerbereich 10 angedient wird, wäre demnach an den ersten Abschnitt 14a der ersten Fördertechnik gekoppelt. Die zweite Umlade-Andienposition 27, an welcher die zweite Hängetasche 13 der Hängetaschen zur Aufnahme der Auftragsware 2 der ersten Auftragszeile 6 angedient wird, wäre demnach an einen dritten Abschnitt der zweiten Fördertechnik gekoppelt. Dementsprechend würde das erste Ladehilfsmittel 11 mit der Auftragsware 2 der ersten Auftragszeile 6 zu der Umladestation 25 gefördert werden, die Auftragsware 2 der ersten Auftragszeile 6 danach in eine dort bereitgestellte zweite Hängetasche 13 der Hängetaschen verladen werden, die zweite Hängetasche 13 der Hängetaschen mit der Auftragsware 2 der ersten Auftragszeile 6 zu der Kommissionierstation 16 gefördert werden, und danach die Auftragsware 2 der ersten Auftragszeile 6 und die Auftragsware 3 der zweiten Auftragszeile 7 in oder auf dass dort bereitgestellte Zielladehilfsmittel 4 verladen werden.

Die Umladestation 25 kann in diesem Fall als Zusammenführungspunkt A angesehen werden, an dem die erste Fördertechnik 14a in die zweite Fördertechnik mündet. Dementsprechend wird an der Kommissionierstation 16 eine erste Hängetasche 13 der Hängetaschen mit der Auftragsware 3 der zweiten Auftragszeile 7 und eine zweite Hängetasche 13 der Hängetaschen mit der Auftragsware 2 der ersten Auftragszeile 6 angedient.

Insbesondere können die Auftragswaren 2 der ersten Auftragszeilen 6 in der zweiten Hängetasche 13 der Hängetaschen gemischt vorliegen, auch wenn die Auftragswaren 2 der ersten Auftragszeilen 6 in den ersten Ladehilfsmitteln 11 oder in Aufbewahrungsbereichen in den ersten Ladehilfsmitteln 11 artikelrein gelagert sind.

In dem in Fig. 3 dargestellten Lager- und Kommissioniersystem 1c wird das erste Ladehilfsmittel 11a der ersten Ladehilfsmittel mit der Auftragsware 2 der ersten Auftragszeile 6 an der ersten Kommissionier-Andienposition 17 angedient und das zweite Ladehilfsmittel 11b der ersten Ladehilfsmittel mit der Auftragsware 3 der zweiten Auftragszeile 7 an der weiteren ersten Kommissionier-Andienposition 17'. Es gibt also zwei voneinander getrennte erste Kommissionier-Andienpositionen 17 und 17'. Denkbar wäre alternativ aber auch, dass der erste Abschnitt 14a der ersten Fördertechnik und der dritte Abschnitt 14c der ersten Fördertechnik zusammengeführt werden und demnach nur eine erste Kommissionier-Andienposition 17 für das erste Ladehilfsmittel 11a der ersten Ladehilfsmittel mit der Auftragsware 2 der ersten Auftragszeile 6 und das zweite Ladehilfsmittel 11b der ersten Ladehilfsmittel mit der Auftragsware 3 der zweiten Auftragszeile 7 vorgesehen ist.

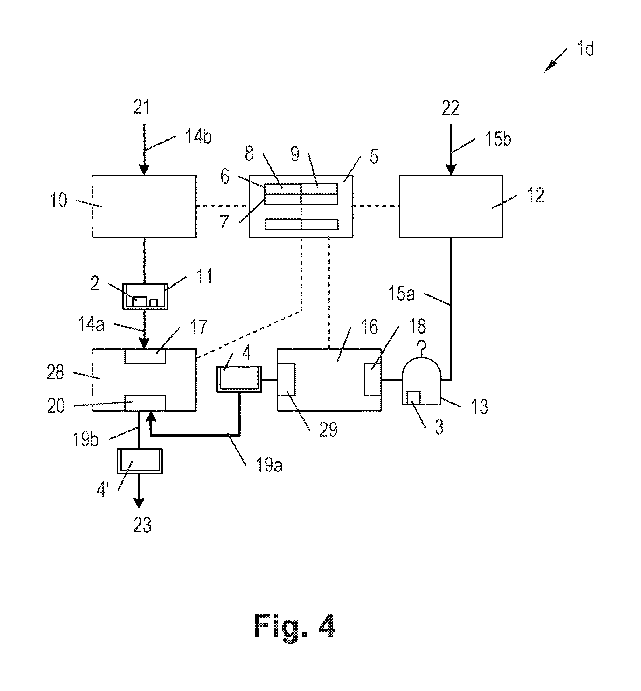

Die Fig. 4 zeigt nun ein weiteres Lager- und Kommissioniersystem 1d, welches dem in der Fig. 1 dargestellten Lager- und Kommissioniersystem 1a sehr ähnlich ist. Im Unterschied dazu weist das Lager- und Kommissioniersystem 1d eine erste Kommissionierstation 16 im Verlauf des ersten Abschnitts 15a der zweiten Fördertechnik auf, welche das Umladen der Auftragsware 3 der zweiten Auftragszeile 7 in oder auf ein an der ersten Kommissionierstation 16 bereitgestelltes und über einen ersten Abschnitt 19a der dritten Fördertechnik transportiertes Zielladehilfsmittel 4, 4' ermöglicht. Das Bezugszeichen 4 bezeichnet das Zielladehilfsmittel in der Fig. 4 dabei zu einem ersten Zeitpunkt und das Bezugszeichen 4' dasselbe Zielladehilfsmittel zu einem zweiten, späteren Zeitpunkt. Weiterhin umfasst das Lager- und Kommissioniersystem 1d eine zweite Kommissionierstation 28 im Verlauf des ersten Abschnitts 14a der ersten Fördertechnik und im Verlauf des ersten Abschnitts 19a und des zweiten Abschnitts 19b der dritten Fördertechnik, welcher das Verladen der Auftragsware 2 der ersten Auftragszeile 6 in oder auf das besagte Zielladehilfsmittel 4, 4' ermöglicht (Fall ii).

Die zweite Kommissionierstation 28 weist dazu eine erste Kommissionier-Andienposition 17 auf, an welche der erste Abschnitt 14a der ersten Fördertechnik gekoppelt ist, um das erste Ladehilfsmittel 11 mit der Auftragsware 2 der ersten Auftragszeile 6 anzudienen. Die erste Kommissionierstation 16 weist eine zweite Kommissionier-Andienposition 18 auf, an welche der erste Abschnitt 15a der zweiten Fördertechnik gekoppelt ist, um die Hängetasche 13 mit der Auftragsware 3 der zweiten Auftragszeile 7 anzudienen. Die zweite Kommissionierstation 28 weist darüber hinaus eine dritte Kommissionier-Andienposition 20 auf, an welche der erste Abschnitt 19a und der zweite Abschnitt 19b der dritten Fördertechnik gekoppelt ist, um das Zielladehilfsmittel 4, 4' anzudienen und um das Umladen der Auftragsware 2 der ersten Auftragszeile 6 an der zweiten Kommissionierstation 28 in oder auf das Zielladehilfsmittel 4, 4' zu ermöglichen. Schließlich weist die erste Kommissionierstation 16 eine vierte Kommissionier-Andienposition 29 auf, an welche der erste Abschnitt 19a der dritten Fördertechnik gekoppelt ist, um das Zielladehilfsmittel 4, 4' anzudienen und um das Umladen der Auftragsware 3 der zweiten Auftragszeile 7 an der ersten Kommissionierstation 16 in oder auf das Zielladehilfsmittel 4, 4' zu ermöglichen.

Bei der Ausführung eines Kommissionierauftrags wird die Hängetasche 13 mit der Auftragsware 3 der zweiten Auftragszeile 7 zu der ersten Kommissionierstation 16 gefördert und an der zweiten Kommissionier-Andienposition 18 bereitgestellt. Danach wird die Auftragsware 3 der zweiten Auftragszeile 7 in oder auf das Zielladehilfsmittel 4, 4' geladen, das an der vierten Kommissionier-Andienposition 29 bereitgestellt ist. Insbesondere können die Auftragswaren 3 der zweiten Auftragszeilen 7 im Zielladehilfsmittel 4, 4' gemischt vorliegen, auch wenn die Auftragswaren 3 der zweiten Auftragszeilen 7 in den Hängetaschen 13 oder in Aufbewahrungsbereichen in den Hängetaschen 13 artikelrein gelagert sind. In Folge wird das Zielladehilfsmittel 4, 4' mit der Auftragsware 3 der zweiten Auftragszeile 7 zu der zweiten Kommissionierstation 28 gefördert und an der dritten Kommissionier-Andienposition 20 bereitgestellt. Ebenso wird das erste Ladehilfsmittel 11 mit der Auftragsware 2 der ersten Auftragszeile 6 zu der zweiten Kommissionierstation 28 gefördert und an der ersten Kommissionier-Andienposition 17 bereitgestellt. In Folge wird die Auftragsware 2 der ersten Auftragszeile 6 in oder auf das an der dritten Kommissionier-Andienposition 20 bereitgestellte Zielladehilfsmittel 4, 4' verladen.

In dem oben beschriebenen Fall ii) ist die erste Kommissionierstation 16 im Verlauf des ersten Abschnitts 15a der zweiten Fördertechnik angeordnet. Denkbar wäre aber auch eine Umkehrung der Verhältnisse, das heißt eine Anordnung der ersten Kommissionierstation 16 im Verlauf des ersten Abschnitts 14a der ersten Fördertechnik.

Dementsprechend wäre die erste Kommissionierstation 16, welche das Umladen der Auftragsware 2 der ersten Auftragszeile 6 in oder auf ein an der ersten Kommissionierstation 16 bereitgestelltes und durch eine dritte Fördertechnik 19a transportiertes Zielladehilfsmittel 4, 4' ermöglicht, im Verlauf des ersten Abschnitts 14a der ersten Fördertechnik angeordnet und die zweite Kommissionierstation 28, welche das Verladen der Auftragsware 3 der zweiten Auftragszeile 7 in oder auf das Zielladehilfsmittel 4, 4' ermöglicht, im Verlauf des ersten Abschnitts 15a der zweiten Fördertechnik und im Verlauf des ersten Abschnitts 19a und des zweiten Abschnitts 19b der dritten Fördertechnik angeordnet (Fall i).

Die erste Kommissionierstation 16 würde in diesem Fall eine erste Kommissionier-Andienposition 17 aufweisen, an welche der erste Abschnitt 14a der ersten Fördertechnik gekoppelt ist, um das erste Ladehilfsmittel 11 mit der Auftragsware 2 der ersten Auftragszeile 6 anzudienen. Die zweite Kommissionierstation 28 würde dementsprechend eine zweite Kommissionier-Andienposition 18 aufweisen, an welche der erste Abschnitt 15a der zweiten Fördertechnik gekoppelt ist, um die Hängetasche 13 mit der Auftragsware 3 der zweiten Auftragszeile 7 anzudienen. Die zweite Kommissionierstation 28 würde darüber hinaus eine dritte Kommissionier-Andienposition 20 aufweisen, an welche die dritte Fördertechnik 19a, 19b gekoppelt ist, um das Zielladehilfsmittel 4, 4' anzudienen und um das Umladen der Auftragsware 3 der zweiten Auftragszeile 7 an der zweiten Kommissionierstation 28 in oder auf das Zielladehilfsmittel 4, 4' zu ermöglichen. Schließlich würde die erste Kommissionierstation 16 eine vierte Kommissionier-Andienposition 29 aufweisen, an welche der erste Abschnitt 19a der dritten Fördertechnik gekoppelt ist, um das Zielladehilfsmittel 4, 4' anzudienen und um das Umladen der Auftragsware 2 der ersten Auftragszeile 6 an der ersten Kommissionierstation 16 in oder auf das Zielladehilfsmittel 4, 4' zu ermöglichen.

Bei der Ausführung eines Kommissionierauftrags würde das erste Ladehilfsmittel 11 mit der Auftragsware 2 der ersten Auftragszeile 6 zu der ersten Kommissionierstation 16 gefördert und an der ersten Kommissionier-Andienposition 17 angedient werden. In Folge würde die Auftragsware 2 der ersten Auftragszeile 6 in oder auf das Zielladehilfsmittel 4, 4' verladen werden, das an der vierten Kommissionier-Andienposition 29 angedient ist. Das Zielladehilfsmittel 4, 4' mit der Auftragsware 2 der ersten Auftragszeile 6 würde dann zur zweiten Kommissionierstation 28 gefördert und an der dritten Kommissionier-Andienposition 20 angedient werden. Weiterhin würde die Hängetasche 13 mit der Auftragsware 3 der zweiten Auftragszeile 7 zu der zweiten Kommissionierstation 28 gefördert und an einer zweiten Kommissionier-Andienposition 18 angedient werden. In Folge würde die Auftragsware 3 der zweiten Auftragszeile 7 in oder auf das an der dritten Kommissionier-Andienposition 20 bereitgestellte Zielladehilfsmittel 4, 4' verladen werden.

Insbesondere können die Auftragswaren 2 der ersten Auftragszeilen 6 im Zielladehilfsmittel 4, 4' gemischt vorliegen, auch wenn die Auftragswaren 2 der ersten Auftragszeilen 6 in den ersten Ladehilfsmitteln 11 oder in Aufbewahrungsbereichen in den ersten Ladehilfsmitteln 11 artikelrein gelagert sind.

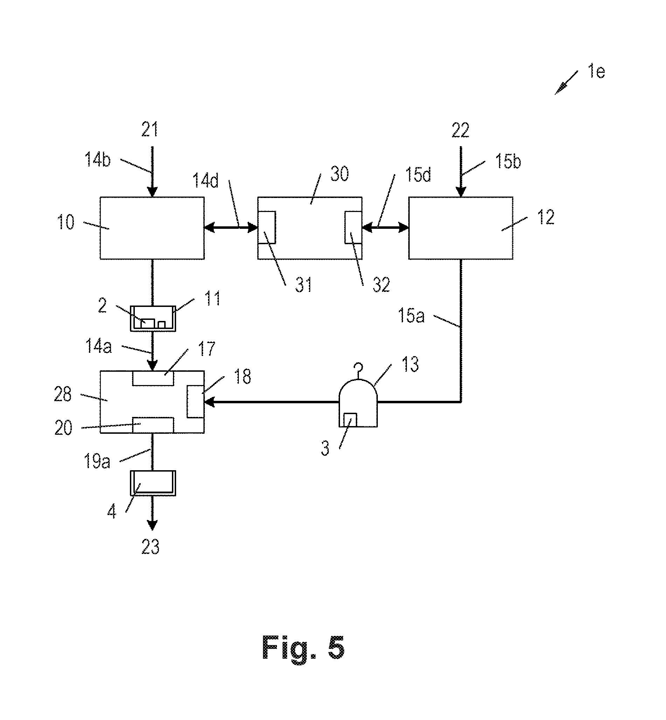

Die Fig. 5 zeigt nun ein Lager- und Kommissioniersystem 1e, das dem in der Fig. 1 dargestellten Lager- und Kommissioniersystem 1a wiederum sehr ähnlich ist. Im Unterschied dazu umfasst das Lager- und Kommissioniersystem 1e einen vierten Abschnitt 14d der ersten Fördertechnik und einen vierten Abschnitt 15d der zweiten Fördertechnik, welche den ersten Lagerbereich 10 und den zweiten Lagerbereich 12 miteinander verbinden. Im Verlauf des vierten Abschnitts 14d der ersten Fördertechnik und des vierten Abschnitts 15d der zweiten Fördertechnik ist eine Lager-Umladestation 30 angeordnet. Die Lager-Umladestation 30 ermöglicht das Umladen A) einer Ware aus dem ersten Lagerbereich 10 in eine an der Lager-Umladestation 30 bereitgestellte Hängetasche 13 und/oder das Umladen B) einer Ware aus dem zweiten Lagerbereich 12 in oder auf ein an der Lager-Umladestation 30 bereitgestelltes, erstes Ladehilfsmittel 11.

Die Lager-Umladestation 30 umfasst dazu eine erste Lager-Umlade-Andienposition 31, an welche der vierte Abschnitt 14d der ersten Fördertechnik gekoppelt ist, um das erste Ladehilfsmittel 11 mit der Ware aus dem ersten Lagerbereich 10 anzudienen, und eine zweite Lager-Umlade-Andienposition 32, an welche der vierte Abschnitt 15d der zweiten Fördertechnik gekoppelt ist, um die Hängetasche 13 anzudienen.

Beim Umlagern wird im Fall A) ein erstes Ladehilfsmittel 11 mit einer Ware aus dem ersten Lagerbereich 10 ausgelagert, zu der Lager-Umladestation 30 gefördert und an der ersten Lager-Umlade-Andienposition 31 angedient. Danach wird die Ware in eine Hängetasche 13 verladen, welche an der zweiten Lager-Umlade-Andienposition 32 bereitgestellt ist. In Folge wird die Hängetasche 13 in den zweiten Lagerbereich 12 gefördert und dort eingelagert. Im Fall B) wird beim Umlagern eine Hängetasche 13 mit einer Ware aus dem zweiten Lagerbereich 12 ausgelagert, zu der Lager-Umladestation 30 gefördert und an der zweiten Lager-Umlade-Andienposition 32 angedient. Danach wird die Ware in ein erstes Ladehilfsmittel 11 verladen, welches an der ersten Lager-Umlade-Andienposition 31 bereitgestellt ist. In Folge wird das erste Ladehilfsmittel 11 in den ersten Lagerbereich 10 gefördert und dort eingelagert.

In der Fig. 5 ist der Auftragsrechner 5 der besseren Darstellbarkeit halber nicht eingezeichnet. Selbstverständlich kann dieser aber auch in dem in Fig. 5 dargestellten Lager- und Kommissioniersystem 1e vorhanden sein.

In den vorgestellten Beispielen fungiert das Zielladehilfsmittel 4, 4' als Versandladehilfsmittel und dient damit dem Abtransport der Auftragsware 2 der ersten Auftragszeile 6 und der Auftragsware 3 der zweiten Auftragszeile 7 aus dem Lager- und Kommissioniersystem 1a. Generell ist bei allen Ausführungsvarianten auch vorstellbar, dass die erste Auftragsware 2 der ersten Auftragszeile 6 und/oder die zweite Auftragsware 3 der zweiten Auftragszeile 7 in oder auf ein Zwischenladehilfsmittel geladen wird, bevor sie in oder auf das Versandladehilfsmittel 4, 4' umgeladen wird. Dieses Zwischenladehilfsmittel kann, wie das Versandladehilfsmittel 4, 4', insbesondere als Behälter, Karton, Tablar, Palette, Beutel (insbesondere ein "Polybag"), Tasche, Sack, Hängetasche oder Regal ausgebildet sein.

An dieser Stelle wird auch darauf hingewiesen, dass nicht alle ersten Ladehilfsmittel 11, nicht alle Hängetaschen 13 und nicht alle Zielladehilfsmittel 4, 4' jeweils gleich ausgebildet sein müssen, sondern innerhalb der jeweiligen Kategorien unterschiedliche Ausführungsformen vorgesehen sein können.

Vorteilhaft ist es auch, wenn Kommissionieraufträge, die Auftragswaren 2 der ersten Auftragszeile 6 und Auftragswaren 3 der zweiten Auftragszeile 7 umfassen, in ein Zwischenladehilfsmittel geladen werden und Kommissionieraufträge, die nur Auftragswaren 2 der ersten Auftragszeile 6 oder nur Auftragswaren 3 der zweiten Auftragszeile 7 umfassen, direkt in ein Versandladehilfsmittel 4, 4' geladen werden.

Fig. 6 zeigt ein Beispiel für ein erstes Ladehilfsmittel 11c, das als mobiles Regal ausgebildet ist. Das mobile Regal 11c umfasst in übereinanderliegenden Lagerebenen Regalböden jeweils zumindest einen Aufnahmeplatz 33, auf welchem zumindest eine Ware / Auftragsware 2 zumindest einer ersten Auftragszeile 6 (nicht dargestellt), bevorzugt eine Vielzahl an Waren / Auftragswaren 2 zumindest einer ersten Auftragszeile 6, abgelegt werden kann/können. Zudem weist das mobile Regal 11c Füße 34 auf. Daher kann es beispielsweise mit einer Gabel eines Gabelstaplers oder eines autonomen Flurförderfahrzeugs (siehe Fig. 8) angehoben und transportiert werden. Denkbar wäre auch, dass das Regal 11c Rollen anstelle der Füße 34 aufweist, um es leichter transportieren zu können. Denkbar wäre schließlich auch dass das in der Fig. 6 dargestellte Regal nicht als mobiles Regal 11c eingesetzt wird, sondern als ortsfestes Regal im ersten Lagerbereich 10.

Figur 7 zeigt ein eine beispielhafte Anordnung mit einem Boden 35, daran angeordneten Fü-ßen 34, seitlich am Boden 35 aufragenden Seitenwänden 36 und einer zwischen den Seitenwänden angeordneten Lager-Hängebahn beziehungsweise Hängestange 37.

Aufgrund der Bauweise kann die dargestellte Anordnung beispielsweise mit einer Gabel eines Gabelstaplers oder eines autonomen Flurförderfahrzeugs (siehe Fig. 8) angehoben und transportiert werden. Die Lager-Hängebahn / Hängestange 37 ist daher mobil beziehungsweise transportabel ausgebildet. Denkbar wäre auch, dass die Anordnung Rollen anstelle der Fü-ße 34 aufweist, um sie leichter transportieren zu können. Denkbar wäre schließlich auch dass die in der Fig. 7 dargestellte Anordnung nicht mobil ist, sondern im zweiten Lagerbereich 12 ortsfest installiert ist.

Fig. 8 zeigt nun ein schematisch dargestelltes Beispiel für ein autonomes Flurförderfahrzeug 38. Das autonome Flurförderfahrzeug 38 weist ein Fahrgestell 39 auf, an dem Räder 40, 41 drehbar gelagert sind. Zumindest eines der Räder 40 ist mit einem Antrieb 42 gekuppelt, und zumindest eines der Räder 40 ist lenkbar. Nach gezeigter Ausführung sind beide Räder 40 mit dem Antrieb 42 gekuppelt und werden durch diesen angetrieben, und beide Räder 41 sind lenkbare Räder. Das Flurförderfahrzeug 38 kann aber auch nur drei Räder 40, 41 umfassen, wovon die Räder 40 angetrieben sind und das Rad 41 lenkbar ist. Zudem umfasst das autonome Flurförderfahrzeug 38 eine Transportplattform 43, auf der die zu transportierenden Auftragswaren 2, 3, Waren, mobile Regale 11c oder mobile Lager-Hängebahnen 37 temporär aufgenommen werden können. Nach gezeigter Ausführung ist die Transportplattform 43 relativ gegenüber dem Fahrgestell 39 verstellbar. Das autonome Flurförderfahrzeug 38 kann hierfür eine Vertikalführung 44 mit der daran befestigten und vertikal verfahrbaren Transportplattform 43 aufweisen, so wie das in der Fig. 8 dargestellt ist. Die Transportplattform 43 kann auch seitlich beziehungsweise nach vorne verschiebbar sein, um Auftragswaren 2, 3, Waren, mobile Regale 11c oder mobile Lager-Hängebahnen 37 leichter aufnehmen oder absetzen zu können. Die Transportplattform 43 könnte aber auch eine fixe ebene Fläche am autonomen Flurförderfahrzeug 38 sein. Weiterhin umfasst ein autonomes Flurförderfahrzeug 38 auch eine Fahrsteuerung 45 zum Empfang von Befehlen von einer übergeordneten Steuerung 46 (welche beispielsweise vom Auftragsrechner 5 umfasst sein kann) und zum Steuern/Regeln der Bewegungen des autonomen Flurförderfahrzeugs 38. Schließlich umfasst ein autonomes Flurförderfahrzeug 38 Sensoren 47a, 47b zum Erfassen der Umgebung des autonomen Flurförderfahrzeugs 38 und zur Orientierung im Raum. Das in der Fig. 8 dargestellte autonome Flurförderfahrzeug 38 weist lenkbare Räder 41 auf. Diese können aber entfallen, sofern das autonome Flurförderfahrzeug 38 über Räder verfügt, mit denen auch eine Seitwärtsbewegung ausgeführt werden kann (z.B. Mecanum-Räder). Denkbar wäre auch, dass anstelle einer Transportplattform 43 oder zusätzlich dazu eine Hängebahn / Hängestange 37 vorgesehen ist, um Auftragswaren 3 aus dem zweiten Lagerbereich 12 auszulagern und Waren in den zweiten Lagerbereich 12 einzulagern.

Die Fig. 9 zeigt ein Lager- und Kommissioniersystem 1f in etwas detaillierterer Darstellung. Das Lager- und Kommissioniersystem 1f weist ein Gebäude 48 auf, sowie ein Tor am ersten Warenübernahmebereich 21 und ein Tor am zweiten Warenübernahmebereich 22.

Im Bereich des ersten Warenübernahmebereichs 21 befinden sich drei zweite Abschnitte 14b, 14b' und 14b" der ersten Fördertechnik. Der zweite Abschnitt 14b der ersten Fördertechnik verbindet den ersten Warenübernahmebereich 21 mit einem Roboter 49a. Die zweiten Abschnitte 14b' und 14b" der ersten Fördertechnik verbinden den Roboter 49a mit dem ersten Lagerbereich 10, der mehrere Lagerregale 50 sowie Regalbediengeräte 51a und 51b umfasst, die in zwischen den Lagerregalen 50 verlaufenden Regalgassen verfahren. An jenem Ende der Regalgassen, welches den zweiten Abschnitten 14b' und 14b" der ersten Fördertechnik gegenüberliegt, ist ein erster Abschnitt 14a der ersten Fördertechnik angeordnet, der in diesem Beispiel ringförmig ausgebildet ist und zu einem weiteren Roboter 49b führt. Am Ende des ersten Abschnitts 14a der ersten Fördertechnik ist eine erste Kommissionier-

Andienposition 17 angeordnet. Gemäß den oben beschriebenen Ausführungen umfasst die erste Kommissionierstation 16 den Roboter 49b, mit dem der Kommissioniervorgang automatisch durchgeführt werden kann. Alternativ kann die erste Kommissionierstation 16 für eine Kommissionierperson vorgesehen sein, welche den Kommissioniervorgang manuell (insbesondere rechnergestützt) durchführen kann.

Im Bereich des zweiten Warenübernahmebereichs 22 befinden sich zwei zweite Abschnitte 15b und 15b' der zweiten Fördertechnik, welche den zweiten Warenübernahmebereich 22 mit dem zweiten Lagerbereich 12 verbinden. Der zweite Lagerbereich 12 umfasst mehrere ortsfeste Lager-Hängebahnen 52. Am unteren Ende des zweiten Lagerbereichs 12 ist ein erster Abschnitt 15a der zweiten Fördertechnik angeordnet, der ebenfalls zum Roboter 49b führt. Am Ende des ersten Abschnitts 15a der zweiten Fördertechnik ist eine zweite Kommissionier-Andienposition 18 angeordnet.

Im Wirkungsbereich des Robotersystems 49b ist auch eine dritte Fördertechnik 19 angeordnet, welche das Robotersystem 49b fördertechnisch mit dem ersten Warenübergabebereich 23a verbindet. Am Beginn der dritten Fördertechnik 19 ist eine dritte Kommissionier-Andienposition 20 angeordnet.

Im Bereich des Lager- und Kommissioniersystems 1f können sich auch mehrere autonome Flurförderfahrzeuge 38a..38f befinden. Im Bereich der Fahrfläche der autonomen Flurförderfahrzeuge 38a..38f ist schließlich eine weitere erste Kommissionier-Andienposition 17' angeordnet.

Die Funktion des in der Fig. 9 dargestellten Lager- und Kommissioniersystems 1f ist nun wie folgt: Waren 53a..53d werden am ersten Warenübernahmebereich 21 angeliefert, auf den zweiten Abschnitt 14b der ersten Fördertechnik geladen, vom Robotersystem 48a vom zweiten Abschnitt 14b der ersten Fördertechnik auf die zweiten Abschnitte 14b' und 14b" der ersten Fördertechnik umgeladen, konkret in ein erstes Ladehilfsmittel 11a, und mithilfe der Regalbediengeräte 51a und 51b in die Lagerregale 50 eingelagert. Wie in der Figur 9 erkennbar ist, können die Waren 53a..53d vereinzelt oder in Anliefer-Warenträgern 54 angeliefert werden.

Im Zuge des Einlagerungsvorgangs können die Waren 53a..53d vereinzelt werden, dies muss aber nicht sein. Auch ist das Umladen in ein erstes Ladehilfsmittel 11a nicht zwingend, sondern es wäre auch denkbar, den Anliefer-Warenträger 54 direkt im ersten Lagerbereich 10 einzulagern.

In ganz ähnlicher Weise werden Waren in den zweiten Lagerbereich 12 eingelagert. Dazu werden die Waren vom zweiten Warenübernahmebereich 22 auf die zweiten Abschnitte 15b und 15b' der zweiten Fördertechnik übergeben. Die zweiten Abschnitte 15b und 15b' der zweiten Fördertechnik sind als Transport-Hängebahnen ausgebildet und transportieren die Waren in den zweiten Lagerbereich 12, wo sie auf Lager-Hängebahnen 52 hängend gelagert werden.

Ist ein Kommissionierauftrag abzuarbeiten, werden die dem Auftrag zugeordneten ersten Ladehilfsmittel 11b mit den Auftragswaren 2 der ersten Auftragszeile 6 mithilfe zumindest eines Regalbediengeräts 51a und 51b aus zumindest einem Lagerregal 50 ausgelagert und auf den ersten Abschnitt 14a der ersten Fördertechnik übergeben. In Folge werden die Auftragswaren 2 der ersten Auftragszeile 6 mit dem ersten Ladehilfsmittel 11b auf dem ersten Abschnitt 14a der ersten Fördertechnik zum Roboter 49b transportiert und an der ersten Kommissionier-Andienposition 17 angedient. In Folge werden die Auftragswaren 2 der ersten Auftragszeile 6 vom Roboter 49b auf ein Zielladehilfsmittel 4 umgeladen, das an der dritten Kommissionier-Andienposition 20 angedient ist.

Weiterhin werden entsprechend des genannten Kommissionierauftrags Hängetaschen 13 mit den Auftragswaren 3 der zweiten Auftragszeile 7 aus dem zweiten Lagerbereich 12 ausgelagert und über den ersten Abschnitt 15a der zweiten Fördertechnik zum Robotersystem 49b transportiert und an der zweiten Kommissionier-Andienposition 18 angedient. In Folge werden die Auftragswaren 3 der zweiten Auftragszeile 7 ebenfalls in das Zielladehilfsmittel 4 verladen. Schließlich wird das Zielladehilfsmittel 4 auf der dritten Fördertechnik 19 zum ersten Warenübergabebereich 23a gefördert.

Mithilfe der autonomen Flurförderfahrzeuge 38a..38f kann ein drittes Ladehilfsmittel 11c der ersten Ladehilfsmittel mit Auftragswaren 2 der ersten Auftragszeile 6 zum Roboter 49b transportiert und an der weiteren ersten Kommissionier-Andienposition 17' angedient werden, so wie das in der Fig. 9 für das autonome Flurförderfahrzeug 38f dargestellt ist. Auch diese Auftragswaren 2 der ersten Auftragszeile 6 können vom Roboter 49b auf das Zielladehilfsmittel 4 umgeladen werden.

Mithilfe der autonomen Flurförderfahrzeuge 38a..38f können auch dritte Auftragswaren 55a, 55b zum zweiten Warenübergabebereich 23b transportiert werden. In dem dargestellten Beispiel werden diese dritten Auftragswaren 55a, 55b am ersten Warenübernahmebereich 21 oder zweiten Warenübernahmebereich 22 direkt von dem Flurförderfahrzeug 38a..38f beziehungsweise den Flurförderfahrzeugen 38a..38f aufgenommen (und nicht aus dem ersten Lagerbereich 10 oder den zweiten Lagerbereich 12 entnommen). Diese dritten Auftragswaren 55a, 55b bilden in dem gezeigten Beispiel daher sogenannte "Cross-Docking-Waren".

Insbesondere kann der zweite Warenübergabebereich 23b für die Kommissionierung von Auftragswaren 55a, 55b für den Zwischenhandel oder Endverkäufer vorgesehen sein ("Retail") und der erste Warenübergabebereich 23a für die Kommissionierung von Auftragswaren 2, 3 für den Endkunden ("E-Commerce). Denkbar ist weiterhin, dass das Lager- und Kommissioniersystem 1f auch unterschiedliche, speziell auf die Bedürfnisse des Zwischenhandels / Endverkäufers und des Endkunden zugeschnittene Kommissionierstationen 16 aufweist, die über die erste Fördertechnik an den ersten Lagerbereich 10 und/oder die zweite Fördertechnik an den zweiten Lagerbereich 12 angekoppelt sind. Aufträge des Zwischenhandels / Endverkäufers sind umfangreich und beinhalten häufig viele Auftragswaren 2, 3 gleicher Warentype 8, wohingegen Aufträge der Endkunden weniger umfangreich sind und wenige Auftragswaren 2, 3 gleicher Warentype 8 beinhalten.

Selbstverständlich wäre es aber auch möglich, dass die autonomen Flurförderfahrzeuge 38a..38f zum Einlagern von Waren in den ersten Lagerbereich 10 oder den zweiten Lagerbereich 12 und/oder zum Auslagern von Auftragswaren 2 der ersten Auftragszeile 6 aus dem ersten Lagerbereich 10 oder Auftragswaren 3 der zweiten Auftragszeile 7 aus dem zweiten Lagerbereich 12 eingesetzt werden. Der erste Lagerbereich 10 und/oder der zweite Lagerbereich 12 ist/sind können dann mit entsprechenden Übergabestationen ausgestattet werden (nicht dargestellt), welche die Übergabe von ersten Ladehilfsmitteln 11 in den ersten Lagerbereich 10, die Übergabe von zweiten Ladehilfsmitteln 13 in den zweiten Lagerbereich 12, die Übernahme von ersten Ladehilfsmitteln 11 aus dem ersten Lagerbereich 10 oder die Übernahme von zweiten Ladehilfsmitteln 13 aus dem zweiten Lagerbereich 12 ermöglichen.

Denkbar wäre aber auch, dass die autonomen Flurförderfahrzeuge 38a..38f direkt auf den ersten Lagerbereich 10 und/oder den zweiten Lagerbereich 12 zugreifen können. Beispielsweise könnten die autonomen Flurförderfahrzeuge 38a..38f anstelle der Regalbediengeräte 51a und 51b in den Regalgassen zwischen den Regalen 50 verfahren und Waren in die Regale 50 einlagern und Auftragswaren 2 der ersten Auftragszeile 6 aus den Regalen 50 auslagern. In ähnlicher Weise könnten die autonomen Flurförderfahrzeuge 38a..38f auch Waren in die Lager-Hängebahnen 52 einlagern und Auftragswaren 3 der zweiten Auftragszeile 7 aus den Lager-Hängebahnen 52 auslagern.

Die erste Fördertechnik 14a, 14b, 14b', 14b" und/oder die zweite Fördertechnik 15a, 15b, 15b' kann nur ortsfeste Fördertechnik umfassen, nur autonome Flurförderfahrzeuge 38a..38f oder gemischt aufgebaut sein, das heißt sowohl ortsfeste Fördertechnik als auch autonome Flurförderfahrzeuge 38a..38f umfassen.

Die Ausbildung und Anordnung der ersten Fördertechnik 14a, 14b, 14b', 14b" und zweiten Fördertechnik 15a, 15b, 15b' in der Fig. 9 ist nur illustrativ zu sehen, und es sind auch andere Formen und Anordnungen der ersten Fördertechnik 14a, 14b, 14b', 14b" und zweiten Fördertechnik 15a, 15b, 15b' denkbar. Insbesondere könnte auch am ersten Warenübernahmebereich 21 eine ringförmige Förderstrecke angeordnet sein, oder es könnten lineare Förderstrecken am ersten Warenübergabebereich 23 vorgesehen sein.

An dieser Stelle wird auch angemerkt, dass die Roboter 49a und 49b nicht notwendigerweise als Gelenkarmroboter ausgeführt sein müssen, sondern beispielsweise auch als Portalroboter ausgebildet sein können. Weiterhin wird angemerkt, dass die von einem Roboter 49a, 49b automatisch durchgeführten Bewegungsabläufe grundsätzlich auch von einem Arbeiter und somit manuell durchgeführt werden können, insbesondere rechnergestützt. Der Roboter 49a, 49b kann dann entfallen. Auch eine gemischt manuell/automatische Betriebsweise wäre denkbar.

Das in der Fig. 9 dargestellte Lager- und Kommissioniersystem 1f umfasst eine Kommissionierstation 16 (beispielweise mit einem Roboter 49b), an welche der erste Abschnitt 14a der ersten Fördertechnik gekoppelt ist, um das erste Ladehilfsmittel 11b mit der Auftragsware 2 der ersten Auftragszeile 6 anzudienen, und an welche der erste Abschnitt 15a der zweiten Fördertechnik gekoppelt ist, um die Hängetasche 13 mit der Auftragsware 3 der zweiten Auftragszeile 7 anzudienen.

Das in der Fig. 9 dargestellte Lager- und Kommissioniersystem 1f ist daher strukturell sehr ähnlich zu dem in der Fig. 1 dargestellten Lager- und Kommissioniersystem 1a.

Selbstverständlich ist die in der Fig. 9 offenbarte technische Lehre aber auch uneingeschränkt auf die in den Fig. 2 bis 5 dargestellten Lager- und Kommissioniersysteme 1b..1e anwendbar. Insbesondere kann das in der Fig. 9 dargestellte Lager- und Kommissioniersystem 1f auch eine Sortiereinrichtung 24 und/oder eine Umladestation 25 und/oder eine zweite Kommissionierstation 28 und/oder eine Lager-Umladestation 30 aufweisen. Weiterhin wird angemerkt, dass der Auftragsrechner 5 in der Fig. 9 nicht explizit dargestellt ist, selbstverständlich aber auch Teil des Lager- und Kommissioniersystems 1f sein kann.

Zudem wird angemerkt, dass obwohl in den gezeigten Beispiele auf Hängetaschen 13 Bezug genommen wird, im zweiten Lagerbereich 12 und auf der zweite Fördertechnik 15a..15d auch Hängeträger mit Hängewaren gelagert und transportiert werden können.

Die Auftragswaren 2 der ersten Auftragszeile 6 und die Auftragswaren 3 der zweiten Auftragszeile 7 können generell gleichzeitig oder in beliebiger Abfolge hintereinander in das Zielladehilfsmittel 4 geladen werden. Denkbar ist insbesondere auch eine Variante, bei der zuerst eine Hängetasche 13 mit der Auftragsware 3 der zweiten Auftragszeile 7 ausgelagert wird und eine Auslagerung des ersten Ladehilfsmittels 11b erst dann ausgelöst wird, wenn die Hängetasche 13 mit der Auftragsware 3 der zweiten Auftragszeile 7 auf ihrem Weg zur Kommissionierstation 16 einen Meldepunkt (beispielweise in Form einer Sensorik) passiert. Dieser Meldepunkt kann in der Fig. 9 somit beispielsweise im Verlauf des ersten Abschnitts 15a der zweiten Fördertechnik liegen. Insbesondere kann der Meldepunkt im Verlauf des ersten Abschnitts 15a der zweiten Fördertechnik hinter einer Sortiereinrichtung 24 liegen (vergleiche Fig. 2). Der genannte Meldepunkt kann aber auch im Verlauf des dritten Abschnitts 14c der ersten Fördertechnik liegen, wenn eine Umladestation 25 vorgesehen ist (vergleiche Fig. 3), oder im Verlauf des ersten Abschnitts 19a der dritten Fördertechnik, wenn eine erste Kommissionierstation 16 und eine zweite Kommissionierstation 28 vorgesehen ist (vergleiche Fig. 4).

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

**Bezugszeichenaufstellung**

1a..1f    Lager- und Kommissioniersystem
2    Auftragsware der ersten Auftragszeile
3    Auftragsware der zweiten Auftragszeile
4, 4'    Zielladehilfsmittel
5    Auftragsrechner

6    erste Auftragszeile
7    zweite Auftragszeile
8    Warentype
9    Anzahl der zu kommissionierenden Waren
10    erster Lagerbereich

11, 11a..11c    erstes Ladehilfsmittel
12    zweiter Lagerbereich
13    zweites Ladehilfsmittel / Hängetasche
14a..14d    Abschnitt der ersten Fördertechnik
15a..15d    Abschnitt der zweiten Fördertechnik

16    (erste) Kommissionierstation
17, 17'    erste Kommissionier-Andienposition
18    zweite Kommissionier-Andienposition
19, 19a, 19b    dritte Fördertechnik
20    dritte Kommissionier-Andienposition

21    erster Warenübernahmebereich
22    zweiter Warenübernahmebereich
23, 23a..23b    Warenübergabebereich
24    Sortiereinrichtung
25    Umladestation

26    erste Umlade-Andienposition
27    zweite Umlade-Andienposition
28    zweite Kommissionierstation
29    vierte Kommissionier-Andienposition
30    Lager-Umladestation

31    erste Lager-Umlade-Andienposition

32    zweite Lager-Umlade-Andienposition
33    Aufnahmeplatz / Lagerplatz
34    Fuß
35    Boden

36    Seitenwand
37    mobile Lager-Hängebahn / Hängestange
38, 38a..38f    autonomes Flurförderfahrzeug
39    Fahrgestell
40    Rad (angetrieben)

41    Rad (lenkbar)
42    Antrieb
43    Transportplattform
44    Vertikalführung
45    Fahrsteuerung

46    Steuerung
47a, 47b    Sensor
48    Gebäude
49a, 49b    Roboter
50    Lagerregal

51a, 51b    Regalbediengerät
52    ortsfeste Lager-Hängebahn
53a..53d    Ware
54    Anliefer-Warenträger
55a, 55b    dritte Auftragswaren

A    Zusammenführungspunkt

**Patentansprüche**

**1.** Lager- und Kommissioniersystem (1a..1f) zum Kommissionieren von Auftragswaren (2, 3) in oder auf ein Zielladehilfsmittel (4, 4'), umfassend

- einen Auftragsrechner (5) zur Erfassung von Aufträgen zum Kommissionieren von Auftragswaren (2, 3) und zum Ermitteln der für einen Auftrag benötigten Auftragswaren (2, 3), wobei zumindest einer der Aufträge wenigstens eine erste Auftragszeile (6) und eine zweite Auftragszeile (7) umfasst und wobei jede Auftragszeile (6, 7) zumindest eine Auftragsware (2, 3) nach ihrer Warentype (8) und ihrer zu kommissionierenden Stückzahl (9) spezifiziert,
- einen ersten Lagerbereich (10) für erste Ladehilfsmittel (11, 11a..11c), welche unterschiedlich zu einer Hängetasche ausgebildet sind, wobei in oder auf einem der ersten Ladehilfsmittel (11, 11a..11c) eine Auftragsware (2) der ersten Auftragszeile (6) gelagert ist,
- einen zweiten Lagerbereich (12) für zweite Ladehilfsmittel (13), welche als Hängetaschen ausgebildet sind oder eine solche umfassen, wobei in einer der Hängetaschen (13) eine Auftragsware (3) der zweiten Auftragszeile (7) gelagert ist, wobei eine Hängetasche (13) einen Boden und/oder Wände aus flexiblen Material aufweist,

    eine erste Fördertechnik (14a..14d) zum Auslagern des ersten Ladehilfsmittels (11, 11a..11c) mit der Auftragsware (2) der ersten Auftragszeile (6) aus dem ersten Lagerbereich (10),
    eine zweite Fördertechnik (15a..15d) zum Auslagern der Hängetasche (13) mit der Auftragsware (3) der zweiten Auftragszeile (7) aus dem zweiten Lagerbereich (12) und

    - zumindest eine Kommissionierstation (16, 28), an welche die erste Fördertechnik (14a..14d) und/oder zweite Fördertechnik (15a..15d) gekoppelt ist, und welche das Verladen der Auftragsware (2) der ersten Auftragszeile (6) und der Auftragsware (3) der zweiten Auftragszeile (7) in oder auf ein dort bereitgestelltes Zielladehilfsmittel (4, 4') ermöglicht.

**2.** Lager- und Kommissioniersystem (1a..1f) nach Anspruch 1, **dadurch gekennzeichnet, dass** die erste Fördertechnik (14a..14d) und zweite Fördertechnik (15a..15d) an einem Zusammenführungspunkt (A) zusammengeführt wird, an dem die erste Fördertechnik (14a..14d) in die zweite Fördertechnik (15a..15d) oder die zweite Fördertechnik (15a..15d) in die erste Fördertechnik (14a..14d) mündet.

**3.** Lager- und Kommissioniersystem (1a..1f) nach Anspruch 1 oder 2, **dadurch gekennzeichnet, dass** die zumindest eine Kommissionierstation (16, 28)

    - eine erste Kommissionier-Andienposition (17, 17') aufweist, an welche die erste Fördertechnik (14a..14d) gekoppelt ist, um das erste Ladehilfsmittel (11, 11a..11c) mit der Auftragsware (2) der ersten Auftragszeile (6) anzudienen, und eine zweite Kommissionier-Andienposition (18) aufweist, an welche die zweite Fördertechnik (15a..15d) gekoppelt ist, um die Hängetasche (13) mit der Auftragsware (3) der zweiten Auftragszeile (7) anzudienen, oder
    - zumindest eine erste Kommissionier-Andienposition (17, 17') aufweist, an welche die erste Fördertechnik (14a..14d) gekoppelt ist, um ein erstes Ladehilfsmittel (11, 11a..11c) der ersten Ladehilfsmittel mit der Auftragsware (2) der ersten Auftragszeile (6) und ein zweites Ladehilfsmittel (11, 11a..11c) der ersten Ladehilfsmittel mit der Auftragsware (3) der zweiten Auftragszeile (7) anzudienen, oder
    - zumindest eine zweite Kommissionier-Andienposition (18) aufweist, an welche die zweite Fördertechnik (15a..15d) gekoppelt ist, um eine erste Hängetasche (13) der Hängetaschen mit der Auftragsware (3) der zweiten Auftragszeile (7) und eine zweite Hängetasche (13) der Hängetaschen mit der Auftragsware (2) der ersten Auftragszeile (6) anzudienen.

**4.** Lager- und Kommissioniersystem (1a..1f) nach einem der Ansprüche 1 bis 3, **gekennzeichnet durch**

    a) eine Umladestation (25) im Verlauf der ersten Fördertechnik (14a..14d), welche das Umladen der Auftragsware (2) der ersten Auftragszeile (6) in eine der an der Umladestation (25) bereitgestellte zweite Hängetasche (13) der Hängetaschen ermöglicht, und eine Kommissionierstation (16, 28) im Verlauf der zweiten Fördertechnik (15a..15d), welche das Verladen der Auftragsware (2) der ersten Auftragszeile (6) und der Auftragsware (3) der zweiten Auftragszeile (7) in oder auf ein dort bereitgestelltes Zielladehilfsmittel (4, 4') ermöglicht, oder
    b) eine Umladestation (25) im Verlauf der zweiten Fördertechnik (15a..15d), welche das Umladen der Auftragsware (3) der zweiten Auftragszeile (7) in oder auf ein an der Umladestation (25) bereitgestelltes zweites Ladehilfsmittel (11, 11a..11c) der ersten Ladehilfsmittel ermöglicht, und eine Kommissionierstation (16, 28) im Verlauf der ersten Fördertechnik (14a..14d), welche das Verladen der Auftragsware (2) der ersten Auftragszeile (6) und der Auftragsware (3) der zweiten Auftragszeile (7) in oder auf ein dort bereitgestelltes Zielladehilfsmittel (4, 4') ermöglicht.

**5.** Lager- und Kommissioniersystem (1a..1f) nach Anspruch 4, **dadurch gekennzeichnet, dass**

    im Fall a)

        - die Kommissionierstation (16, 28) zumindest eine zweite Kommissionier-Andienposition (18) aufweist, an welche die zweite Fördertechnik (15a..15d) gekoppelt ist, um eine erste Hängetasche (13) der Hängetaschen mit der Auftragsware (3) der zweiten Auftragszeile (7) und eine zweite Hängetasche (13) der Hängetaschen mit der Auftragsware (2) der ersten Auftragszeile (6) anzudienen, und
        - die Umladestation (25) eine erste Umlade-Andienposition (26) aufweist, an welche die erste Fördertechnik (14a..14d) gekoppelt ist, um das erste Ladehilfsmittel (11, 11a..11c) mit der Auftragsware (2) der ersten Auftragszeile (6) aus dem ersten Lagerbereich (10) anzudienen, und
- die Umladestation (25) eine zweite Umlade-Andienposition (27) aufweist, an welche die zweite Fördertechnik (15a..15d) gekoppelt ist, um die zweite Hängetasche (13) der Hängetaschen anzudienen und um das Umladen der Auftragsware (2) der ersten Auftragszeile (6) in die zweite Hängetasche (13) der Hängetaschen zu ermöglichen, oder

im Fall b)

- die Kommissionierstation (16, 28) zumindest eine erste Kommissionier-Andienposition (17, 17') aufweist, an welche die erste Fördertechnik (14a..14d) gekoppelt ist, um ein erstes Ladehilfsmittel (11, 11a..11c) der ersten Ladehilfsmittel mit der Auftragsware (2) der ersten Auftragszeile (6) und ein zweites Ladehilfsmittel (11, 11a..11c) der ersten Ladehilfsmittel mit der Auftragsware (3) der zweiten Auftragszeile (7) anzudienen, und
- die Umladestation (25) eine erste Umlade-Andienposition (26) aufweist, an welche die zweite Fördertechnik (15a..15d) gekoppelt ist, um die Hängetasche (13) mit der Auftragsware (3) der zweiten Auftragszeile (7) aus dem zweiten Lagerbereich (12) anzudienen, und
- die Umladestation (25) eine zweite Umlade-Andienposition (27) aufweist, an welche die erste Fördertechnik (14a..14d) gekoppelt ist, um das zweite Ladehilfsmittel (11, 11a..11c) der ersten Ladehilfsmittel anzudienen und um das Umladen der Auftragsware (3) der zweiten Auftragszeile (7) in das zweite Ladehilfsmittel (11, 11a..11c) der ersten Ladehilfsmittel zu ermöglichen.

**6.** Lager- und Kommissioniersystem (1a..1f) nach einem der Ansprüche 1 bis 5, **gekennzeichnet durch** eine dritte Fördertechnik (19, 19a, 19b), welche an die Kommissionierstation (16, 28) gekoppelt ist und eine Bereitstellung des Zielladehilfsmittels (4, 4') an der Kommissionierstation (16, 28) ermöglicht.

**7.** Lager- und Kommissioniersystem (1a..1f) nach Anspruch 6, **dadurch gekennzeichnet, dass** die Kommissionierstation (16, 28) eine dritte Kommissionier-Andienposition (20) aufweist, an welche die dritte Fördertechnik (19, 19a, 19b) gekoppelt ist, um das Zielladehilfsmittel (4, 4') anzudienen und um das Umladen der Auftragsware (2) der ersten Auftragszeile (6) und der Auftragsware (3) der zweiten Auftragszeile (7) gemäß einem Auftrag in oder auf das Zielladehilfsmittel (4, 4') zu ermöglichen.

**8.** Lager- und Kommissioniersystem (1a..1f) nach Anspruch 1 oder 2, **gekennzeichnet durch**

i) eine erste Kommissionierstation (16) im Verlauf der ersten Fördertechnik (14a..14d), welche das Umladen der Auftragsware (2) der ersten Auftragszeile (6) in oder auf ein an der ersten Kommissionierstation (16) bereitgestelltes und durch eine dritte Fördertechnik (19, 19a, 19b) transportiertes Zielladehilfsmittel (4, 4') ermöglicht, und eine zweite Kommissionierstation (28) im Verlauf der zweiten und dritten Fördertechnik (19, 19a, 19b), welcher das Verladen der Auftragsware (3) der zweiten Auftragszeile (7) in oder auf das besagte Zielladehilfsmittel (4, 4') ermöglicht, oder
ii) eine erste Kommissionierstation (16) im Verlauf der zweiten Fördertechnik (15a..15d), welche das Umladen der Auftragsware (3) der zweiten Auftragszeile (7) in oder auf ein an der ersten Kommissionierstation (16) bereitgestelltes und durch eine dritte Fördertechnik (19, 19a, 19b) transportiertes Zielladehilfsmittel (4, 4') ermöglicht, und eine zweite Kommissionierstation (28) im Verlauf der ersten und dritten Fördertechnik (19, 19a, 19b), welche das Verladen der Auftragsware (2) der ersten Auftragszeile (6) in oder auf das besagte Zielladehilfsmittel (4, 4') ermöglicht.

**9.** Lager- und Kommissioniersystem (1a..1f) nach Anspruch 8, **dadurch gekennzeichnet, dass** im Fall i)

- die erste Kommissionierstation (16) eine erste Kommissionier-Andienposition (17, 17') aufweist, an welche die erste Fördertechnik (14a..14d) gekoppelt ist, um das erste Ladehilfsmittel (11, 11a..11c) mit der Auftragsware (2) der ersten Auftragszeile (6) anzudienen, und
- die zweite Kommissionierstation (28) eine zweite Kommissionier-Andienposition (18) aufweist, an welche die zweite Fördertechnik (15a..15d) gekoppelt ist, um die Hängetasche (13) mit der Auftragsware (3) der zweiten Auftragszeile (7) anzudienen,
- die zweite Kommissionierstation (28) eine dritte Kommissionier-Andienposition (20) aufweist, an welche die dritte Fördertechnik (19, 19a, 19b) gekoppelt ist, um das Zielladehilfsmittel (4, 4') anzudienen und um das Umladen der Auftragsware (3) der zweiten Auftragszeile (7) an der zweiten Kommissionierstation (28) in oder auf das Zielladehilfsmittel (4, 4') zu ermöglichen, und
- die erste Kommissionierstation (16) eine vierte Kommissionier-Andienposition (29) aufweist, an welche die dritte Fördertechnik (19, 19a, 19b) gekoppelt ist, um das Zielladehilfsmittel (4, 4') anzudienen und um das Umladen der Auftragsware (2) der ersten Auftragszeile (6) an der ersten Kommissionierstation (16) in oder auf das Zielladehilfsmittel (4, 4') zu ermöglichen und dass im Fall ii)

- die zweite Kommissionierstation (28) eine erste Kommissionier-Andienposition (17, 17') aufweist, an welche die erste Fördertechnik (14a..14d) gekoppelt ist, um das erste Ladehilfsmittel (11, 11a..11c) mit der Auftragsware (2) der ersten Auftragszeile (6) anzudienen, und

- die erste Kommissionierstation (16) eine zweite Kommissionier-Andienposition (18) aufweist, an welche die zweite Fördertechnik (15a..15d) gekoppelt ist, um die Hängetasche (13) mit der Auftragsware (3) der zweiten Auftragszeile (7) anzudienen,

- die zweite Kommissionierstation (28) eine dritte Kommissionier-Andienposition (20) aufweist, an welche die dritte Fördertechnik (19, 19a, 19b) gekoppelt ist, um das Zielladehilfsmittel (4, 4') anzudienen und um das Umladen der Auftragsware (2) der ersten Auftragszeile (6) an der zweiten Kommissionierstation (28) in oder auf das Zielladehilfsmittel (4, 4') zu ermöglichen und

- die erste Kommissionierstation (16) eine vierte Kommissionier-Andienposition (29) aufweist, an welche die dritte Fördertechnik (19, 19a, 19b) gekoppelt ist, um das Zielladehilfsmittel (4, 4') anzudienen und um das Umladen der Auftragsware (3) der zweiten Auftragszeile (7) an der ersten Kommissionierstation (16) in oder auf das Zielladehilfsmittel (4, 4') zu ermöglichen.

10. Lager- und Kommissioniersystem (1a..1f) nach einem der Ansprüche 1 bis 9, **dadurch gekennzeichnet, dass** die erste Fördertechnik (14a..14d) und die zweite Fördertechnik (15a..15d) den ersten Lagerbereich (10) und den zweiten Lagerbereich (12) miteinander verbindet und im Verlauf der ersten Fördertechnik (14a..14d) und der zweiten Fördertechnik (15a..15d) eine Lager-Umladestation (30) angeordnet ist, welche das Umladen

A) einer Ware (53a..53d) aus dem ersten Lagerbereich (10) in eine dort bereitgestellte Hängetasche (13) ermöglicht, und/oder

B) einer Ware aus dem zweiten Lagerbereich (12) in oder auf ein dort bereitgestelltes, erstes Ladehilfsmittel (11, 11a..11c) ermöglicht.

11. Lager- und Kommissioniersystem (1a..1f) nach Anspruch 10, **dadurch gekennzeichnet, dass** die Lager-Umladestation (30)

im Fall A)

- eine erste Lager-Umlade-Andienposition (31) aufweist, an welche die erste Fördertechnik (14a..14d) gekoppelt ist, um das erste Ladehilfsmittel (11, 11a..11c) mit der Ware (53a..53d) aus dem ersten Lagerbereich (10) anzudienen, und

- eine zweite Lager-Umlade-Andienposition (32) aufweist, an welche die zweite Fördertechnik (15a..15d) gekoppelt ist, um die Hängetasche (13) anzudienen und um das Umladen der Ware (53a..53d) aus dem ersten Lagerbereich (10) in die Hängetasche (13) zu ermöglichen, und

im Fall B)

- eine zweite Lager-Umlade-Andienposition (32) aufweist, an welche die zweite Fördertechnik (15a..15d) gekoppelt ist, um die Hängetasche (13) mit der Ware aus dem zweiten Lagerbereich (12) anzudienen, und

- eine erste Lager-Umlade-Andienposition (31) aufweist, an welche die erste Fördertechnik (14a..14d) gekoppelt ist, um das erste Ladehilfsmittel (11, 11a..11c) anzudienen und um das Umladen der Ware aus dem zweiten Lagerbereich (12) in das erste Ladehilfsmittel (11, 11a..11c) zu ermöglichen.

12. Lager- und Kommissioniersystem (1a..1f) nach einem der Ansprüche 1 bis 11, **dadurch gekennzeichnet, dass**

- im ersten Lagerbereich (10) vorwiegend oder ausschließlich Neuware lagert und/oder

- im ersten Lagerbereich (10) vorwiegend oder ausschließlich Langsamdreher-Waren lagern und/oder

- Waren im ersten Lagerbereich (10) in einem ersten Ladehilfsmittel (11, 11a..11c) artikelrein gelagert werden.

13. Lager- und Kommissioniersystem (1a..1f) nach einem der Ansprüche 1 bis 12, **dadurch gekennzeichnet, dass**

- im zweiten Lagerbereich (12) vorwiegend oder ausschließlich Retourware lagert und/oder

- im zweiten Lagerbereich (12) vorwiegend oder ausschließlich Schnelldreher-Waren lagern und/oder

- Waren im zweiten Lagerbereich (12) in einer Hängetasche (13) gemischt gelagert werden.

14. Lager- und Kommissioniersystem (1a..1f) nach einem der Ansprüche 1 bis 13, **gekennzeichnet durch** eine im Verlauf der ersten Fördertechnik (14a..14d) und/oder zweiten Fördertechnik (15a..15d) angeordnete Sortiereinrichtung (24), welche dazu ausgebildet ist, Auftragswaren (2) der ersten Auftragszeilen (6) und/oder Auftragswaren (3) der zweiten Auftragszeilen (7) in eine vorgebbare Reihenfolge zu bringen.

15. Lager- und Kommissioniersystem (1a..1f) nach einem der Ansprüche 1 bis 14, **dadurch gekennzeichnet, dass**

    - der erste Lagerbereich (10) Lagerregale (50) umfasst,
    - Lagerplätze (33) in den Lagerregalen (50) vorgesehen sind und
    - die erste Fördertechnik (14a..14d) ein automatisiert betriebenes Förderfahrzeug (51a, 51b, 38, 38a..38f) umfasst, welches die Auslagerung des ersten Ladehilfsmittels (11, 11a..11c) mit der Auftragsware (2) der ersten Auftragszeile (6) ermöglicht.

16. Lager- und Kommissioniersystem (1a..1f) nach einem der Ansprüche 1 bis 15, **dadurch gekennzeichnet, dass** der zweite Lagerbereich (12) Lager-Hängebahnen (37, 52) umfasst und

    I) die zweite Fördertechnik (15a..15d) Transport-Hängebahnen umfasst, welche mit den Lager-Hängebahnen (37, 52) fördertechnisch verbunden sind und die Auslagerung der Hängetasche (13) mit der Auftragsware (3) der zweiten Auftragszeile (7) ermöglicht und/oder
    II) die zweite Fördertechnik (15a..15d) ein automatisiert betriebenes Förderfahrzeug (51a, 51b, 38, 38a..38f) umfasst, welches die Auslagerung der Hängetasche (13) mit der Auftragsware (3) der zweiten Auftragszeile (7) ermöglicht.

17. Kommissionierverfahren zum Kommissionieren von Auftragswaren in oder auf ein Zielladehilfsmittel (4, 4'), umfassend die Schritte

    - Erfassen eines Auftrags zum Kommissionieren von Auftragswaren (2, 3) und Ermitteln der für diesen Auftrag benötigten Auftragswaren (2, 3), wobei zumindest einer der Aufträge wenigstens eine erste und eine zweite Auftragszeile (6, 7) umfasst und wobei jede Auftragszeile (6, 7) zumindest eine Auftragsware (2, 3) nach ihrer Warentype (8) und ihrer zu kommissionierenden Stückzahl (9) spezifiziert,
    - Auslagern eines ersten Ladehilfsmittels (11, 11a..11c), welches unterschiedlich zu einer Hängetasche ausgebildet ist und auf oder in welchem zu dem zumindest einen Auftrag eine Auftragsware (2) der ersten Auftragszeile (6) lagert, aus einem ersten Lagerbereich (10), in welchem die ersten Ladehilfsmittel (11, 11a..11c) gelagert werden,
- Auslagern eines zweiten Ladehilfsmittels (13), welches als Hängetasche ausgebildet ist oder ein solches umfasst und welches zu dem zumindest einen Auftrag eine Auftragsware (3) der zweiten Auftragszeile (7) beinhaltet, aus einem zweiten Lagerbereich (12), in welchem die Hängetaschen (13) gelagert werden, wobei eine Hängetasche (13) einen Boden und/oder Wände aus flexiblen Material aufweist, und
- Verladen der Auftragsware (2) der ersten Auftragszeile (6) und der Auftragsware (3) der zweiten Auftragszeile (7) in oder auf ein Zielladehilfsmittel (4, 4') gemäß dem zumindest einen Auftrag.

18. Kommissionierverfahren nach Anspruch 17, **dadurch gekennzeichnet, dass** die Auftragsware (2) der ersten Auftragszeile (6) und die Auftragsware (3) der zweiten Auftragszeile (7) zu einer Kommissionierstation (16, 28) gefördert und danach gemäß dem zumindest einen Auftrag in oder auf ein dort bereitgestelltes Zielladehilfsmittel (4, 4') verladen werden.

19. Kommissionierverfahren nach Anspruch 17 oder 18, **dadurch gekennzeichnet, dass**

    a) die Hängetasche (13) mit der Auftragsware (3) der zweiten Auftragszeile (7) zu einer Kommissionierstation (16, 28) gefördert wird, das erste Ladehilfsmittel (11, 11a..11c) mit der Auftragsware (2) der ersten Auftragszeile (6) zu einer Umladestation (25) gefördert wird, die Auftragsware (2) der ersten Auftragszeile (6) danach in eine dort bereitgestellte zweite Hängetasche (13) der Hängetaschen verladen wird, die zweite Hängetasche (13) der Hängetaschen mit der Auftragsware (2) der ersten Auftragszeile (6) zu der besagten Kommissionierstation (16, 28) gefördert wird, und danach die Auftragsware (2) der ersten Auftragszeile (6) und die Auftragsware (3) der zweiten Auftragszeile (7) in oder auf ein dort bereitgestelltes Zielladehilfsmittel (4, 4') verladen werden oder
    b) das erste Ladehilfsmittel (11, 11a..11c) mit der Auftragsware (2) der ersten Auftragszeile (6) zu einer Kommissionierstation (16, 28) gefördert wird, die Hängetasche (13) mit der Auftragsware (3) der zweiten Auftragszeile (7) zu einer Umladestation (25) gefördert wird, die Auftragsware (3) der zweiten Auftragszeile (7) danach in oder auf ein dort bereitgestelltes zweites Ladehilfsmittel (11, 11a..11c) der ersten Ladehilfsmittel verladen wird, das zweite Ladehilfsmittel (11, 11a..11c) der ersten Ladehilfsmittel mit der Auftragsware (3) der zweiten Auftragszeile (7) zu der besagten Kommissionierstation (16, 28) gefördert wird, und danach die Auftragsware (2) der ersten Auftragszeile und die Auftragsware (3) der zweiten Auftragszeile (7) in oder auf ein dort bereitgestelltes Zielladehilfsmittel (4, 4') verladen werden.

20. Kommissionierverfahren nach Anspruch 17 oder 18, **dadurch gekennzeichnet, dass**

i) das erste Ladehilfsmittel (11, 11a..11c) mit der Auftragsware (2) der ersten Auftragszeile (6) zu einer ersten Kommissionierstation (16) gefördert wird, die Auftragsware (2) der ersten Auftragszeile (6) danach in oder auf ein dort bereitgestelltes Zielladehilfsmittel (4, 4') verladen wird, das Zielladehilfsmittel (4, 4') mit der Auftragsware (2) der ersten Auftragszeile (6) und die Hängetasche (13) mit der Auftragsware (3) der zweiten Auftragszeile (7) zu einer zweiten Kommissionierstation (28) gefördert werden und danach die Auftragsware (3) der zweiten Auftragszeile (7) in oder auf das besagte Zielladehilfsmittel (4, 4') verladen wird oder

ii) die Hängetasche (13) mit der Auftragsware (3) der zweiten Auftragszeile (7) zu einer ersten Kommissionierstation (16) gefördert wird, die Auftragsware (3) der zweiten Auftragszeile (7) danach in oder auf ein dort bereitgestelltes Zielladehilfsmittel (4, 4') verladen wird, das Zielladehilfsmittel (4, 4') mit der Auftragsware (3) der zweiten Auftragszeile (7) und das erste Ladehilfsmittel (11, 11a..11c) mit der Auftragsware (2) der ersten Auftragszeile (6) zu einer zweiten Kommissionierstation (28) gefördert werden und danach die Auftragsware (2) der ersten Auftragszeile (6) in oder auf das besagte Zielladehilfsmittel (4, 4') verladen wird.

21. Kommissionierverfahren nach einem der Ansprüche 17 bis 20, **dadurch gekennzeichnet, dass** das Zielladehilfsmittel (4, 4')

- als Versandladehilfsmittel fungiert und die Auftragsware (2) der ersten Auftragszeile (6) und/oder die Auftragsware (3) der zweiten Auftragszeile (7) direkt in oder auf das Versandladehilfsmittel geladen wird oder
- als Zwischenladehilfsmittel fungiert und die Auftragsware (2) der ersten Auftragszeile (6) und/oder die Auftragsware (3) der zweiten Auftragszeile (7) in oder auf das Zwischenladehilfsmittel und danach in oder auf ein Versandladehilfsmittel umgeladen wird.

22. Kommissionierverfahren nach einem der Ansprüche 17 bis 21, **dadurch gekennzeichnet, dass**

A) ein erstes Ladehilfsmittel (11, 11a..11c) mit einer Ware (53a..53d) aus dem ersten Lagerbereich (10) ausgelagert und zu einer Lager-Umladestation (30) gefördert wird, danach die Ware (53a..53d) in eine dort bereitgestellte Hängetasche (13) verladen wird und die Hängetasche (13) in den zweiten Lagerbereich (12) gefördert und dort eingelagert wird oder

B) eine Hängetasche (13) mit einer Ware aus dem zweiten Lagerbereich (12) ausgelagert und zu einer Lager-Umladestation (30) gefördert wird, danach die Ware in oder auf ein dort bereitgestelltes erstes Ladehilfsmittel (11, 11a..11c) verladen wird und das erste Ladehilfsmittel (11, 11a..11c) in den ersten Lagerbereich (10) gefördert und dort eingelagert wird.

## Claims

1. A storage and order-picking system (1a..1f) for picking ordered articles (2, 3) into or onto a target loading aid (4, 4'), comprising

- an order-processing computer (5) for acquiring orders for picking ordered articles (2, 3) and for ascertaining the ordered articles required for an order (2, 3), wherein at least one of the orders comprises at least one first order line (6) and at least one second order line (7) and wherein each order line (6, 7) specifies at least one ordered article (2, 3) according to its type of article (8) and its number of pieces to be picked (9),
- a first storage zone (10) for first loading aids (11, 11a..11c), which are configured so as to be different from a hanging bag, wherein an ordered article (2) of the first order line (6) is stored in or on one of the first loading aids (11, 11a..11c),
- a second storage zone (12) for second loading aids (13), which are configured as hanging bags or comprise such a hanging bag, wherein an ordered article (3) of the second order line (7) is stored in one of the hanging bags (13), wherein a hanging bag (13) has a floor and/or walls made of flexible material,

a first conveying system (14a..14d) for retrieving the first loading aid (11, 11a..11c) with the ordered article (2) of the first order line (6) from the first storage zone (10), a second conveying system (15a..15d) for retrieving the hanging bag (13) with the ordered article (3) of the second order line (7) from the second storage zone (12) and

- at least one picking station (16, 28), to which the first conveying system (14a..14d) and/or second conveying system (15a..15d) is coupled and which enables the loading of the ordered article (2) of the first order line (6) and the ordered article (3) of the second order line (7) into or onto a target loading aid provisioned there (4, 4').

2. The storage and order-picking system (1a..1f) according to claim 1, **characterized in that** the first conveying system (14a..14d) and second conveying system (15a..15d) are joined at a joining point (A), at which the first conveying system (14a..14d) end(s) in the second conveying system (15a..15d) or the second conveying system (15a..15d) ends in the first conveying system (14a..14d).

3. The storage and order-picking system (1a..1f) according to claim 1 or 2, **characterized in that** the at least one picking station (16, 28)

   - has a first order-picking supply position (17, 17'), to which the first conveying system (14a..14d) is coupled in order to supply the first loading aid (11, 11a..11c) with the ordered article (2) of the first order line (6), and has a second order-picking supply position (18), to which the second conveying system (15a..15d) is coupled in order to supply the hanging bag (13) with the ordered good (3) of the second order line (7), or
   - has at least one first order-picking supply position (17, 17'), to which the first conveying system (14a..14d) is coupled in order to supply a first loading aid (11, 11a..11c) of the first loading aids with the ordered article (2) of the first order line (6) and a second loading aid (11, 11a..11c) of the first loading aids with the ordered article (3) of the second order line (7), or
   - has at least one second order-picking supply position (18), to which the second conveying system (15a..15d) is coupled in order to supply a first hanging bag (13) of the hanging bags with the ordered article (3) of the second order line (7) and a second hanging bag (13) of the hanging bags with the ordered article (2) of the first order line (6).

4. The storage and order-picking system (1a..1f) according to any one of the claims 1 to 3, **characterized by**

   a) a reloading station (25) along the route of the first conveying system (14a..14d), which enables the reloading of the ordered article (2) of the first order line (6) into one of the second hanging bags (13) of the hanging bags provisioned at the reloading station (25), and a picking station (16, 28) along the route of the second conveying system (15a..15d), which enables the loading of the ordered article (2) of the first order line (6) and the ordered article (3) of the second order line (7) into or onto a target loading aid (4, 4') provisioned there, or

   b) a reloading station (25) along the route of the second conveying system (15a..15d), which enables the reloading of the ordered article (3) of the second order line (7) into or onto a second loading aid (11, 11a..11c) of the first loading aids provisioned at the reloading station (25), and a picking station (16, 28) along the route of the first conveying system (14a..14d), which enables the loading of the ordered article (2) of the first order line (6) and the ordered article (3) of the second order line (7) into or onto a target loading aid (4, 4') provisioned there.

5. The storage and order-picking system (1a..1f) according to claim 4, **characterized in that**, in the case a),

   - the picking station (16, 28) has at least one second order-picking supply position (18), to which the second conveying system (15a..15d) is coupled in order to supply a first hanging bag (13) of the hanging bags with the ordered article (3) of the second order line (7) and a second hanging bag (13) of the hanging bags with the ordered article (2) of the first order line (6), and
   - the reloading station (25) has a first reloading supply position (26), to which the first conveying system (14a..14d) is coupled in order to supply the first loading aid (11, 11a..11c) with the ordered article (2) of the first order line (6) from the first storage zone (10), and
   - the reloading station (25) has a second reloading supply position (27), to which the second conveying system (15a..15d) is coupled in order to supply the second hanging bag (13) of the hanging bags and in order to enable the reloading of the ordered article (2) of the first order line (6) into the second hanging bag (13) of the hanging bags, or,

   in the case b),
   - the picking station (16, 28) has at least one first order-picking supply position (17, 17'), to which the first conveying system (14a..14d) is coupled in order to supply a first loading aid (11, 11a..11c) of the first loading aids with the ordered article (2) of the first order line (6) and a second loading aid (11, 11a..11c) of the first loading aids with the ordered article (3) of the second order line (7), and
   - the reloading station (25) has a first reloading supply position (26), to which the second conveying system (15a..15d) is coupled in order to supply the hanging bag (13) with the ordered article (3) of the second order line (7) from the second storage zone (12), and
- the reloading station (25) has a second reloading supply position (27), to which the first conveying system (14a..14d) is coupled in order to supply the second loading aid (11, 11a..11c) of the first loading aids and in order to enable the reloading of the ordered article (3) of the second order line (7) into the second loading aid (11, 11a..11c) of the first loading aids.

6. The storage and order-picking system (1a..1f) according to any one of the claims 1 to 5, **characterized by** (a) third conveying system (19, 19a, 19b), which is coupled to the picking station (16, 28) and enable(s) a provisioning of the target loading aid (4, 4') at the picking station (16, 28).

7. The storage and order-picking system (1a..1f) according to claim 6, **characterized in that** the picking station (16, 28) has a third order-picking supply position (20), to which the third conveying system (19, 19a, 19b) is coupled in order to supply the target loading aid (4, 4') and in order to enable the reloading of the ordered article (2) of the first order line (6) and the ordered article (3) of the second order line (7) into or onto the target loading aid (4, 4') in accordance with an order.

8. The storage and order-picking system (1a..1f) according to claim 1 or 2, **characterized by**

i) a first picking station (16) along the route of the first conveying system (14a..14d), which enables the reloading of the ordered article (2) of the first order line (6) into or onto a target loading aid (4, 4') provisioned at the first picking station (16) and transported by (a) third conveying system (19, 19a, 19b), and a second picking station (28) along the route of the second and third conveying systems (19, 19a, 19b), which enables the loading of the ordered article (3) of the second order line (7) into or onto said target loading aid (4, 4'), or
ii) a first picking station (16) along the route of the second conveying system (15a..15d), which enables the reloading of the ordered article (3) of the second order line (7) into or onto a target loading aid (4, 4') provisioned at the first picking station (16) and transported by (a) third conveying system (19, 19a, 19b), and a second picking station (28) along the route of the first and third conveying systems (19, 19a, 19b), which enables the loading of the ordered good (2) of the first order line (6) into or onto said target loading aid (4, 4').

9. Storage and order-picking system (1a..1f) according to claim 8, **characterized in that**, in the case i),

- the first picking station (16) has a first order-picking supply position (17, 17'), to which the first conveying system (14a..14d) is coupled in order to supply the first loading aid (11, 11a..11c) with the ordered article (2) of the first order line (6), and
- the second picking station (28) has a second order-picking supply position (18), to which the second conveying system (15a..15d) is coupled in order to supply the hanging bag (13) with the ordered article (3) of the second order line (7),
- the second picking station (28) has a third order-picking supply position (20), to which the third conveying system (19, 19a, 19b) is coupled in order to supply the target loading aid (4, 4') and in order to enable the reloading of the ordered article (3) of the second order line (7) into or onto the target loading aid (4, 4') at the second picking station (28), and
- the first picking station (16) has a fourth order-picking supply position (29), to which the third conveying system (19, 19a, 19b) is coupled in order to supply the target loading aid (4, 4') and in order to enable the reloading of the ordered article (2) of the first order line (6) into or onto the target loading aid (4, 4') at the first picking station (16) and
that, in the case ii),
- the second picking station (28) has a first order-picking supply position (17, 17'), to which the first conveying system (14a..14d) is coupled in order to supply the first loading aid (11, 11a..11c) with the ordered article (2) of the first order line (6), and
- the first picking station (16) has a second order-picking supply position (18), to which the second conveying system (15a..15d) is coupled in order to supply the hanging bag (13) with the ordered article (3) of the second order line (7),
- the second picking station (28) has a third order-picking supply position (20), to which the third conveying system (19, 19a, 19b) is coupled in order to supply the target loading aid (4, 4') and in order to enable the reloading of the ordered article (2) of the first order line (6) into or onto the target loading aid (4, 4') at the second picking station (28) and
- the first picking station (16) has a fourth order-picking supply position (29), to which the third conveying system (19, 19a, 19b) is coupled in order to supply the target loading aid (4, 4') and in order to enable the reloading of the ordered article (3) of the second order line (7) into or onto the target loading aid (4, 4') at the first picking station (16).

10. The storage and order-picking system (1a..1f) according to any one of the claims 1 to 9, **characterized in that** the first conveying system (14a..14d) and the second conveying system (15a..15d) connect the first storage zone (10) and the second storage zone (12) with each other and a storage reloading station (30) is arranged along the route of the first conveying system (14a..14d) and the second conveying system (15a..15d), which storage reloading station (30) enables the reloading

    A) of an article (53a..53d) from the first storage zone (10) into a hanging bag (13) provisioned there, and/or
    B) of an article from the second storage zone (12) into or onto a first loading aid (11, 11a..11c) provisioned there.

11. The storage and order-picking system (1a..1f) according to claim 10, **characterized in that** the storage reloading station (30),

    in the case A),

        - has a first storage reloading supply position (31), to which the first conveying system (14a..14d) is coupled in order to supply the first loading aid (11, 11a..11c) with the article (53a..53d) from the first storage zone (10), and
        - has a second storage reloading supply position (32), to which the second conveying system (15a..15d) is coupled in order to supply the hanging bag (13) and in order to enable the reloading of the article (53a..53d) from the first storage zone (10) into the hanging bag (13), and,

    in the case B),

        - has a second storage reloading supply position (32), to which the second conveying system (15a..15d) is coupled in order to supply the hanging bag (13) with the article from the second storage zone (12), and
        - has a first storage reloading supply position (31), to which the first conveying system (14a..14d) is coupled in order to supply the first loading aid (11, 11a..11c) and in order to enable the reloading of the article from the second storage zone (12) into the first loading aid (11, 11a..11c).

12. The storage and order-picking system (1a..1f) according to any one of the claims 1 to 11, **characterized in that**

    - predominantly or exclusively new goods are stored in the first storage zone (10) and/or
    - predominantly or exclusively slow-moving goods are stored in the first storage zone (10) and/or
    - goods in the first storage zone (10) are stored in a first loading aid (11, 11a..11c) in an article-specific pure manner.

13. The storage and order-picking system (1a..1f) according to any one of the claims 1 to 12, **characterized in that**

    - predominantly or exclusively return goods are stored in the second storage zone (12) and/or
    - predominantly or exclusively fast-moving goods are stored in the second storage zone (12) and/or
    - goods in the second storage zone (12) are stored in a hanging bag (13) in a mixed manner.

14. The storage and order-picking system (1a..1f) according to any one of the claims 1 to 13, **characterized by** a sorting device (24) arranged along the route of the first conveying system (14a..14d) and/or second conveying system (15a..15d), which is configured for bringing ordered goods (2) of the first order lines (6) and/or ordered goods (3) of the second order lines (7) into a specifiable sequence.

15. The storage and order-picking system (1a..1f) according to any one of the claims 1 to 14, **characterized in that**

    - the first storage zone (10) comprises storage racks (50),
    - storage locations (33) are provided in the storage racks (50) and
    - the first conveying system (14a..14d) comprise(s) a conveying vehicle operated in an automated manner (51a, 51b, 38, 38a..38f), which enables the retrieval of the first loading aid (11, 11a..11c) with the ordered article (2) of the first order line (6).

16. The storage and order-picking system (1a..1f) according to any one of the claims 1 to 15, **characterized in that** the second storage zone (12) comprises overhead storage conveyors (37, 52) and

    I) the second conveying system (15a..15d) comprise(s) overhead transport conveyors, which are connected in terms of conveyance to the overhead storage conveyors (37, 52) and enable(s) the retrieval of the hanging bag (13) with the ordered article (3) of the second order line (7) and/or
    II) the second conveying system (15a..15d) comprise(s) a conveying vehicle operated in an automated manner (51a, 51b, 38, 38a..38f), which enables the retrieval of the hanging bag (13) with the ordered article (3) of the second order line (7).

17. An order-picking method for picking ordered goods into or onto a target loading aid (4, 4'), comprising the steps

- acquiring an order for picking ordered goods (2, 3) and ascertaining the ordered goods required for this order (2, 3), wherein at least one of the orders comprises at least one first and a second order line (6, 7) and wherein each order line (6, 7) specifies at least one ordered good (2, 3) according to its type of good (8) and its number of pieces to be picked (9),
- retrieving a first loading aid (11, 11a..11c), which is configured so as to be different from a hanging bag and on or in which an ordered goarticle2) of the first order line (6) for the at least one order is stored, from a first storage zone (10), in which the first loading aids (11, 11a..11c) are stored,
- retrieving a second loading aid (13), which is configured as a hanging bag or comprises such a hanging bag and which contains an ordered article (3) of the second order line (7) for the at least one order, from a second storage zone (12), in which the hanging bags (13) are stored, and
- loading the ordered article (2) of the first order line (6) and the ordered article (3) of the second order line (7) into or onto a target loading aid (4, 4') in accordance with the at least one order.

18. The order-picking method according to claim 17, **characterized in that** the ordered article (2) of the first order line (6) and the ordered article (3) of the second order line (7) are conveyed to a picking station (16, 28) and afterwards, in accordance with the at least one order, loaded into or onto a target loading aid (4, 4') provisioned there.

19. The order-picking method according to claim 17 or 18, **characterized in that**

a) the hanging bag (13) with the ordered article (3) of the second order line (7) is conveyed to a picking station (16, 28), the first loading aid (11, 11a..11c) with the ordered article (2) of the first order line (6) is conveyed to a reloading station (25), the ordered article (2) of the first order line (6) is afterwards loaded into a second hanging bag (13) of the hanging bags provisioned there, the second hanging bag (13) of the hanging bags with the ordered article (2) of the first order line (6) is conveyed to said picking station (16, 28), and afterwards the ordered article (2) of the first order line (6) and the ordered article (3) of the second order line (7) are loaded into or onto a target loading aid (4, 4') provisioned there or
b) the first loading aid (11, 11a..11c) with the ordered article (2) of the first order line (6) is conveyed to a picking station (16, 28), the hanging bag (13) with the ordered article (3) of the second order line (7) is conveyed to a reloading station (25), the ordered article (3) of the second order line (7) is afterwards loaded into or onto a second loading aid (11, 11a..11c) of the first loading aids provisioned there, the second loading aid (11, 11a..11c) of the first loading aids with the ordered article (3) of the second order line (7) is conveyed to said picking station (16, 28), and afterwards the ordered article (2) of the first order line and the ordered article (3) of the second order line (7) are loaded into or onto a target loading aid (4, 4') provisioned there.

20. The order-picking method according to claim 17 or 18, **characterized in that**

i) the first loading aid (11, 11a..11c) with the ordered article (2) of the first order line (6) is conveyed to a first picking station (16), the ordered article (2) of the first order line (6) is afterwards loaded into or onto a target loading aid provisioned there (4, 4'), the target loading aid (4, 4') with the ordered article (2) of the first order line (6) and the hanging bag (13) with the ordered article (3) of the second order line (7) are conveyed to a second picking station (28) and afterwards the ordered article (3) of the second order line (7) is loaded into or onto said target loading aid (4, 4') or
ii) the hanging bag (13) with the ordered article (3) of the second order line (7) is conveyed to a first picking station (16), the ordered article (3) of the second order line (7) is afterwards loaded into or onto a target loading aid provisioned there (4, 4'), the target loading aid (4, 4') with the ordered article (3) of the second order line (7) and the first loading aid (11, 11a..11c) with the ordered article (2) of the first order line (6) are conveyed to a second picking station (28) and afterwards the ordered article (2) of the first order line (6) is loaded into or onto said target loading aid (4, 4').

21. The order-picking method according to any one of the claims 17 to 20, **characterized in that** the target loading aid (4, 4')

- functions as a dispatch loading aid and the ordered article (2) of the first order line (6) and/or the ordered article (3) of the second order line (7) is loaded directly into or onto the dispatch loading aid or

- functions as an interim loading aid and the ordered article (2) of the first order line (6) and/or the ordered article (3) of the second order line (7) is reloaded into or onto the interim loading aid and afterwards into or onto a dispatch loading aid.

22. The order-picking method according to any one of the claims 17 to 21, **characterized in that**

A) a first loading aid (11, 11a..11c) with an article (53a..53d) is out-fed from the first storage zone (10) and conveyed to a storage reloading station (30), afterwards the article (53a..53d) is loaded into a hanging bag (13) provisioned there and the hanging bag (13) is conveyed into the second storage zone (12) and in-fed there or

B) a hanging bag (13) with an article is out-fed from the second storage zone (12) and conveyed to a storage reloading station (30), afterwards the article is loaded into or onto a first loading aid (11, 11a..11c) provisioned there and the first loading aid (11, 11a..11c) is conveyed into the first storage zone (10) and in-fed there.

**Revendications**

1. Système d'emmagasinage et de préparation de commandes (1a.. 1f) pour la préparation de commandes d'articles commandés (2, 3) dans ou sur un moyen d'aide au chargement cible (4, 4'), comprenant

- un calculateur de commandes (5) pour la saisie de commandes pour la préparation de commandes d'articles commandés (2, 3) et pour la détermination des articles commandés (2, 3) nécessaires pour une commande, dans lequel au moins une des commandes comprend au moins une première ligne de commande (6) et une deuxième ligne de commande (7) et dans lequel chaque ligne de commande (6, 7) spécifie au moins un article commandé (2, 3) selon le type d'article (8) et le nombre de pièces (9) à préparer,
- une première zone d'emmagasinage (10) pour des premiers moyens d'aide au chargement (11, 11a.. 11c), qui sont conçus différemment d'un sac suspendu, dans lequel, dans ou sur un des premiers moyens d'aide au chargement (11, 11a.. 11c), est stocké un article commandé (2) de la première ligne de commande (6),
- une deuxième zone d'emmagasinage (12) pour des deuxièmes moyens d'aide au chargement (13), qui sont conçus comme des sacs suspendus ou qui comprennent un sac suspendu, dans lequel, dans un des sacs suspendus (13), est stocké un article commandé (3) de la deuxième ligne de commande (7), dans lequel un sac suspendu (13) comporte une base et/ou des parois en matériau souple,

un premier système de convoyage (14a.. 14d) pour le déstockage du premier moyen d'aide au chargement (11, 11a.. 11c) avec l'article commandé (2) de la première ligne de commande (6) hors de la première zone d'emmagasinage (10),
un deuxième système de convoyage (15a.. 15d) pour le déstockage du sac suspendu (13) avec l'article commandé (3) de la deuxième ligne de commande (7) hors de la deuxième zone d'emmagasinage (12) et

- au moins une station de préparation de commandes (16, 28) au niveau de laquelle est couplé le premier système de convoyage (14a.. 14d) et/ou le deuxième système de convoyage (15a.. 15d) et qui permet le chargement de l'article commandé (2) de la première ligne de commande (6) et de l'article commandé (3) de la deuxième ligne de commande (7) dans ou sur un moyen d'aide au chargement cible (4, 4') qui y est mis à disposition.

2. Système d'emmagasinage et de préparation de commandes (1a.. 1f) selon la revendication 1, **caractérisé en ce que** le premier système de convoyage (14a.. 14d) et le deuxième système de convoyage (15a.. 15d) sont regroupés au niveau d'un point de regroupement (A), au niveau duquel le premier système de convoyage (14a.. 14d) débouche dans le deuxième système de convoyage (15a.. 15d) ou le deuxième système de convoyage (15a.. 15d) débouche dans le premier système de convoyage (14a.. 14d).

3. Système d'emmagasinage et de préparation de commandes (1a.. 1f) selon la revendication 1 ou 2, **caractérisé en ce que** l'au moins une station de préparation de commandes (16, 28)

- présente une première position d'alimentation de préparation de commandes (17, 17') au niveau de laquelle le premier système de convoyage (14a.. 14d) est couplé, afin d'alimenter le premier moyen d'aide au chargement (11, 11a.. 11c) avec l'article commandé (2) de la première ligne de commande (6), et une deuxième position d'alimentation de préparation de commande (18), au niveau de laquelle le deuxième système de convoyage (15a.. 15d) est couplé, afin d'alimenter le sac suspendu (13) avec l'article commandé (3) de la deuxième ligne de commande (7) ou

- présente au moins une première position d'alimentation de préparation de commandes (17, 17') au niveau de laquelle le premier système de convoyage (14a.. 14d) est couplé, afin d'alimenter un premier moyen d'aide au chargement (11, 11a.. 11c) avec l'article commandé (2) de la première ligne de commande (6), et un deuxième moyen d'aide au chargement (11, 11a.. 11c) des premiers moyens d'aide au chargement avec l'article commandé (3) de la deuxième ligne de commande (7) ou

- présente au moins une deuxième position d'alimentation de préparation de commande (18) au niveau de laquelle le deuxième système de convoyage (15a.. 15d) est couplé, afin d'alimenter un premier sac suspendu (13) des sacs suspendus avec l'article commande (3) de la deuxième ligne de commande (7) et un deuxième sac suspendu (13) des sacs suspendus avec l'article commande (2) de la première ligne de commande (6).

4. Système d'emmagasinage et de préparation de commandes (1a.. 1f) selon l'une des revendications 1 à 3, **caractérisé par**

a) une station de transfert (25) sur le trajet du premier système de convoyage (14a.. 14d), qui permet le transfert de l'article commandé (2) de la première ligne de commande (6) vers un deuxième sac suspendu (13) des sacs suspendus, mis à disposition au niveau de la station de transfert (25) et une station de préparation de commandes (16, 28) sur le trajet du deuxième système de convoyage (15a.. 15d), qui permet le chargement de l'article commandé (2) de la première ligne de commande (6) et de l'article commandé (3) de la deuxième ligne de commande (7) dans ou sur un moyen d'aide au chargement cible (4, 4') qui y est mis à disposition ou

b) une station de transfert (25) sur le trajet du deuxième système de convoyage (15a.. 15d), qui permet le transfert de l'article commandé (3) de la deuxième ligne de commande (7) dans ou sur un deuxième moyen d'aide au chargement (11, 11a.. 11c) des premiers moyens d'aide au chargement, qui est mis à disposition au niveau de la station de transfert (25), et une station de préparation de commandes (16, 28) sur le trajet du premier système de convoyage (14a.. 14d), qui permet le chargement de l'article commandé (2) de la première ligne de commande (6) et de l'article commandé (3) de la deuxième ligne de commande (7) dans ou sur un moyen d'aide au chargement cible (4, 4') qui y est mis à disposition.

5. Système d'emmagasinage et de préparation de commandes (1a.. 1f) selon la revendication 4, **caractérisé en ce que**

dans le cas a)

- la station de préparation de commandes (16, 28) présente au moins une deuxième position d'alimentation de préparation de commandes (18) au niveau de laquelle le deuxième système de convoyage (15a.. 15d) est couplé, afin d'alimenter un premier sac suspendu (13) des sacs suspendus avec l'article commandé (3) de la deuxième ligne de commande (7) et un deuxième sac suspendu (13) des sacs suspendus avec l'article commandé (2) de la première ligne de commande (6) et

- la station de transfert (25) présente une première position d'alimentation de transfert (26) au niveau de laquelle le premier système de convoyage (14a.. 14d) est couplé, afin d'alimenter le premier moyen d'aide au chargement (11, 11a.. 11c) avec l'article commandé (2) de la première ligne de commande (6) à partir de la première zone d'emmagasinage (10) et

- la station de transfert (25) présente une deuxième position d'alimentation de transfert (27) au niveau de laquelle le deuxième système de convoyage (15a.. 15d) est couplé, afin d'alimenter le deuxième sac suspendu (13) de sacs suspendus et afin de permettre le transfert de l'article commandé (2) de la première ligne de commande (6) vers le deuxième sac suspendu (13) des sacs suspendus ou

dans le cas b)

- la station de préparation de commandes (16, 28) présente au moins une première position d'alimentation de préparation de commandes (17, 17') au niveau de laquelle le premier système de convoyage (14a.. 14d) est couplé, afin d'alimenter un premier moyen d'aide au chargement (11, 11a.. 11c) des premiers moyens d'aide au chargement avec l'article commandé (2) de la première ligne de commande (6) et un deuxième moyen d'aide au chargement (11, 11a.. 11c) des premiers moyens d'aide au chargement avec l'article commandé (3) de la deuxième ligne de commande (7) et

- la station de transfert (25) présente une première position d'alimentation de transfert (26) au niveau de laquelle le deuxième système de convoyage (15a.. 15d) est couplé, afin d'alimenter le sac suspendu (13) avec l'article commandé (3) de la deuxième ligne de commande (7) à partir de la deuxième zone d'emmagasinage (12) et

- la station de transfert (25) présente une deuxième position d'alimentation de transfert (27) au niveau de laquelle le premier système de convoyage (14a.. 14d) est couplé, afin d'alimenter le deuxième moyen d'aide au chargement (11, 11a.. 11c) des premiers moyens d'aide au chargement et afin de permettre le transfert de l'article commandé (3) de la deuxième ligne de commande (7) vers le deuxième moyen d'aide au chargement (11, 11a.. 11c) des premiers moyens d'aide au chargement.

6. Système d'emmagasinage et de préparation de commandes (1a.. 1f) selon l'une des revendications 1 à 5, **caractérisé par** un troisième système de convoyage (19, 19a, 19b), qui est couplé à la station de préparation de commandes (16, 28) et qui permet une mise à disposition du moyen d'aide au chargement cible (4, 4') au niveau de la station de préparation de commandes (16, 28).

7. Système d'emmagasinage et de préparation de commandes (1a.. 1f) selon la revendication 6, **caractérisé en ce que** la station de préparation de commandes (16, 28) présente une troisième position d'alimentation de préparation de commandes (20) au niveau de laquelle le troisième système de convoyage (19, 19a, 19b) est couplé, afin d'alimenter le moyen d'aide au chargement cible (4, 4') et afin de permettre le transfert de l'article commandé (2) de la première ligne de commande (6) et de l'article commandé (3) de la deuxième ligne de commande (7), selon une commande, dans ou sur le moyen d'aide au chargement cible (4, 4').

8. Système d'emmagasinage et de préparation de commandes (1a.. 1f) selon la revendication 1 ou 2, **caractérisé par**

    i) une première station de préparation de commandes (16) sur le trajet du premier système de convoyage (14a.. 14d), qui permet le transfert de l'article commandé (2) de la première ligne de commande (6) dans ou sur un moyen d'aide au chargement cible (4, 4') mis à disposition au niveau de la première station de préparation de commandes (16) et transporté par un troisième système de convoyage (19, 19a, 19b), et une deuxième station de préparation de commande (28) sur le trajet des deuxième et troisième système de convoyage (19, 19a, 19b), qui permet le chargement de l'article commandé (3) de la deuxième ligne de commande (7) dans ou sur le moyen d'aide au chargement cible (4, 4') mentionné ou

    ii) une première station de préparation de commandes (16) sur le trajet du deuxième système de convoyage (15a.. 15d), qui permet le transfert de l'article commandé (3) de la deuxième ligne de commande (7) dans ou sur un moyen d'aide au chargement cible (4, 4') mis à disposition au niveau de la première station de préparation de commandes (16) et transporté par un troisième système de convoyage (19, 19a, 19b), et une deuxième station de préparation de commande (28) sur le trajet des deuxième et troisième système de convoyage (19, 19a, 19b), qui permet le chargement de l'article commandé (2) de la première ligne de commande (6) dans ou sur le moyen d'aide au chargement cible (4, 4') mentionné.

9. Système d'emmagasinage et de préparation de commandes (1a.. 1f) selon la revendication 8, **caractérisé en ce que**, dans le cas i)

    - la première station de préparation de commandes (16) présente une première position d'alimentation de préparation de commande (17, 17') au niveau de laquelle le premier système de convoyage (14a.. 14d) est couplé, afin d'alimenter le premier moyen d'aide au chargement (11, 11a.. 1c) avec l'article commandé (2) de la première ligne de commande (6) et

    - la deuxième station de préparation de commandes (28) présente une deuxième position d'alimentation de préparation de commande (18) au niveau de laquelle le deuxième système de convoyage (15a.. 15d) est couplé, afin d'alimenter le sac suspendu (13) avec l'article commandé (3) de la deuxième ligne de commande (7),

    - la deuxième station de préparation de commandes (28) présente une troisième position d'alimentation de préparation de commande (20) au niveau de laquelle le troisième système de convoyage (19, 19a, 19b) est couplé, afin d'alimenter le moyen d'aide au chargement cible (4, 4') et afin de permettre le transfert de l'article commandé (3) de la deuxième ligne de commande (7) au niveau de la deuxième station de préparation de commandes (28) dans ou sur le moyen d'aide au chargement cible (4, 4') et

    - la première station de préparation de commandes (16) présente une quatrième position d'alimentation de préparation de commande (29) au niveau de laquelle le troisième système de convoyage (19, 19a, 19b) est couplé, afin d'alimenter le moyen d'aide au chargement cible (4, 4') et afin de permettre le transfert de l'article commandé (2) de la première ligne de commande (6) au niveau de la première station de préparation de commandes (16) dans ou sur le moyen d'aide au chargement cible (4, 4') et dans le cas ii)

- la deuxième station de préparation de commandes (28) présente une première position d'alimentation de préparation de commande (17, 17') au niveau de laquelle le premier système de convoyage (14a.. 14d) est couplé, afin d'alimenter le premier moyen d'aide au chargement (11, 11a.. 11c) avec l'article commandé (2) de la première ligne de commande (6) et

- la première station de préparation de commandes (16) présente une deuxième position d'alimentation de préparation de commande (18) au niveau de laquelle le deuxième système de convoyage (15a.. 15d) est couplé, afin d'alimenter le sac suspendu (13) avec l'article commandé (3) de la deuxième ligne de commande (7),

- la deuxième station de préparation de commandes (28) présente une troisième position d'alimentation de préparation de commande (20) au niveau de laquelle le troisième système de convoyage (19, 19a, 19b) est couplé, afin d'alimenter le moyen d'aide au chargement cible (4, 4') et afin de permettre le transfert de l'article commandé (2) de la première ligne de commande (6) au niveau de la deuxième station de préparation de commandes (28) dans ou sur le moyen d'aide au chargement cible (4, 4') et

- la première station de préparation de commandes (16) présente une quatrième position d'alimentation de préparation de commande (29) au niveau de laquelle le troisième système de convoyage (19, 19a, 19b) est couplé, afin d'alimenter le moyen d'aide au chargement cible (4, 4') et afin de permettre le transfert de l'article commandé (3) de la deuxième ligne de commande (7) au niveau de la première station de préparation de commandes (16) dans ou sur le moyen d'aide au chargement cible (4, 4').

10. Système d'emmagasinage et de préparation de commandes (1a.. 1f) selon l'une des revendications 1 à 9, **caractérisé en ce que** le premier système de convoyage (14a.. 14d) et le deuxième système de convoyage (15a.. 15d) relient la première zone d'emmagasinage (10) et la deuxième zone d'emmagasinage (12) entre elles et, sur le trajet du premier système de convoyage (14a.. 14d) et du deuxième système de convoyage (15a.. 15d), se trouve une station de transfert d'emmagasinage (30) qui permet le transfert

A) d'un article (53a.. 53d) de la première zone d'emmagasinage (10) vers un sac suspendu (13) qui y est mis à disposition et/ou
B) d'un article de la deuxième zone d'emmagasinage (12) dans ou sur un premier moyen d'aide au chargement (11, 11a.. 11c) qui y est mis à disposition.

11. Système d'emmagasinage et de préparation de commandes (1a.. 1f) selon la revendication 10, **caractérisé en ce que** la station de transfert d'emmagasinage (30) dans le cas A)

- présente une première position d'alimentation de transfert d'emmagasinage (31) au niveau de laquelle le premier système de convoyage (14a.. 14d) est couplé, afin d'alimenter le premier moyen d'aide au chargement (11, 11a.. 11c) avec l'article (53a.. 53d) provenant de la première zone d'emmagasinage (10) et
- présente une deuxième position d'alimentation de transfert d'emmagasinage (32) au niveau de laquelle le deuxième système de convoyage (15a.. 15d) est couplé, afin d'alimenter le sac suspendu (13) et de permettre le transfert de l'article (53a.. 53d) de la première zone d'emmagasinage (10) vers le sac suspendu (13) et dans le cas B)

- présente une deuxième position d'alimentation de transfert d'emmagasinage (32) au niveau de laquelle le deuxième système de convoyage (15a.. 15d) est couplé, afin d'alimenter le sac suspendu (13) avec l'article provenant de la deuxième zone d'emmagasinage (12) et
- présente une première position d'alimentation de transfert d'emmagasinage (31) au niveau de laquelle le premier système de convoyage (14a.. 14d) est couplé, afin d'alimenter le premier moyen d'aide au chargement (11, 11a.. 11c) et afin de permettre le transfert de l'article e la deuxième zone d'emmagasinage (12) vers le premier moyen d'aide au chargement (11, 11a.. 11c).

12. Système d'emmagasinage et de préparation de commandes (1a.. 1f) selon l'une des revendications 1 à 11, **caractérisé en ce que**

- dans la première zone d'emmagasinage (10) sont stockés majoritairement ou exclusivement des nouveaux articles et/ou
- dans la première zone d'emmagasinage (10) sont stockés majoritairement ou exclusivement des articles à rotation lente et/ou
- les articles de la première zone d'emmagasinage (10) sont stockés de manière triée dans un premier moyen d'aide au chargement (11, 11a.. 11c).

**13.** Système d'emmagasinage et de préparation de commandes (1a.. 1f) selon l'une des revendications 1 à 12, **caractérisé en ce que**

- dans la deuxième zone d'emmagasinage (12) sont stockés majoritairement ou exclusivement des articles de retour et/ou
- dans la deuxième zone d'emmagasinage (12) sont stockés majoritairement ou exclusivement des articles à rotation rapide et/ou
- les articles de la deuxième zone d'emmagasinage (12) sont stockés de manière mélangée dans un sac suspendu (13).

**14.** Système d'emmagasinage et de préparation de commandes (1a.. 1f) selon l'une des revendications 1 à 13, **caractérisé par** un dispositif de tri (24) disposé sur le trajet du premier système de convoyage (14a.. 14d) et/ou du deuxième système de convoyage (15a.. 15d), qui est conçu pour mettre les articles commandés (2) de la première ligne de commande (6) et/ou les articles commandés (3) de la deuxième ligne de commande (7) dans un ordre prédéterminé.

**15.** Système d'emmagasinage et de préparation de commandes (1a.. 1f) selon l'une des revendications 1 à 14, **caractérisé en ce que**

- la première zone d'emmagasinage (10) comprend des rayonnages de stockage (50),
- des emplacements de stockage (33) sont prévus dans les rayonnages de stockage (50) et
- le premier système de convoyage (14a.. 14d) comprend un véhicule de convoyage fonctionnant de manière automatisée (51a, 51b, 38, 38a.. 38f) qui permet le déplacement du premier moyen d'aide au chargement (11, 11a.. 11c) avec l'article commandé (2) de la première ligne de commande (6).

**16.** Système d'emmagasinage et de préparation de commandes (1a.. 1f) selon l'une des revendications 1 à 15, **caractérisé en ce que** la deuxième zone d'emmagasinage (12) comprend des pistes suspendues d'emmagasinage (37, 52) et

I) le deuxième système de convoyage (15a.. 15d) comprend des pistes suspendues de transport qui sont reliées en convoyage avec les pistes suspendues d'emmagasinage (37, 52) et permet le déplacement du sac suspendu (13) avec l'article commandé (3) de la deuxième ligne de commande (7) et/ou
II) le deuxième système de convoyage (15a..

15d) comprend un véhicule de convoyage fonctionnant de manière automatisée (51a, 51b, 38, 38a.. 38f) qui permet le déplacement du sac suspendu (13) avec l'article commandé (3) de la deuxième ligne de commande (7).

**17.** Procédé de préparation de commandes pour la préparation d'articles commandés dans ou sur un moyen d'aide au chargement cible (4, 4'), comprenant les étapes suivantes :

- saisie d'une commande pour la préparation d'articles commandés (2, 3) et détermination des articles commandés (2, 3) nécessaires pour cette commande, dans lequel au moins une des commandes comprend au moins une première et une deuxième lignes de commande (6, 7) et dans lequel chaque ligne de commande (6, 7) spécifie au moins un article commandé (2, 3) selon le type d'article (8) et le nombre de pièces (9) à préparer,
- déplacement d'un premier moyen d'aide au chargement (11, 11a.. 11c), qui est conçu différemment d'un sac suspendu et sur ou dans lequel, en fonction de l'au moins une commande, est stocké un article commandé (2) de la première ligne de commande (6), hors d'une première zone d'emmagasinage (10), dans laquelle les premiers moyens d'aide au chargement (11, 11a.. 11c) sont stockés,
- déplacement d'un deuxième moyen d'aide au chargement (13), qui est conçu comme un sac suspendu ou qui comprend un sac suspendu et qui contient, en fonction de l'au moins une commande, un article commandé (3) de la deuxième ligne de commande (7), hors d'une deuxième zone d'emmagasinage (12), dans laquelle les sacs suspendus (13) sont stockés et
- chargement de l'article commandé (2) de la première ligne de commande (6) et de l'article commandé (3) de la deuxième ligne de commande (7) dans ou sur un moyen d'aide au chargement cible (4, 4') selon l'au moins une commande.

**18.** Procédé de préparation de commandes selon la revendication 17, **caractérisé en ce que** l'article commandé (2) de la première ligne de commande (6) et l'article commandé (3) de la deuxième ligne de commande (7) sont convoyés vers une station de préparation de commandes (16, 28) puis sont chargés, selon l'au moins une commande, dans ou sur un moyen d'aide au chargement cible (4, 4') qui y est mis à disposition.

**19.** Procédé de préparation de commandes selon la revendication 17 ou 18, **caractérisé en ce que**

a) le sac suspendu (13) avec l'article commandé (3) de la deuxième ligne de commande (7) est convoyé vers une station de préparation de commandes (16, 28), le premier moyen d'aide au chargement (11, 11a.. 11c) avec l'article commandé (2) de la première ligne de commande (6) est convoyé vers une station de transfert (25), l'article commandé (2) de la première ligne de commande (6) est ensuite chargé dans un sac suspendu (13) des sacs suspendus, qui y est mis à disposition, le deuxième sac suspendu (13) des sacs suspendus, avec l'article commandé (2) de la première ligne de commande (6) est convoyé vers la station de préparation de commande (16, 28) mentionnée puis l'article commandé (2) de la première ligne de commande (6) et l'article commandé (3) de la deuxième ligne de commande (7) sont chargés dans ou sur un moyen d'aide au chargement cible (4, 4') qui y est mis à disposition ou

b) le premier moyen d'aide au chargement (11, 11a.. 11c) avec l'article commandé (2) de la première ligne de commande (6) est convoyé vers une station de préparation de commandes (16, 28), le sac suspendu (13) avec l'article commandé (3) de la deuxième ligne de commande (7) est convoyé vers une station de transfert (25), l'article commandé (3) de la deuxième ligne de commande (7) est ensuite chargé dans ou sur un deuxième moyen d'aide au chargement (11, 11a.. 11c) des premiers moyens d'aide au chargement, qui y est mis à disposition, le deuxième moyen d'aide au chargement (11, 11a.. 11c) des premiers moyens d'aide au chargement avec l'article commandé (3) de la deuxième ligne de commande (7) est convoyé vers la station de préparation de commandes (16, 28) mentionnée puis l'article commandé (2) de la première ligne de commande et l'article commandé (3) de la deuxième ligne de commande (7) sont chargés dans ou sur un moyen d'aide au chargement cible (4, 4') qui y est mis à disposition.

20. Procédé de préparation de commandes selon la revendication 17 ou 18, **caractérisé en ce que**

   i) le premier moyen d'aide au chargement (11, 11a.. 11c) avec l'article commandé (2) de la première ligne de commande (6) est convoyé vers une première station de préparation de commandes (16), l'article commandé (2) de la première ligne de commande (6) est ensuite chargé dans ou sur un moyen d'aide au chargement cible (4, 4') qui y est mis à disposition, le moyen d'aide au chargement cible (4, 4') avec l'article commandé (2) de la première ligne de commande (6) et le sac suspendu (13) avec l'article commandé (3) de la deuxième ligne de commande (7) sont convoyés vers une deuxième station de préparation de commandes (28) puis l'article commandé (3) de la deuxième ligne de commande (7) est chargé dans ou sur le moyen d'aide au chargement cible (4, 4') mentionné ou

   ii) le sac suspendu (13) avec l'article commandé (3) de la deuxième ligne de commande (7) est convoyé vers une première station de préparation de commandes (16), l'article commandé (3) de la deuxième ligne de commande (7) est ensuite chargé dans ou sur un moyen d'aide au chargement cible (4, 4') qui y est mis à disposition, le moyen d'aide au chargement cible (4, 4') avec l'article commandé (3) de la deuxième ligne de commande (7) et le premier moyen d'aide au chargement (11, 11a.. 11c) avec l'article commandé (2) de la première ligne de commande (6) sont convoyés vers une deuxième station de préparation de commandes (28) puis l'article commandé (2) de la première ligne de commande (6) est chargé dans ou sur le moyen d'aide au chargement cible (4, 4') mentionné.

21. Procédé de préparation de commandes selon l'une des revendications 17 à 20, **caractérisé en ce que** le moyen d'aide au chargement cible (4, 4')

   - fonctionne comme un moyen d'aide à l'expédition et l'article commandé (2) de la première ligne de commande (6) et/ou l'article commandé (3) de la deuxième ligne de commande (7) sont chargés directement dans ou sur le moyen d'aide à l'expédition ou
   - fonctionne comme un moyen d'aide à l'entreposage et l'article commandé (2) de la première ligne de commande (6) et/ou l'article commandé (3) de la deuxième ligne de commande (7) sont chargés dans ou sur le moyen d'aide à l'entreposage puis sont transférés dans ou sur un moyen d'aide à l'expédition.

22. Procédé de préparation de commandes selon l'une des revendications 17 à 21, **caractérisé en ce que**

   A) un premier moyen d'aide au chargement (11, 11a.. 11c) avec un article (53a.. 53d) est déplacé hors de la première zone d'emmagasinage (10) et convoyé vers une station de transfert d'emmagasinage (30) puis l'article (53a.. 53d) est chargé dans un sac suspendu (13) qui y est mis à disposition et le sac suspendu (13) est convoyé dans la deuxième zone d'emmagasinage (12) et y est stocké ou

   B) un sac suspendu (13) avec un article est déplacé hors de la deuxième zone d'emmagasinage (12) et convoyé vers une station de transfert d'emmagasinage (30) puis l'article est chargé dans ou sur un premier moyen d'aide au chargement (11, 11a.. 11c) qui y est mis à disposition et le premier moyen d'aide au chargement (11, 11a.. 11c) est convoyé dans la première zone d'emmagasinage (10) et y est stocké.

**Fig. 1**

Fig. 2

**Fig. 3**

Fig. 4

Fig. 5

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013101659 A1
- DE 102014115579 A1
- DE 202017106993 U1
- DE 202017100206 U1
- AT 503202018 A
- WO 2016033628 A1